(19) Europäisches Patentamt / European Patent Office / Office européen des brevets

(11) **EP 4 590 052 A1**

(12) **EUROPEAN PATENT APPLICATION**
published in accordance with Art. 153(4) EPC

(43) Date of publication:
**23.07.2025  Bulletin 2025/30**

(21) Application number: **23870877.0**

(22) Date of filing: **26.09.2023**

(51) International Patent Classification (IPC):
**H04W 72/20** (2023.01)

(52) Cooperative Patent Classification (CPC):
**H04W 72/20; H04W 72/54**

(86) International application number:
**PCT/CN2023/121803**

(87) International publication number:
**WO 2024/067650 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **01.10.2022  CN 202211217173**

(71) Applicant: **Huawei Technologies Co., Ltd.
Shenzhen, Guangdong 518129 (CN)**

(72) Inventors:
- **ZHANG, Tianhong
  Shenzhen, Guangdong 518129 (CN)**
- **YANG, Fan
  Shenzhen, Guangdong 518129 (CN)**
- **LI, Junyao
  Shenzhen, Guangdong 518129 (CN)**
- **HUANG, Haining
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD, APPARATUS AND SYSTEM**

(57)    This application provides a communication method, apparatus, and system, and is applied to the field of communication technologies. The communication method provided in this application includes: A first terminal apparatus receives first sidelink control information from a second terminal apparatus, where the first sidelink control information indicates a second resource. The first terminal apparatus excludes or selects the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus. This application provides a solution of how to select a resource in a COT sharing scenario.

FIG. 32

## Description

This application claims priority to Chinese Patent Application No. 202211217173.X, filed with the China National Intellectual Property Administration on October 1, 2022 and entitled "COMMUNICATION METHOD, APPARATUS, AND SYSTEM", which is incorporated herein by reference in its entirety.

## TECHNICAL FIELD

This application relates to the field of communication technologies, and in particular, to a communication method, apparatus, and system.

## BACKGROUND

In a wireless communication system, frequency bands can be classified into a licensed spectrum (licensed spectrum) and an unlicensed spectrum (unlicensed spectrum) based on different used spectrum. In an unlicensed spectrum, a terminal apparatus needs to access a channel in a listen before talk (listen before talk, LBT) manner Specifically, before accessing a channel and starting to send data, the terminal apparatus needs to listen to whether the channel is idle (idle). If the channel has been idle for a certain time, the terminal apparatus may occupy the channel, and transmit the data through the channel within a channel occupancy time (channel occupancy time, COT). If the channel is not idle, the terminal apparatus can occupy the channel only after the channel restores to be idle. The COT is a period of continuous time in time domain. Currently, a concept of a shared COT is further proposed. After a terminal apparatus accesses a channel, a COT of the terminal apparatus may be shared with one or more other terminal apparatuses.

In the wireless communication system, terminal apparatuses may communicate with each other through a PC5 interface. A transmission link in the PC5 interface is defined as a sidelink (sidelink, SL). The communication between the terminal apparatuses through the PC5 interface may also be referred to as SL communication. Currently, a 5th generation mobile communication technology (5th generation mobile communication technology, 5G) system defines two resource allocation modes in SL communication: mode 1 (mode 1) and mode 2 (mode 2). In the mode 2, a terminal apparatus may select a time-frequency resource in a resource selection window for communication.

However, there is no solution of how a terminal apparatus in an SL system selects a resource in a scenario in which a COT can be shared.

## SUMMARY

Embodiments of this application provide a communication method, apparatus, and system, to resolve a problem of how to select a resource in a scenario in which a COT can be shared.

To achieve the foregoing objective, the following technical solutions are used in embodiments of this application.

According to a first aspect, a communication method is provided. The method may be performed by a first terminal apparatus, or may be performed by a component (for example, a processor, a chip, or a chip system) of the first terminal apparatus, or may be implemented by a logical module or software that can implement a part or all of functions of the first terminal apparatus. The method includes: The first terminal apparatus receives first sidelink control information from a second terminal apparatus, where the first sidelink control information indicates a second resource. The first terminal apparatus excludes or selects the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus.

Based on the communication method provided in this embodiment of this application, the first terminal apparatus determines the second resource indicated by the sidelink control information of the second terminal apparatus, and the first terminal apparatus may determine, based on the first condition, whether to exclude or select the second resource. Further, the first terminal apparatus may select the second resource as the available resource for transmitting the sidelink information of the second terminal apparatus (the first terminal apparatus shares the second resource in a COT with the second terminal apparatus), or select the resource in the slot in which the second resource is located as the available resource for transmitting the sidelink information of the first terminal apparatus. In other words, the first terminal apparatus may select, based on the second resource, a resource that can be used to share the COT or a resource that can be used to transmit the sidelink information, thereby resolving a problem of how to select a resource in a COT sharing scenario.

With reference to the first aspect, in a possible design, the first terminal apparatus selects the second resource based on the first condition, and the first condition includes at least one of the following: a channel access type of the second terminal apparatus is a first type, and the first type is type 1 or type 2; the second terminal apparatus is a receiving apparatus of the first terminal apparatus; the first terminal apparatus is a receiving apparatus of the second terminal apparatus; a channel access priority class CAPC value of the second terminal apparatus is less than a CAPC value of the first terminal apparatus; a CAPC value of the second terminal apparatus is less than a first CAPC threshold; a quantity of resource block RB sets corresponding to the second resource is less than or equal to a quantity of first RB sets, where the quantity of first RB sets is a quantity of RB sets of a resource selected by the first terminal apparatus; a frequency domain resource of the second resource belongs to frequency domain resources of resources in M consecutive slots; a reference signal received power RSRP measurement value of the second resource is less than or equal to a first RSRP threshold; a reference signal received power RSRP measurement value of the second resource is greater than or equal to a first RSRP threshold; a service priority value of the second terminal apparatus is less than a service priority value of the first terminal apparatus; a service priority value of the second terminal apparatus is less than a first service priority threshold; a cyclic prefix extension CPE length of the second terminal apparatus is greater than or equal to a CPE length of the first terminal apparatus; a CPE length of the second terminal apparatus is greater than or equal to a first CPE threshold; a backoff value of the second terminal apparatus is less than or equal to a backoff value of the first terminal apparatus, where the backoff value is used for channel access; a backoff value of the second terminal apparatus is less than or equal to a first backoff threshold, where the backoff value is used for channel access; a value of a contention window of the second terminal apparatus is less than or equal to a value of a contention window of the first terminal apparatus, where the contention window is used for channel access; a value of a contention window of the second terminal apparatus is less than or equal to a first contention window threshold, where the contention window is used for channel access; or no reserved resource of another terminal apparatus exists in an RB set in which the second resource is located.

Based on the communication method provided in this embodiment of this application, the first terminal apparatus may determine, based on the first condition, whether to select the second resource or exclude the second resource. Optionally, the first terminal apparatus may determine, based on the first condition, whether a service of the second terminal apparatus is important (for example, the service priority value), and if yes, the first terminal apparatus selects the second resource. Optionally, the first terminal apparatus may determine, based on the first condition, whether the second terminal apparatus is easy to access a channel (for example, the CPE value, the CAPC value, the backoff value, or the value of the contention window), and if yes, the first terminal apparatus selects the second resource. For another example, for the RSRP measurement value in the first condition, if the first terminal apparatus is a receiving terminal apparatus of the second terminal apparatus, and the RSRP measurement value of the second resource is small, another terminal apparatus may successfully perform LBT and perform transmission on the second resource. Therefore, the first terminal apparatus shares the second resource with the second terminal apparatus whose RSRP measurement value is small, to prevent the another terminal apparatus from successfully performing LBT, and ensure that the second terminal apparatus can transmit the sidelink information to the first terminal apparatus on the second resource. Alternatively, if the RSRP measurement value of the second resource is large, a terminal apparatus (for example, the first terminal apparatus) for receiving the sidelink information may have better decoding performance, and the first terminal apparatus may select the second resource. It can be learned that the first terminal apparatus selects the second resource based on the first condition, so that a channel access success rate can be improved, thereby improving overall performance of a communication system.

With reference to the first aspect, in a possible design, the first terminal apparatus excludes the second resource based on the first condition, and the first condition includes at least one of the following: a channel access type of the second terminal apparatus is a first type, and the first type is type 1 or type 2; the second terminal apparatus is not a receiving apparatus of the first terminal apparatus; the first terminal apparatus is not a receiving apparatus of the second terminal apparatus; a CAPC value of the second terminal apparatus is greater than a CAPC value of the first terminal apparatus; a CAPC value of the second terminal apparatus is greater than a first CAPC threshold; a quantity of resource block RB sets corresponding to the second resource is greater than or equal to a quantity of first RB sets, where the quantity of first RB sets is a quantity of RB sets of a resource selected by the first terminal apparatus; a frequency domain resource of the second resource does not belong to frequency domain resources of resources in M consecutive slots; a reference signal received power RSRP measurement value of the second resource is greater than or equal to a first RSRP threshold; a reference signal received power RSRP measurement value of the second resource is less than or equal to a first RSRP threshold; a service priority value of the second terminal apparatus is greater than a service priority value of the first terminal apparatus; a service priority value of the second terminal apparatus is greater than a first service priority threshold; a cyclic prefix extension CPE length of the second terminal apparatus is less than or equal to a CPE length of the first terminal apparatus; a CPE length of the second terminal apparatus is less than or equal to a first CPE threshold; a backoff value of the second terminal apparatus is greater than or equal to a backoff value of the first terminal apparatus, where the backoff value is used for channel access; a backoff value of the second terminal apparatus is greater than or equal to a first backoff threshold, where the backoff value is used for channel access; a value of a contention window of the second terminal apparatus is greater than or equal to a value of a contention window of the first terminal apparatus, where the contention window is used for channel access; or a value of a contention window of the second terminal apparatus is greater than or equal to a first contention window threshold, where the contention window is used for channel access.

Based on the communication method provided in this embodiment of this application, the first terminal apparatus may determine, based on the first condition, whether to exclude the second resource. Optionally, the first terminal apparatus may determine, based on the first condition, whether a service of the second terminal apparatus is important (for example, a service priority value), and if yes, the first terminal apparatus excludes a resource that overlaps the seccond resource, and transmission of the second terminal apparatus is not affected. Optionally, the first terminal apparatus may determine, based on the first condition, whether the second terminal apparatus is easy to access a channel (for example, the CPE value, the CAPC value, the backoff value, or the value of the contention window), and if yes, the first terminal apparatus is difficult to access the channel on the second resource or in a slot in which the second resource is located. Therefore, the first terminal apparatus does not need to select a resource that overlaps the second resource, and may exclude the second resource. It can be learned that the first terminal apparatus excludes the second resource based on the first condition, so that a channel access success rate can be improved, thereby improving overall performance of a communication system.

With reference to the first aspect, in a possible design, the method further includes: The first terminal apparatus receives second sidelink control information from a third terminal apparatus, where the second sidelink control information indicates a third resource. The first terminal apparatus selects a second resource based on a first condition, where the first condition includes at least one of the following: an RSRP measurement value of the second resource is less than or equal to an RSRP measurement value of the third resource; an RSRP measurement value of the second resource is greater than or equal to an RSRP measurement value of the third resource; a service priority value of the second terminal apparatus is less than a service priority value of the third terminal apparatus; a CAPC value of the second terminal apparatus is less than a CAPC value of the third terminal apparatus; a CPE length of the second terminal apparatus is greater than or equal to a CPE length of the third terminal apparatus; a backoff value of the second terminal apparatus is less than or equal to a backoff value of the third terminal apparatus, where the backoff value is used for channel access; a value of a contention window of the second terminal apparatus is less than or equal to a value of a contention window of the third terminal apparatus, where the contention window is used for channel access; or the second resource is a resource in resources in M consecutive slots, where the resources in the M consecutive slots include a resource for transmitting the sidelink information of the first terminal apparatus.

Optionally, that the first terminal apparatus selects a second resource based on a first condition may be further understood as that the first terminal apparatus selects the second resource and excludes the third resource based on the first condition, or may be further understood as that the first terminal apparatus excludes the third resource based on the first condition. Based on the communication method provided in this embodiment of this application, the first terminal apparatus may compare, based on the first condition, importance degrees of services of the second terminal apparatus and the third terminal apparatus, or compare, based on the first condition, which terminal apparatus is easier to access a channel between the second terminal apparatus and the third terminal apparatus, so as to determine whether to exclude the third resource and enable the third terminal apparatus to perform transmission, or not to exclude a resource that overlaps the second resource and enable the second terminal apparatus to perform transmission.

With reference to the first aspect, in a possible design, the method further includes: The first terminal apparatus receives second sidelink control information from a third terminal apparatus, where the second sidelink control information indicates a third resource. The first terminal apparatus excludes a second resource based on a first condition, where the first condition includes at least one of the following: an RSRP measurement value of the second resource is greater than or equal to an RSRP measurement value of the third resource; a service priority value of the second terminal apparatus is greater than a service priority value of the third terminal apparatus; a CAPC value of the second terminal apparatus is greater than a CAPC value of the third terminal apparatus; a CPE length of the second terminal apparatus is less than or equal to a CPE length of the third terminal apparatus; a backoff value of the second terminal apparatus is greater than or equal to a backoff value of the third terminal apparatus, where the backoff value is used for channel access; a value of a contention window of the second terminal apparatus is greater than or equal to a value of a contention window of the third terminal apparatus, where the contention window is used for channel access; or the second resource is not a resource in resources in M consecutive slots, where the resources in the M consecutive slots include a resource for transmitting the sidelink information of the first terminal apparatus.

Based on the communication method provided in this embodiment of this application, the first terminal apparatus may compare, based on the first condition, importance degrees of services of the second terminal apparatus and the third terminal apparatus, or compare, based on the first condition, which terminal apparatus is easier to access a channel between the second terminal apparatus and the third terminal apparatus, so as to determine whether to exclude the third resource and enable the third terminal apparatus to perform transmission, or not to exclude a resource that overlaps the second resource and enable the second terminal apparatus to perform transmission, or to exclude a resource that overlaps the second resource and not to enable the second terminal apparatus to perform transmission.

With reference to the first aspect, in a possible design, the second resource is not a resource in the resources in the M consecutive slots, and the resources in the M consecutive slots include a resource for transmitting the sidelink information of the first terminal apparatus; or the second resource is a resource in the resources in the M consecutive slots, and the resources in the M consecutive slots include a resource for transmitting the sidelink information of the first terminal apparatus; or

the second resource is a resource in the resources in the M consecutive slots, and the resources in the M consecutive slots include a resource for transmitting the sidelink information of the first terminal apparatus and a resource for transmitting the sidelink information of the second terminal apparatus, where M is a positive integer.

The M consecutive slots may also be understood as a first COT (a COT of the first terminal apparatus). In other words, "M consecutive slots" and "first COT" may be equivalently replaced. The first COT is an initial COT of the first terminal apparatus, or the first COT is a COT reserved by the first terminal apparatus, or the first COT is a COT to be initialized by the first terminal apparatus. The first COT may also be referred to as a COT for short.

"The second resource is a resource in the resources in the M consecutive slots" may also be understood as "the second resource is a resource in available resources in the M consecutive slots".

"The second resource is not a resource in the resources in the M consecutive slots" may also be understood as "the second resource is not a resource in available resources in the M consecutive slots".

Based on the communication method provided in this embodiment of this application, the second resource may be in the resources in the M consecutive slot. In other words, the second resource may be in the first COT, and the second terminal apparatus may share the first COT of the first terminal apparatus. Alternatively, the second resource may not be in the first COT, and the second terminal apparatus does not share the first COT with the second resource.

With reference to the first aspect, in a possible design, that the first terminal apparatus selects the second resource includes: The first terminal apparatus shares the second resource in the resources in the M consecutive slots with the second terminal apparatus; or the first terminal apparatus skips sharing the second resource in the resources in the M consecutive slots with the second terminal apparatus, and the first terminal apparatus transmits the sidelink information of the first terminal apparatus on a first resource, where the first resource overlaps the second resource.

"Skipping sharing the second resource in the resources in the M consecutive slots with the second terminal apparatus" may also be understood as "skipping sharing the first COT with the second terminal apparatus", or may also be understood as "skipping sharing the second resources with the second terminal apparatus". That is, "skipping sharing the second resource in the resources in the M consecutive slots with the second terminal apparatus", "skipping sharing the first COT with the second terminal apparatus", and "skipping sharing the second resource with the second terminal apparatus" may be interchangeably used.

" Sharing the second resource in M consecutive slots with the second terminal apparatus" may also be understood as "sharing the first COT with the second terminal apparatus", or may be understood as "sharing the second resource with the second terminal apparatus". That is, "sharing the second resource in the resources in the M consecutive slots with the second terminal apparatus", "sharing the first COT with the second terminal apparatus", and "sharing the second resource with the second terminal apparatus" may be interchangeably used.

Optionally, the overlapping includes full overlapping and/or partial overlapping. Optionally, the overlapping includes time domain overlapping and/or time-frequency overlapping.

Optionally, that the first terminal apparatus shares the second resource in the resources in the M consecutive slots with the second terminal apparatus includes: The first terminal apparatus further shares a sixth resource with the second terminal apparatus, where a time domain resource of the sixth resource is the same as that of the second resource, and a frequency domain resource of the sixth resource may be at least one of the following resources:

a resource that does not overlap the second resource in frequency domain in an RB set in which the resources in the M consecutive slots are located;

a resource that does not overlap the RB set in which the second resource is located in frequency domain in an RB set in which the resources in the M consecutive slots are located;

a resource of a second subchannel in an RB set in which the resources in the M consecutive slots are located, where the second subchannel is a subchannel on which the second resource is located;

resources of all subchannels in an RB set in which the resources in the M consecutive slots are located; or

a resource of at least one subchannel in an RB set in which the resources in the M consecutive slots are located.

Based on the communication method provided in this embodiment of this application, the first terminal apparatus may share the first COT with the second terminal apparatus for use, or the first terminal apparatus may not share the first COT with the second terminal apparatus for use.

If the first terminal apparatus is a terminal for receiving the sidelink information of the second terminal apparatus on the second resource, the first terminal apparatus cannot receive the sidelink information of the second terminal apparatus on the second resource when transmitting the sidelink information of the first terminal apparatus in the slot in which the second resource is located. This causes a half-duplex problem. Therefore, if the first terminal apparatus shares the second resource with the second terminal apparatus, the first terminal apparatus cannot select the resource in the slot in which the second resource is located. When a quantity L1 of RB sets corresponding to the first COT is greater than the quantity L2 of RB sets corresponding to the second resource, if no other terminal apparatus performs transmission on a resource (that is, the sixth resource) that does not overlap the RB set in which the second resource is located in frequency domain in an RB set in which the first COT is located, the another terminal apparatus may successfully perform LBT on the resource to access a channel, that is, the first terminal apparatus loses the sixth resource in the COT and a subsequent COT. If the second terminal apparatus can perform transmission on the sixth resource, continuity of the first COT is ensured.

With reference to the first aspect, in a possible design, that the first terminal apparatus excludes the second resource includes: The first terminal apparatus skips sharing the second resource with the second terminal; or the first terminal apparatus skips transmitting the sidelink information of the first terminal apparatus on the first resource, where the first resource overlaps the second resource.

Based on the communication method provided in this embodiment of this application, the first terminal apparatus may not share the second resource with the second terminal apparatus. In other words, the first terminal apparatus may completely occupy the COT to transmit the sidelink information of the first terminal apparatus.

With reference to the first aspect, in a possible design, the excluding the second resource includes: excluding the second resource; and/or excluding a resource in the RB set in which the second resource is located; and/or excluding a resource whose frequency domain location is the same as a frequency domain location of the second resource and whose time domain location is in first duration before the second resource; and/or excluding a resource whose frequency domain location is the same as a frequency domain location of the second resource and whose time domain location is in second duration after the second resource; and/or excluding a resource whose time domain location is in first duration before the second resource in the RB set in which the second resource is located; and/or excluding a resource whose time domain location is in second duration after the second resource in the RB set in which the second resource is located.

Based on the communication method provided in this embodiment of this application, a plurality of specific implementations of excluding the second resource are provided. For example, a frequency domain unit of the COT of the first terminal apparatus is an RB set. Regardless of whether transmission of the second terminal apparatus occupies all subchannels in the RB set, the entire RB set is an unavailable resource for the first terminal apparatus. If the first terminal apparatus performs transmission on a subchannel other than the third resource in the RB set in which the second terminal apparatus is located, transmission of the first terminal apparatus and transmission of the second terminal apparatus interfere with each other. In addition, in a slot in which the third resource is located or a previous slot, if the first terminal apparatus accesses the channel earlier than the second terminal apparatus, LBT of the second terminal apparatus fails, and the second terminal apparatus cannot perform transmission on the third resource. Therefore, a direct method is to enable the first terminal apparatus to directly exclude a resource based on a granularity of an RB set, to ensure normal transmission of the second terminal apparatus. For another example, if the first terminal apparatus starts transmission in the first duration before the second resource, continuous transmission of the first terminal apparatus occupies a channel. As a result, the second terminal apparatus cannot successfully perform LBT before the second resource, and the second terminal apparatus cannot perform transmission on the second resource. Therefore, a direct method is to enable the first terminal apparatus to exclude a resource in the first duration before the second resource, so as to avoid interfering with a channel access process of the second terminal apparatus. Similarly, if the second terminal apparatus performs transmission on the second resource, even if the first terminal apparatus selects a resource in the second time after the second resource, transmission of the second terminal apparatus on the second resource occupies a channel. As a result, the first terminal apparatus cannot perform LBT successfully before the selected resource, and the first terminal apparatus cannot perform transmission on the selected resource. Therefore, a direct method is to enable the first terminal apparatus to exclude a resource in the second time after the second resource, so as to avoid interfering with a channel access process of the first terminal apparatus.

With reference to the first aspect, in a possible design, the selecting the second resource includes: selecting the second resource; and/or selecting a resource in the RB set in which the second resource is located; and/or selecting a resource whose frequency domain location is the same as a frequency domain location of the second resource and whose time domain location is in third duration before the second resource; and/or selecting a resource whose frequency domain location is the same as a frequency domain location of the second resource and whose time domain location is in fourth duration after the second resource; and/or selecting a resource whose time domain location is in third duration before the second resource in the RB set in which the second resource is located; and/or selecting a resource whose time domain location is in fourth duration after the second resource in the RB set in which the second resource is located.

"Selecting a resource" includes "selecting a resource to transmit the sidelink information of the first terminal apparatus".

Based on the communication method provided in this embodiment of this application, the first terminal apparatus shares the COT with the second terminal apparatus (the second terminal apparatus can perform transmission in the COT of the first terminal apparatus), so that the first terminal apparatus can select a resource on a channel other than the second resource in the RB set in which the second resource of the second terminal apparatus is located. In addition, the first terminal apparatus may alternatively select a resource in the third duration before the second resource and/or a resource in the fourth duration after the second resource. This is because a channel access method corresponding to COT sharing is Type2 channel access. Because a time interval of Type2 channel access is very short (for example, 25 $\mu$s or 16 $\mu$s), even if the first terminal apparatus and the second terminal apparatus are selected in adjacent slots, Type2 channel access can be performed in time. Therefore, the first terminal apparatus and the second terminal apparatus do not interfere with each other in transmission, thereby improving data transmission efficiency.

With reference to the first aspect, in a possible design, the selecting a resource in the RB set in which the second resource is located includes: when the first terminal apparatus is not a receiving apparatus of the second terminal apparatus, selecting, by the first terminal apparatus, the resource in the RB set in which the second resource is located; and/or when the first terminal apparatus is not a receiving apparatus of the second terminal apparatus, selecting, by the first terminal apparatus, the resource in the slot in which the second resource is located; and the excluding a resource in the RB set in which the second resource is located includes: when the first terminal apparatus is a receiving apparatus of the second terminal apparatus, excluding, by the first terminal apparatus, the resource in the RB set in which the second resource is located.

If a receiving terminal apparatus of transmission performed by the second terminal apparatus in the initial COT of the first terminal apparatus is the first terminal apparatus, a half-duplex problem of performing both sending and receiving by the first terminal apparatus in a same slot is caused. To avoid a half-duplex problem, in this solution, the receiving terminal apparatus of the transmission performed by the second terminal apparatus in the initial COT of the first terminal apparatus may not be the first terminal apparatus, or a second terminal apparatus as a sending apparatus may be excluded.

With reference to the first aspect, in a possible design, the selecting or excluding a resource in the RB set in which the second resource is located includes: when the first terminal apparatus is a receiving apparatus of the second terminal apparatus, selecting, by the first terminal apparatus, the first resource, and when the first resource overlaps the second resource, skipping, by the first terminal apparatus, sharing the second resource with the second terminal apparatus; when the first terminal apparatus is a receiving apparatus of the second terminal apparatus, sharing, by the first terminal apparatus, the second resource with the second terminal apparatus, and excluding, by the first terminal apparatus, a resource that overlaps the second resource in time domain; when the first terminal apparatus is not a receiving apparatus of the second terminal apparatus, skipping, by the first terminal apparatus, sharing the second resource with the second terminal apparatus; when the first terminal apparatus is not a receiving apparatus of the second terminal apparatus, sharing, by the first terminal apparatus, the second resource with the second terminal apparatus, and selecting, by the first terminal apparatus, a resource that overlaps the second resource in time domain; or when the first terminal apparatus is not a receiving apparatus of the second terminal apparatus, sharing, by the first terminal apparatus, the second resource with the second terminal apparatus, and when a quantity of RBs of a resource selected by the first terminal apparatus is greater than the quantity of RBs of the second resource, selecting, by the first terminal apparatus, a resource that does not overlap the RB set in which the second resource is located in the slot in which the second resource is located.

"The first terminal apparatus is a receiving terminal of the second terminal apparatus" may also be understood as "the first terminal apparatus receives the sidelink information of the second terminal apparatus on the second resource". The sidelink information may be, for example, data information (for example, a PSCCH/PSSCH) and/or feedback information (for example, a PSFCH).

"The first terminal apparatus receives the sidelink information of the second terminal apparatus on the second resource" may also be understood as "the first terminal apparatus is to receive the sidelink information of the second terminal apparatus on the second resource".

This solution provides several possible implementations of selecting or excluding a resource in the RB set in which the second resource is located.

With reference to the first aspect, in a possible design, the method further includes: The first terminal apparatus sends first indication information to the second terminal apparatus, where the first indication information indicates that the second terminal apparatus transmits the sidelink information of the second terminal apparatus on the second resource, and the second resource is a resource in the resources in the M consecutive slots. Based on this solution, the first terminal apparatus may send a COT sharing indication to the second terminal apparatus.

That the first indication information indicates that the second terminal apparatus transmits the sidelink information of the second terminal apparatus on the second resource may also be understood as follows: The first indication information indicates that the second terminal apparatus shares the first COT, or the first indication information indicates that the second terminal apparatus shares the second resource in the first COT, or the first indication information indicates that the second terminal apparatus is allowed to share the first COT, or the first indication information indicates that the second terminal apparatus is allowed to share the second resource in the first COT.

With reference to the first aspect, in a possible design, the M consecutive slots include a first slot and/or a second slot, the first slot includes the resource for transmitting the sidelink information of the first terminal apparatus, the second slot includes the resource for transmitting the sidelink information of the second terminal apparatus, the first F slots of the M consecutive slots are the first slot, and F is a positive integer; and/or the second slot may be at least one of the M consecutive slots other than the 1st slot.

For example, F may be equal to 1.

With reference to the first aspect, in a possible design, the resources in the M consecutive slots are located in K contiguous RB sets, and the resources in the M consecutive slots include the resource for transmitting the sidelink information of the first terminal apparatus, where M is a positive integer, and K is a positive integer.

"K=1 consecutive RB set" may also be understood as "one RB set".

With reference to the first aspect, in a possible design, the method further includes: The first terminal apparatus determines a value of the quantity M of consecutive slots based on a CAPC value of sidelink information, where the resources in the M consecutive slots include the resource for transmitting the sidelink information of the first terminal apparatus, and M is a positive integer.

With reference to the first aspect, in a possible design, a frequency domain granularity of the available resource for transmitting the sidelink information of the second terminal apparatus is a subchannel or an RB set, and/or a frequency domain granularity of the available resource for transmitting the sidelink information of the first terminal apparatus is a subchannel or an RB set.

"A frequency domain granularity is a subchannel" includes "the frequency domain granularity is LSubCH subchannels".

"A frequency domain granularity is an RB set" includes "the frequency domain granularity is LRS subchannels".

With reference to the first aspect, in a possible design, that the first terminal apparatus selects the second resource includes: The first terminal apparatus selects the resources in the M consecutive slots from a union set of a first set and a second set; or the first terminal apparatus selects the resources in the M consecutive slots from an intersection set of a first set and a second set, where the first set includes the available resource for transmitting the sidelink information of the first terminal apparatus, and the second set includes the available resource for transmitting the sidelink information of the second terminal apparatus.

With reference to the first aspect, in a possible design, that the first terminal apparatus selects the second resource includes: The first terminal apparatus selects the second resource according to a first rule or a second rule, where the first rule includes: preferentially selecting resources in Q slots for transmitting the sidelink information of the first terminal apparatus, where the resources in the Q slots belong to the resources in the M consecutive slots, and Q is a positive integer less than or equal to M; and the second rule includes: preferentially selecting resources in P slots for transmitting the sidelink information of the second terminal apparatus, where the resources in the P slots belong to the resources in the M consecutive slots, and P is a positive integer less than or equal to M.

According to a second aspect, a communication method is provided. The method may be performed by a second terminal apparatus, or may be performed by a component (for example, a processor, a chip, or a chip system) of the second terminal apparatus, or may be implemented by a logical module or software that can implement a part or all of functions of the second terminal apparatus. The method includes: The second terminal apparatus sends first sidelink control information, where the first sidelink control information indicates a second resource of the second terminal apparatus; and receives first indication information from a first terminal apparatus, where the first indication information indicates that the second terminal apparatus transmits sidelink information on a second resource.

With reference to the second aspect, in a possible design, the second resource is a resource in resources in M consecutive slots, and the resources in the M consecutive slots include a resource for transmitting sidelink information of the first terminal apparatus and a resource for transmitting sidelink information of the second terminal apparatus.

With reference to the second aspect, in a possible design, the method further includes: The second terminal apparatus transmits the sidelink information on the second resource based on a first condition.

With reference to the second aspect, in a possible design, the first condition includes at least one of the following: a channel access type of the second terminal apparatus is a first type, and the first type is type 1 or type 2; the second terminal apparatus is a receiving apparatus of the first terminal apparatus; the first terminal apparatus is a receiving apparatus of the second terminal apparatus; a channel access priority class CAPC value of the second terminal apparatus is less than a CAPC value of the first terminal apparatus; a CAPC value of the second terminal apparatus is less than a first CAPC threshold; a quantity of resource block RB sets corresponding to the second resource is less than or equal to a quantity of first RB sets, where the quantity of first RB sets is a quantity of RB sets of a resource selected by the first terminal apparatus; a frequency domain resource of the second resource belongs to frequency domain resources of resources in M consecutive slots; a reference signal received power RSRP measurement value of the second resource is less than or equal to a first RSRP threshold; a reference signal received power RSRP measurement value of the second resource is greater than or equal to a first RSRP threshold; a service priority value of the second terminal apparatus is less than a service priority value of the first terminal apparatus; a service priority value of the second terminal apparatus is less than a first service priority threshold; a cyclic prefix extension CPE length of the second terminal apparatus is greater than or equal to a CPE length of the first terminal apparatus; a CPE length of the second terminal apparatus is greater than or equal to a first CPE threshold; a backoff value of the second terminal apparatus is less than or equal to a backoff value of the first terminal apparatus, where the backoff value is used for channel access; a backoff value of the second terminal apparatus is less than or equal to a first backoff threshold, where the backoff value is used for channel access; a value of a contention window of the second terminal apparatus is less than or equal to a value of a contention window of the first terminal apparatus, where the contention window is used for channel access; a value of a contention window of the second terminal apparatus is less than or equal to a first contention window threshold, where the contention window is used for channel access; or no reserved resource of another terminal apparatus exists in an RB set in which the second resource is located.

Optionally, that the second terminal apparatus transmits the sidelink information on the second resource includes:

The second terminal apparatus transmits the sidelink information on the second resource and a sixth resource, where a time domain resource of the sixth resource is the same as that of the second resource, and a frequency domain resource of the sixth resource may be at least one of the following resources:

a resource that does not overlap the second resource in frequency domain in an RB set in which the resources in the M consecutive slots are located;
a resource that does not overlap the RB set in which the second resource is located in frequency domain in an RB set in which the resources in the M consecutive slots are located;
a resource of a second subchannel in an RB set in which the resources in the M consecutive slots are located, where the second subchannel is a subchannel on which the second resource is located;
resources of all subchannels in an RB set in which the resources in the M consecutive slots are located; or
a resource of at least one subchannel in an RB set in which the resources in the M consecutive slots are located.

With reference to the second aspect, in a possible design, the method further includes: The second terminal apparatus performs type 2 listen-before-talk LBT channel access, and transmits the sidelink information on the second resource.

With reference to the second aspect, in a possible design, a first COT of the first terminal apparatus starts from a resource in the 1st slot in the resources in the M consecutive slots.

With reference to the second aspect, in a possible design, the first sidelink control information further indicates at least one of the following information of the second terminal apparatus: a priority value, a CAPC value, a channel access type, a backoff value, and a value of a contention window.

"At least one of the following information of the second terminal apparatus" may also be understood as "at least one of the following information of the sidelink information of the second terminal apparatus".

According to a third aspect, a communication method is provided. The method may be performed by a network apparatus, or may be performed by a component (for example, a processor, a chip, or a chip system) of the network apparatus, or may be implemented by a logical module or software that can implement a part or all of functions of the network apparatus. The method includes: The network apparatus sends second indication information to a first terminal apparatus, where the second indication information includes information used to determine whether a second resource can share a first COT of the first terminal apparatus, and the second resource is a resource indicated by sidelink control information of a second terminal apparatus; or the network apparatus sends the second indication information to the second terminal apparatus.

With reference to the third aspect, in a possible design, the network apparatus sends second indication information to the first terminal apparatus, where the second indication information includes at least one of the following information of the first terminal apparatus: a CAPC value, a backoff value, and a value of a contention window.

With reference to the third aspect, in a possible design, the network apparatus sends second indication information to the second terminal apparatus, where the second indication information includes at least one of the following information of the second terminal apparatus: a CAPC value, a backoff value, and a value of a contention window.

With reference to the third aspect, in a possible design, the second indication information further includes at least one of the following information: a first priority threshold, a first CAPC threshold, a first backoff threshold, a first contention window threshold, a first RSRP threshold, or a first CPE threshold.

With reference to the third aspect, in a possible design, the method further includes: The network apparatus sends, to the first terminal apparatus, indication information indicating a value of M or a value range of M.

According to a fourth aspect, a communication apparatus is provided, configured to implement the foregoing methods. The communication apparatus may be the first terminal apparatus in the first aspect, or an apparatus including the first terminal apparatus, or an apparatus included in the first terminal apparatus, such as a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the communication apparatus includes an interface module and a processing module. The interface module is configured to receive first sidelink control information from a second terminal apparatus, where the first sidelink control information indicates a second resource. The processing module is configured to exclude or select the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus.

With reference to the fourth aspect, in a possible design, the processing module is configured to select the second resource based on the first condition, where the first condition includes at least one of the following: a channel access type of the second terminal apparatus is a first type, and the first type is type 1 or type 2; the second terminal apparatus is a receiving apparatus of the first terminal apparatus; the first terminal apparatus is a receiving apparatus of the second terminal apparatus; a channel access priority class CAPC value of the second terminal apparatus is less than a CAPC value of the first terminal apparatus; a CAPC value of the second terminal apparatus is less than a first CAPC threshold; a quantity of resource block RB sets corresponding to the second resource is less than or equal to a quantity of first RB sets, where the quantity of first RB sets is a quantity of RB sets of a resource selected by the first terminal apparatus; a frequency domain resource of the second resource belongs to frequency domain resources of resources in M consecutive slots; a reference signal received power RSRP measurement value of the second resource is less than or equal to a first RSRP threshold; a reference signal received power RSRP measurement value of the second resource is greater than or equal to a first RSRP threshold; a service priority value of the second terminal apparatus is less than a service priority value of the first terminal apparatus; a service priority value of the second terminal apparatus is less than a first service priority threshold; a cyclic prefix extension CPE length of the second terminal apparatus is greater than or equal to a CPE length of the first terminal apparatus; a CPE length of the second terminal apparatus is greater than or equal to a first CPE threshold; a backoff value of the second terminal apparatus is less than or equal to a backoff value of the first terminal apparatus, where the backoff value is used for channel access; a backoff value of the second terminal apparatus is less than or equal to a first backoff threshold, where the backoff value is used for channel access; a value of a contention window of the second terminal apparatus is less than or equal to a value of a contention window of the first terminal apparatus, where the contention window is used for channel access; a value of a contention window of the second terminal apparatus is less than or equal to a first contention window threshold, where the contention window is used for channel access; or no reserved resource of another terminal apparatus exists in an RB set in which the second resource is located.

With reference to the fourth aspect, in a possible design, the processing module is configured to exclude the second resource based on the first condition, where the first condition includes at least one of the following: a channel access type of the second terminal apparatus is a first type, and the first type is type 1 or type 2; the second terminal apparatus is not a receiving apparatus of the first terminal apparatus; the first terminal apparatus is not a receiving apparatus of the second terminal apparatus; a CAPC value of the second terminal apparatus is greater than a CAPC value of the first terminal apparatus; a CAPC value of the second terminal apparatus is greater than a first CAPC threshold; a quantity of resource block RB sets corresponding to the second resource is greater than or equal to a quantity of first RB sets, where the quantity of first RB sets is a quantity of RB sets of a resource selected by the first terminal apparatus; a frequency domain resource of the second resource does not belong to frequency domain resources of resources in M consecutive slots; a reference signal received power RSRP measurement value of the second resource is greater than or equal to a first RSRP threshold; a reference signal received power RSRP measurement value of the second resource is less than or equal to a first RSRP threshold; a service priority value of the second terminal apparatus is greater than a service priority value of the first terminal apparatus; a service priority value of the second terminal apparatus is greater than a first service priority threshold; a cyclic prefix extension CPE length of the second terminal apparatus is less than or equal to a CPE length of the first terminal apparatus; a CPE length of the second terminal apparatus is less than or equal to a first CPE threshold; a backoff value of the second terminal apparatus is greater than or equal to a backoff value of the first terminal apparatus, where the backoff value is used for channel access; a backoff value of the second terminal apparatus is greater than or equal to a first backoff threshold, where the backoff value is used for channel access; a value of a contention window of the second terminal apparatus is greater than or equal to a value of a contention window of the first terminal apparatus, where the contention window is used for channel access; or a value of a contention window of the second terminal apparatus is greater than or equal to a first contention window threshold, where the contention window is used for channel access.

With reference to the fourth aspect, in a possible design, the interface module is further configured to receive second sidelink control information from a third terminal apparatus, where the second sidelink control information indicates a third resource. The processing module is configured to select a second resource based on a first condition, where the first condition includes at least one of the following: an RSRP measurement value of the second resource is less than or equal to an RSRP measurement value of the third resource; an RSRP measurement value of the second resource is greater than or equal to an RSRP measurement value of the third resource; a service priority value of the second terminal apparatus is less than a service priority value of the third terminal apparatus; a CAPC value of the second terminal apparatus is less than a CAPC value of the third terminal apparatus; a CPE length of the second terminal apparatus is greater than or equal to a CPE length of the third terminal apparatus; a backoff value of the second terminal apparatus is less than or equal to a backoff value of the third terminal apparatus, where the backoff value is used for channel access; a value of a contention window of the second terminal apparatus is less than or equal to a value of a contention window of the third terminal apparatus, where the contention window is used for channel access; or

the second resource is a resource in resources in M consecutive slots, where the resources in the M consecutive slots include a resource for transmitting the sidelink information of the first terminal apparatus.

With reference to the fourth aspect, in a possible design, the interface module is further configured to receive second sidelink control information from a third terminal apparatus, where the second sidelink control information indicates a third resource. The processing module is configured to exclude a second resource based on a first condition, where the first condition includes at least one of the following: an RSRP measurement value of the second resource is greater than or equal to an RSRP measurement value of the third resource; a service priority value of the second terminal apparatus is greater than a service priority value of the third terminal apparatus; a CAPC value of the second terminal apparatus is greater than a CAPC value of the third terminal apparatus; a CPE length of the second terminal apparatus is less than or equal to a CPE length of the third terminal apparatus; a backoff value of the second terminal apparatus is greater than or equal to a backoff value of the third terminal apparatus, where the backoff value is used for channel access; a value of a contention window of the second terminal apparatus is greater than or equal to a value of a contention window of the third terminal apparatus, where the contention window is used for channel access; or the second resource is not a resource in resources in M consecutive slots, where the resources in the M consecutive slots include a resource for transmitting the sidelink information of the first terminal apparatus.

With reference to the fourth aspect, in a possible design, the second resource is not a resource in the resources in the M consecutive slots, and the resources in the M consecutive slots include a resource for transmitting the sidelink information of the first terminal apparatus; or the second resource is a resource in the resources in the M consecutive slots, and the resources in the M consecutive slots include a resource for transmitting the sidelink information of the first terminal apparatus; or

the second resource is a resource in the resources in the M consecutive slots, and the resources in the M consecutive slots include a resource for transmitting the sidelink information of the first terminal apparatus and a resource for transmitting the sidelink information of the second terminal apparatus, where M is a positive integer.

With reference to the fourth aspect, in a possible design, the processing module is specifically configured to: share the second resource in the resources in the M consecutive slots with the second terminal apparatus; or skip sharing the second resource in the resources in the M consecutive slots with the second terminal apparatus, and transmit the sidelink information of the first terminal apparatus on a first resource, where the first resource overlaps the second resource.

With reference to the fourth aspect, in a possible design, the processing module is specifically configured to: skip sharing the second resource with the second terminal; or skip transmitting the sidelink information of the first terminal apparatus on the first resource, where the first resource overlaps the second resource.

With reference to the fourth aspect, in a possible design, the processing module is specifically configured to: exclude the second resource; and/or exclude a resource in the RB set in which the second resource is located; and/or exclude a resource whose frequency domain location is the same as a frequency domain location of the second resource and whose time domain location is in first duration before the second resource; and/or exclude a resource whose frequency domain location is the same as a frequency domain location of the second resource and whose time domain location is in second duration after the second resource; and/or exclude a resource whose time domain location is in first duration before the second resource in the RB set in which the second resource is located; and/or exclude a resource whose time domain location is in second duration after the second resource in the RB set in which the second resource is located.

With reference to the fourth aspect, in a possible design, the processing module is specifically configured to: select the second resource; and/or select a resource in the RB set in which the second resource is located; and/or select a resource whose frequency domain location is the same as a frequency domain location of the second resource and whose time domain location is in third duration before the second resource; and/or select a resource whose frequency domain location is the same as a frequency domain location of the second resource and whose time domain location is in fourth duration after the second resource; and/or select a resource whose time domain location is in third duration before the second resource in the RB set in which the second resource is located; and/or select a resource whose time domain location is in fourth duration after the second resource in the RB set in which the second resource is located.

With reference to the fourth aspect, in a possible design, the processing module is specifically configured to: when the first terminal apparatus is not a receiving apparatus of the second terminal apparatus, select, by the first terminal apparatus, the resource in the RB set in which the second resource is located; and/or when the first terminal apparatus is not a receiving apparatus of the second terminal apparatus, select, by the first terminal apparatus, the resource in the slot in which the second resource is located; and the excluding a resource in the RB set in which the second resource is located includes: when the first terminal apparatus is a receiving apparatus of the second terminal apparatus, excluding, by the first terminal apparatus, the resource in the RB set in which the second resource is located.

With reference to the fourth aspect, in a possible design, the processing module is specifically configured to:

when the first terminal apparatus is a receiving apparatus of the second terminal apparatus, select, by the first terminal apparatus, the first resource, and when the first resource overlaps the second resource, skip, by the first terminal apparatus, sharing the second resource with the second terminal apparatus; when the first terminal apparatus is a receiving apparatus of the second terminal apparatus, share, by the first terminal apparatus, the second resource with the second terminal apparatus, and exclude, by the first terminal apparatus, a resource that overlaps the second resource in time domain; when the first terminal apparatus is not a receiving apparatus of the second terminal apparatus, skip, by the first terminal apparatus, sharing the second resource with the second terminal apparatus; when the first terminal apparatus is not a receiving apparatus of the second terminal apparatus, share, by the first terminal apparatus, the second resource with the second terminal apparatus, and select, by the first terminal apparatus, a resource that overlaps the second resource in time domain; or when the first terminal apparatus is not a receiving apparatus of the second terminal apparatus, share, by the first terminal apparatus, the second resource with the second terminal apparatus, and when a quantity of RBs of a resource selected by the first terminal apparatus is greater than the quantity of RBs of the second resource, select, by the first terminal apparatus, a resource that does not overlap the RB set in which the second resource is located in the slot in which the second resource is located.

With reference to the fourth aspect, in a possible design, the interface module is further configured to send first indication information to the second terminal apparatus, where the first indication information indicates that the second terminal apparatus transmits the sidelink information of the second terminal apparatus on the second resource, and the second resource is a resource in the resources in the M consecutive slots. Based on this solution, the first terminal apparatus may send a COT sharing indication to the second terminal apparatus.

With reference to the fourth aspect, in a possible design, the M consecutive slots include a first slot and/or a second slot, the first slot includes the resource for transmitting the sidelink information of the first terminal apparatus, the second slot includes the resource for transmitting the sidelink information of the second terminal apparatus, the first F slots of the M consecutive slots are the first slot, and F is a positive integer; and/or the second slot may be at least one of the M consecutive slots other than the 1$^{st}$ slot.

With reference to the fourth aspect, in a possible design, the resources in the M consecutive slots are located in K contiguous RB sets, and the resources in the M consecutive slots include the resource for transmitting the sidelink information of the first terminal apparatus, where M is a positive integer, and K is a positive integer.

With reference to the fourth aspect, in a possible design, the processing module is specifically configured to determine a value of the quantity M of consecutive slots based on a CAPC value of sidelink information, where the resources in the M consecutive slots include the resource for transmitting the sidelink information of the first terminal apparatus, and M is a positive integer.

With reference to the fourth aspect, in a possible design, a frequency domain granularity of the available resource for transmitting the sidelink information of the second terminal apparatus is a subchannel or an RB set, and/or a frequency domain granularity of the available resource for transmitting the sidelink information of the first terminal apparatus is a subchannel or an RB set.

With reference to the fourth aspect, in a possible design, the processing module is specifically configured to: select the resources in the M consecutive slots from a union set of a first set and a second set; or select, by the first terminal apparatus, the resources in the M consecutive slots from an intersection set of a first set and a second set, where the first set includes the available resource for transmitting the sidelink information of the first terminal apparatus, and the second set includes the available resource for transmitting the sidelink information of the second terminal apparatus.

With reference to the fourth aspect, in a possible design, the processing module is specifically configured to select, by the first terminal apparatus, the second resource according to a first rule or a second rule, where the first rule includes: preferentially selecting resources in Q slots for transmitting the sidelink information of the first terminal apparatus, where the resources in the Q slots belong to the resources in the M consecutive slots, and Q is a positive integer less than or equal to M; and the second rule includes: preferentially selecting resources in P slots for transmitting the sidelink information of the second terminal apparatus, where the resources in the P slots belong to the resources in the M consecutive slots, and P is a positive integer less than or equal to M.

According to a fifth aspect, a communication apparatus is provided to implement the foregoing methods. The communication apparatus may be the second terminal apparatus in the second aspect, or an apparatus including the second terminal apparatus, or an apparatus included in the second terminal apparatus, such as a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fifth aspect, in a possible design, the communication apparatus includes an interface module.

The interface module is configured to send first sidelink control information, where the first sidelink control information indicates a second resource of the second terminal apparatus. The interface module is further configured to receive first indication information from a first terminal apparatus, where the first indication information indicates that the second terminal apparatus transmits sidelink information on a second resource.

With reference to the fifth aspect, in a possible design, the second resource is a resource in resources in M consecutive slots, and the resources in the M consecutive slots include a resource for transmitting sidelink information of the first terminal apparatus and a resource for transmitting sidelink information of the second terminal apparatus.

With reference to the fifth aspect, in a possible design, the interface module is further configured to transmit the sidelink information on the second resource based on a first condition.

With reference to the fifth aspect, in a possible design, the first condition includes at least one of the following: a channel access type of the second terminal apparatus is a first type, and the first type is type 1 or type 2; the second terminal apparatus is a receiving apparatus of the first terminal apparatus; the first terminal apparatus is a receiving apparatus of the second terminal apparatus; a channel access priority class CAPC value of the second terminal apparatus is less than a CAPC value of the first terminal apparatus; a CAPC value of the second terminal apparatus is less than a first CAPC threshold; a quantity of resource block RB sets corresponding to the second resource is less than or equal to a quantity of first RB sets, where the quantity of first RB sets is a quantity of RB sets of a resource selected by the first terminal apparatus; a frequency domain resource of the second resource belongs to frequency domain resources of resources in M consecutive slots; a reference signal received power RSRP measurement value of the second resource is less than or equal to a first RSRP threshold; a reference signal received power RSRP measurement value of the second resource is greater than or equal to a first RSRP threshold; a service priority value of the second terminal apparatus is less than a service priority value of the first terminal apparatus; a service priority value of the second terminal apparatus is less than a first service priority threshold; a cyclic prefix extension CPE length of the second terminal apparatus is greater than or equal to a CPE length of the first terminal apparatus; a CPE length of the second terminal apparatus is greater than or equal to a first CPE threshold; a backoff value of the second terminal apparatus is less than or equal to a backoff value of the first terminal apparatus, where the backoff value is used for channel access; a backoff value of the second terminal apparatus is less than or equal to a first backoff threshold, where the backoff value is used for channel access; a value of a contention window of the second terminal apparatus is less than or equal to a value of a contention window of the first terminal apparatus, where the contention window is used for channel access; a value of a contention window of the second terminal apparatus is less than or equal to a first contention window threshold, where the contention window is used for channel access; or no reserved resource of another terminal apparatus exists in an RB set in which the second resource is located.

According to a sixth aspect, a communication apparatus configured to implement the foregoing methods is provided. The communication apparatus may be the network apparatus in the third aspect, or an apparatus including the network apparatus, or an apparatus included in the network apparatus, such as a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the sixth aspect, in a possible design, the communication apparatus includes an interface module. The interface module is configured to send second indication information to a first terminal apparatus, where the second indication information includes information used to determine whether a second resource can share a first COT of the first terminal apparatus, and the second resource is a resource indicated by sidelink control information of a second terminal apparatus; or the interface module is configured to send the second indication information to the second terminal apparatus.

With reference to the sixth aspect, in a possible design, the second indication information includes at least one of the following information of the first terminal apparatus: a CAPC value, a backoff value, and a value of a contention window.

With reference to the sixth aspect, in a possible design, the second indication information includes at least one of the following information of the second terminal apparatus: a CAPC value, a backoff value, and a value of a contention window.

With reference to the sixth aspect, in a possible design, the second indication information further includes at least one of the following information: a first priority threshold, a first CAPC threshold, a first backoff threshold, a first contention window threshold, a first RSRP threshold, or a first CPE threshold.

With reference to the sixth aspect, in a possible design, the interface module is further configured to send, to the first terminal apparatus, indication information indicating a value of M or a value range of M.

According to a seventh aspect, a communication apparatus is provided, including a processor. The processor is configured to execute instructions stored in a memory, and when the processor executes the instructions, the communication apparatus is enabled to perform the method according to any one of the foregoing aspects.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to an eighth aspect, a communication apparatus is provided, including a processor and an interface circuit. The interface circuit is configured to communicate with a module outside the communication apparatus; and the processor is configured to perform the method according to any one of the foregoing aspects by using a logic circuit or by running a computer program or instructions.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, to enable the processor to run the computer-executable instructions to perform the method according to any one of the foregoing aspects.

In some possible designs, the communication apparatus may be a chip or a chip system.

According to a ninth aspect, a computer-readable storage medium is provided. The computer-readable storage medium stores instructions; and when the instructions are run on a communication apparatus, the communication apparatus is enabled to perform the method according to any one of the foregoing aspects.

According to a tenth aspect, a computer program product including instructions is provided. When the computer program product runs on a communication apparatus, the communication apparatus is enabled to perform the method according to any one of the foregoing aspects.

According to an eleventh aspect, a communication apparatus (for example, the communication apparatus may be a chip or a chip system) is provided. The communication apparatus includes a processor, configured to implement a function in any one of the foregoing aspects. In a possible design, the communication apparatus further includes the memory, and the memory is configured to store necessary program instructions and data. When being a chip system, the communication apparatus may include a chip, or may include a chip and another discrete component.

According to a twelfth aspect, a communication system is provided. The communication system includes a first terminal apparatus and a second terminal apparatus. The first terminal apparatus is configured to perform the method according to the first aspect. The second terminal apparatus is configured to perform the method according to the second aspect.

In some possible designs, the communication system further includes a network apparatus. The network apparatus is configured to perform the method according to the third aspect.

## BRIEF DESCRIPTION OF DRAWINGS

FIG. 1 is a diagram of a PSSCH, a PSCCH, and a PSFCH according to an embodiment of this application;

FIG. 2 is a diagram of a COT and an RB set according to an embodiment of this application;

FIG. 3 is another diagram of a COT and an RB set according to an embodiment of this application;

FIG. 4 is a diagram of an interlace according to an embodiment of this application;

FIG. 5 is a diagram of an interlace subchannel according to an embodiment of this application;

FIG. 6 is a diagram of a continuous RB subchannel according to an embodiment of this application;

FIG. 7 is another diagram of an interlace subchannel and a continuous RB subchannel according to an embodiment of this application;

FIG. 8 is a diagram of a subchannel according to an embodiment of this application;

FIG. 9 is a diagram of subchannel numbering according to an embodiment of this application;

FIG. 10 is a diagram of semi-static access according to an embodiment of this application;

FIG. 11a is a diagram of resource reservation according to an embodiment of this application;

FIG. 11b is a diagram of a resource sensing window and a resource selection window according to an embodiment of this application;

FIG. 12 is a diagram of transmission in a COT according to an embodiment of this application;

FIG. 13 is a diagram of a structure of a communication system according to an embodiment of this application;

FIG. 14 is a diagram of a structure of a communication apparatus according to an embodiment of this application;

FIG. 15 is an interaction diagram of a communication method according to an embodiment of this application;

FIG. 16 is a diagram 1 of selecting a first resource according to an embodiment of this application;

FIG. 17 is a diagram 2 of selecting a first resource according to an embodiment of this application;

FIG. 18 is a diagram 3 of selecting a first resource according to an embodiment of this application;

FIG. 19 is a diagram 4 of selecting a first resource according to an embodiment of this application;

FIG. 20 is a diagram 5 of selecting a first resource according to an embodiment of this application;

FIG. 21 is a diagram 6 of selecting a first resource according to an embodiment of this application;

FIG. 22 is an interaction diagram of another communication method according to an embodiment of this application;

FIG. 23 is a diagram 1 of excluding a fourth resource according to an embodiment of this application;

FIG. 24 is a diagram 2 of excluding a fourth resource according to an embodiment of this application;

FIG. 25 is a diagram 3 of excluding a fourth resource according to an embodiment of this application;

FIG. 26 is a diagram 4 of excluding a fourth resource according to an embodiment of this application;

FIG. 27 is a diagram 5 of excluding a fourth resource according to an embodiment of this application;

FIG. 28 is an interaction diagram of another communication method according to an embodiment of this application;

FIG. 29 is an interaction diagram of another communication method according to an embodiment of this application;

FIG. 30 is a flowchart of another communication method according to an embodiment of this application;

FIG. 31 is a diagram of a candidate resource set according to an embodiment of this application;

FIG. 32 is an interaction diagram of another communication method according to an embodiment of this application;

FIG. 33 is a diagram of a structure of another communication apparatus according to an embodiment of this application; and

FIG. 34 is a diagram of a structure of another communication apparatus according to an embodiment of this application.

## DESCRIPTION OF EMBODIMENTS

For ease of understanding technical solutions in embodiments of this application, related technologies or related terms in this application are first briefly described.

1. Resource

Specifically, the resource is a time-frequency resource. According to the Rel-16/Rel-17 NR protocol, a scheduling granularity of a PSCCH/PSSCH is measured in a unit of one slot in time domain, and is measured in a unit of one or more contiguous subchannels in frequency domain. A sending terminal apparatus may send sidelink information on the resource. Correspondingly, a receiving terminal apparatus may receive or detect the sidelink information on the resource.

A sidelink (sidelink, SL) is a link established between devices of a same type, and may also be referred to as a side link, a secondary link, or the like. The sidelink is used in this specification. The link between the devices of the same type may be a link between terminal devices, a link between network devices, a link between relay nodes, or the like. This is not limited in embodiments of this application.

The sidelink information includes a sidelink channel or a sidelink signal. In embodiments of this application, unless otherwise specified, information transmitted for communication between terminal apparatuses is sidelink information. For example, the sidelink channel may be a physical sidelink control channel (physical sidelink control channel, PSCCH), a physical sidelink shared channel (physical sidelink shared channel, PSSCH), a physical sidelink discovery channel (physical sidelink discovery channel, PSDCH), a physical sidelink feedback channel (physical sidelink feedback channel, PSFCH), or a physical sidelink broadcast channel (physical sidelink broadcast channel, PSBCH). The sidelink signal may be a demodulation reference signal (demodulation reference signal, DMRS), a channel state information reference signal (channel state information reference signal, CSI-RS), a phase-tracking reference signal (phase-tracking reference signal, PT-RS), a sidelink synchronization signal and PBCH block (side link synchronization signal and PBCH block, S-SSB), or the like.

The PSCCH may be used to carry SCI (also referred to as sidelink control information in this specification). It may be understood that first-stage SCI is carried on the PSCCH, and the second-stage SCI is carried on the PSSCH. The PSSCH may be used to carry one or more of control information, service data (which may also be referred to as a medium access control (medium access control, MAC) protocol data unit (protocol data unit, PDU), sidelink channel state information (channel state information, CSI), or the like. The PSSCH may be used to carry data. The PSDCH may be used to carry a discovery message. The PSFCH may be used to carry sidelink feedback information, and the sidelink feedback information may include feedback information for data information, for example, hybrid automatic repeat request (hybrid automatic repeat request, HARQ) response information. The PSBCH may be used to carry information related to sidelink synchronization.

In this application, the sidelink information may include at least one of the PSCCH, the PSSCH, the PSFCH, the DM-RS, the CSI-RS, the PT-RS, the S-SSB, the SCI, the first-stage SCI, the second-stage SCI, or a CPE (CP extension, Cyclic Prefix extension). PSCCH/PSSCH includes a PSCCH and/or a PSSCH.

(1) Physical sidelink control channel (Physical Sidelink Control Channel, PSCCH)

The PSCCH carries first-stage SCI. For ease of description, when no distinction is made, the PSCCH and the SCI have a same meaning. In time domain, the PSCCH occupies two or three OFDM symbols starting from a 2nd sidelink symbol. In frequency domain, a PRB carrying the PSCCH starts from a lowest PRB of a lowest subchannel of an associated PSSCH, and a quantity of PRBs occupied by the PSCCH is within a subband range of one PSSCH. The PSCCH includes {10, 12, 15, 20, 25} RBs, and a specific value is indicated by RRC signaling or preconfigured.

(2) Physical sidelink shared channel (Physical Sidelink Shared Channel, PSSCH)

The PSSCH carries at least two of second-stage SCI, a MAC CE, and data. The SCI may be first-stage SCI and/or second-stage SCI. For ease of description, when no distinction is made, the SCI is any one of first-stage SCI, second-stage SCI, or first-stage SCI and second-stage SCI. In time domain, on a resource without a PSFCH, 12 symbols are used to carry the PSSCH; and on a resource with a PSFCH, nine symbols are used to carry the PSSCH. In frequency domain, the PSSCH occupies LsubCh contiguous subchannels. In addition, in one slot, a 1st OFDM symbol copies information sent on a 2nd symbol for automatic gain control (Automatic Gain Control, AGC).

(3) Physical sidelink feedback channel (Physical Sidelink Feedback Channel, PSFCH)

The PSFCH carries feedback information. On a resource with a PSFCH, a second-to-last OFDM symbol and a third-to-last OFDM symbol are used to carry the PSFCH. A signal on the third-to-last symbol is repetition of a signal on the second-to-last symbol, to help a receiving terminal apparatus perform AGC adjustment.

(4) GAP symbol

In addition, a terminal apparatus may respectively receive and send a PSSCH in two consecutive slots, or the terminal apparatus may respectively receive and send a PSSCH and a PSFCH in a same slot. Therefore, an additional symbol needs to be added after a PSSCH and after a PSFCH symbol for transmit/receive conversion of the terminal apparatus.

(5) AGC symbol

The symbol is located on a start symbol of transmission, for example, a symbol 0 of PSCCH/PSSCH transmission, for example, a symbol 11 of PSFCH transmission. Data cannot be received and decoded at the same time when AGC adjustment is performed. Therefore, a signal on the AGC symbol is a copy of signal content on a next symbol. Because SL transmission keeps equal power on each symbol, content of the remaining symbols may be received based on a result of automatic gain control of the AGC symbol.

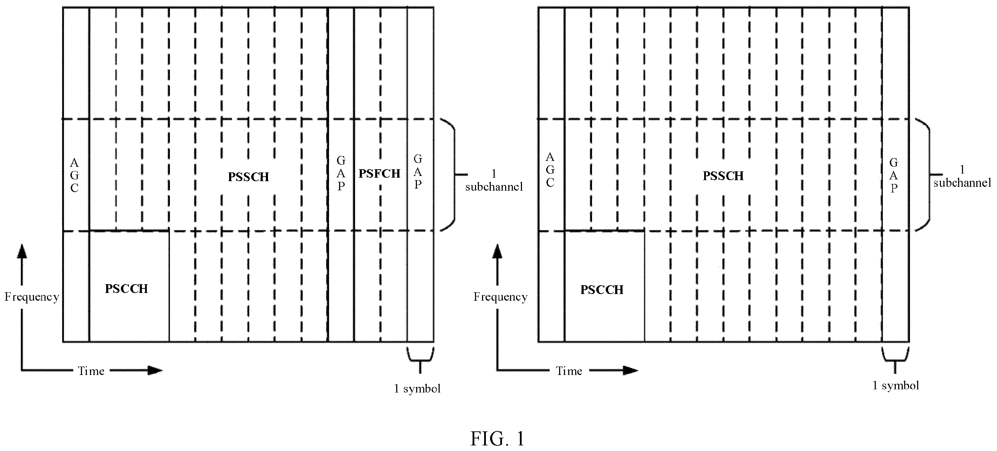

FIG. 1 is a diagram in which a PSCCH, a PSSCH, and a PSFCH are carried on resources on three subchannels in one slot in an NR system.

2. Resource pool and RB set

NR SL communication is performed based on the resource pool (resource pool). The resource pool is a time-frequency resource dedicated to SL communication. Frequency domain resources included in the resource pool are contiguous. Time domain resources included in the resource pool may be consecutive or non-consecutive. Different resource pools are distinguished by RRC signaling. A terminal apparatus performs receiving on a receiving resource pool, and performs sending on a sending resource pool. If resource pools have a same resource pool index, it may be considered that time-frequency resources in the resource pools completely overlap.

In SL-U, because a frequency band is shared by terminal apparatuses in multiple forms, for example, an SL terminal apparatus, a Wi-Fi terminal apparatus, and a Bluetooth terminal apparatus perform transmission on a same frequency band. Therefore, an SL resource pool may also be understood as a resource set that can be used for SL transmission. In embodiments, the resource pool may also be referred to as one or more RB sets (RB set), one or more channels (channel), one or more operating channels (Operating channel), one or more nominal channel (Nominal Channel Bandwidth) bandwidths (bandwidth). Meanings of the channel and the RB set may be interchanged. In other words, the resource pool, the channel, the bandwidth, and the RB set all represent the resource set that can be used for SL transmission.

The RB set and the channel have a same meaning, and are a frequency domain unit of a COT. For example, the COT includes M1 RB sets in frequency domain, where M={1, 2, 3, 4, 5}.

The following describes a relationship between a resource pool and an RB set. The resource pool includes one or more RB sets. One or more COTs can be transmitted in the resource pool, for example, a COT 1 transmitted in an RB set 0, and a COT 2 transmitted in an RB set 1 and an RB set 2. A frequency domain unit of the COT is one or more RB sets. The RB set may also be referred to as a channel.

A bandwidth of the resource pool is C*20 MHz, and C is a positive integer, for example, C={1, 2, 3, 4, 5}. There is at least one channel in the resource pool. For example, the resource pool includes one channel, a channel bandwidth is 20 MHz, and a resource pool bandwidth is 20 MHz. For another example, the resource pool includes two channels, a channel bandwidth is 20 MHz, and a resource pool bandwidth is 40 MHz. For another example, the resource pool includes five channels, a channel bandwidth is 20 MHz, and a resource pool bandwidth is 100 MHz.

A frequency domain bandwidth of the RB set is 20 MHz. A bandwidth of the resource pool is C*20 MHz or C*20+C2 MHz, and C is a positive integer, for example, C={1, 2, 3, 4, 5}. For example, the bandwidth of the resource pool is 20 MHz, and the resource pool includes one RB set. For another example, the bandwidth of the resource pool is 50 MHz, the resource pool includes two RB sets, and the two RB sets may be adjacent or may not be adjacent in frequency domain.

In the resource pool, the terminal apparatus may transmit a PSCCH and/or a PSSCH in one RB set. That the terminal apparatus transmits the PSCCH on A interlaces and transmits the PSSCH on B interlaces is used as an example. An RB with a smallest index in the A interlaces and an RB with a smallest index in the B interlaces are a same RB. For example, A=1, and B=4.

In the resource pool, the terminal apparatus may transmit a PSCCH and/or a PSSCH in D adjacent RB sets. The terminal apparatus transmits the PSCCH on A interlaces in an RB set with a smallest RB set index; and the terminal apparatus transmits the PSSCH on B interlaces in total in the D RB sets. For example, if A=1, B=4, D=2, and RB set indexes are respectively 0 and 1, the terminal apparatus transmits the PSCCH in the RB set whose index is 0.

3. Priority

A service priority of a terminal apparatus is specifically a transmission priority (transmission priority) of the terminal apparatus.

The priority may also be referred to as a service priority, an L1 priority (L1 priority), a physical layer priority, a priority carried in SCI, a priority carried in first-stage SCI, a priority carried in SCI 2-C, a priority corresponding to a PSSCH associated with SCI, a transmission priority, a priority of transmitting a PSSCH, a priority used for resource selection, a priority of a logical channel, or a highest-level priority of a logical channel.

There is a correspondence between a priority level and a priority value. For example, a higher priority level corresponds to a lower priority value, or a lower priority level corresponds to a lower priority value. For example, the higher priority level corresponds to the lower priority value, and the priority value may be an integer ranging from 1 to 8 or an integer ranging from 0 to 7. If the priority value ranges from 1 to 8, the priority value 1 indicates a highest-level priority.

In an unlicensed spectrum, a concept of CAPC exists. CAPC may also be translated into a channel access priority class. An importance degree of SL information associated with the CAPC is used for first-type LBT. For example, the CAPC is a priority p in the first-type LBT. Optionally, the CAPC may alternatively be used by the terminal apparatus to determine whether second SL information is transmitted in an initial COT of a CAPC associated with first SL information.

There is a correspondence between a CAPC level and a CAPC value. For example, a higher CAPC level corresponds to a lower CAPC value, or a lower CAPC level corresponds to a lower CAPC value. The CAPC value is an integer ranging from 1 to 4. When a lower CAPC value represents a higher CAPC level, a CAPC value 1 represents a highest CAPC level. When a lower CAPC value represents a lower CAPC level, a CAPC value 1 represents a lowest CAPC level.

In this application, the priority may be a service priority or a channel access priority class CAPC.

4. Unlicensed spectrum (Unlicensed Spectrum) or shared spectrum (Shared Spectrum)

According to the Regulations on Radio Frequency Division of the People's Republic of China, frequency bands are divided to fully, properly, and effectively use radio spectrum resources, ensure normal operation of radio services, and prevent mutual interference between radio services, radio stations, and systems. 2G/3G/4G technologies use licensed spectrums, which need to be applied by telecom operators. This ensures low interference and security.

Technologies such as Wi-Fi, Bluetooth, and ZigBee use unlicensed spectrums to serve as supplementary tools for operators to enhance their services. The licensed spectrum can be used for communication without application and are free of charge. Communication on the unlicensed spectrum needs to comply with some regulations, for example, listen before talk (listen before talk, LBT) and OCB (occupied channel bandwidth, OCB) requirements, to ensure access fairness between various terminal apparatuses running on the spectrum. On the unlicensed spectrum, a plurality of technologies such as NR-U, SL-U, Wi-Fi, Bluetooth, and ZigBee may be transmitted on the spectrum. Therefore, the unlicensed spectrum may also be referred to as a shared spectrum. In this patent, the "unlicensed spectrum" and the "shared spectrum" have a same meaning, and may be interchangeably used.

In embodiments of this application, SL communication on the unlicensed spectrum may be referred to as SL-U. Any one of a Wi-Fi terminal apparatus, a Bluetooth terminal apparatus, and a ZigBee terminal apparatus may be referred to as an inter-system terminal apparatus for an SL terminal apparatus.

5. CO and COT

Channel occupancy (CO, channel occupancy) refers to transmission on one or more channels after a terminal apparatus performs a channel access process.

After performing Type1 channel access, the terminal apparatus occupies a channel for transmission in a continuous period of time, which is referred to as a channel occupancy time (COT, Channel Occupancy Time). A frequency domain unit of the COT is a channel, and a time domain unit of the COT is ms or a slot. In this patent, the COT may be a time concept, that is, a time of SL transmission, or may be a resource concept, that is, a time-frequency resource occupied by SL transmission. In this application, if no further distinction is made, the COT and the CO are a same concept. The terminal apparatus may perform transmission on a plurality of adjacent or non-adjacent channels. In this application, the terminal apparatus performing transmission on a plurality of channels may be understood as that transmission of the terminal apparatus occupies one COT, and the COT occupies a plurality of channels in frequency domain; or transmission of the terminal apparatus occupies a plurality of COTs, and each COT occupies one channel in frequency domain.

A network apparatus or the terminal apparatus performs transmission in a COT after successfully performing Type1 LBT-based channel access. The COT may be referred to as an initial COT of the network apparatus or the terminal apparatus. First-type LBT is performed by using different CAPCs, and the COT may also be referred to as an initial COT based on CAPC=p. Initial is initiated, initial, initialization, or initiate. The initial COT may also be translated into a created COT.

The COT can be used to share transmission between terminal apparatuses (COT sharing). A terminal apparatus of the initial COT may share the COT with another terminal apparatus, that is, is used for sidelink information transmission of the another terminal apparatus. The terminal apparatus of the initial COT and a terminal apparatus of the COT sharing occupy a channel in a continuous period of time for transmission, and a corresponding condition needs to be met for the COT sharing. For example, the terminal apparatus of the initial COT is a receiving terminal apparatus or a sending terminal apparatus of the terminal apparatus of the COT sharing. For another example, the terminal apparatus of the initial COT and the terminal apparatus of the COT sharing are members in a same group.

Transmission of the terminal apparatus cannot exceed a limit of a maximum channel occupancy time (MCOT, Maximum Channel Occupancy Time), which is denoted as $T_{cot,p}$. A value of $T_{cot,p}$ varies with a CAPC, as shown in Table 5 or Table 6. For one terminal apparatus accessing a channel and performing transmission in a COT, a transmission time does not exceed the maximum channel occupancy time $T_{cot,p}$. For a plurality of terminal apparatuses performing transmission in a COT, a transmission time of the terminal apparatus of the initial COT and that of the terminal apparatus of the COT sharing do not exceed the maximum channel occupancy time $T_{cot,p}$. p is a CAPC of the terminal apparatus of the initial COT; or p is a CAPC with a smallest CAPC value in the terminal apparatus of the COT sharing.

6. RSRP measurement

PSSCH-RSRP is defined as average power of wanted signals (that is, PSSCH-DMRSs) on all REs carrying the PSSCH-DMRSs in linear domain (power of a CP part is not calculated). PSCCH-RSRP is defined as average power of wanted signals (that is, PSSCH-DMRSs) on all REs carrying the PSCCH-DMRSs in linear domain (power of a CP part is not calculated). RSRP is not measured for a symbol on which a PSFCH is located.

In NR, RSRP is one RSRP measurement value for 1 slot*total subchannel resources of a PSSCH or PSCCH. That is, if the PSSCH occupies three subchannels, one RSRP measurement value for the three subchannels is obtained.

7. Sidelink parameter set

Table 1 shows subcarrier spacings and corresponding CP lengths supported by R16 NR SL. To reduce implementation complexity of a terminal apparatus, only one CP length type and one subcarrier spacing are configured for one sidelink carrier. Table 2 shows a quantity of RBs in different SCSs within different maximum transmission bandwidths.

In a CP-OFDM architecture, a single subcarrier on a single OFDM symbol is a minimum unit of a time-frequency resource, and is referred to as a resource element (resource element, RE) in a protocol. One RB is a frequency domain resource unit including 12 contiguous subcarriers. A minimum scheduling unit may also be an RB. For example, a scheduling unit of a PSFCH is one symbol in time domain and one RB in frequency domain. As mentioned above, a frequency domain granularity of scheduling of a PSCCH/PSSCH is a subchannel or an interlace, one subchannel includes {10, 12, 15, 20, 25, 50, 75, 100} PRBs, and a specific value is indicated by RRC signaling or preconfigured.

Table 1 Subcarrier spacings supported in different frequency ranges

| | FR 1 | | | FR 2 | |
|---|---|---|---|---|---|
| Subcarrier spacing | 15 kHZ | 30 kHZ | 60 kHZ | 60 kHZ | 120 kHZ |
| $\mu$ | 0 | 1 | 2 | 2 | 3 |

Table 2 Quantity of RBs within a maximum transmission bandwidth

| Quantity of RBs | | Maximum transmission bandwidth (MHz) | | | | | | | | | | | | |
|---|---|---|---|---|---|---|---|---|---|---|---|---|---|---|
| | | 5 | 10 | 15 | 20 | 25 | 30 | 40 | 50 | 60 | 70 | 80 | 90 | 100 |
| SCS (kHZ) | 15 | 25 | 52 | 79 | 106 | 133 | 160 | 216 | 270 | N/A | N/A | N/A | N/A | N/A |
| | 30 | 11 | 24 | 38 | 51 | 65 | 78 | 106 | 133 | 162 | 189 | 217 | 245 | 273 |
| | 60 | N/A | 11 | 18 | 24 | 31 | 38 | 51 | 65 | 79 | 93 | 107 | 121 | 135 |

A bandwidth of a resource pool may be at least one of {5, 10, 15, 20, 25, 30, 40, 50, 60, 70, 80, 90, 100} MHz. For details about the quantity of RBs corresponding to the maximum transmission bandwidth in different SCSs, refer to Table 2.

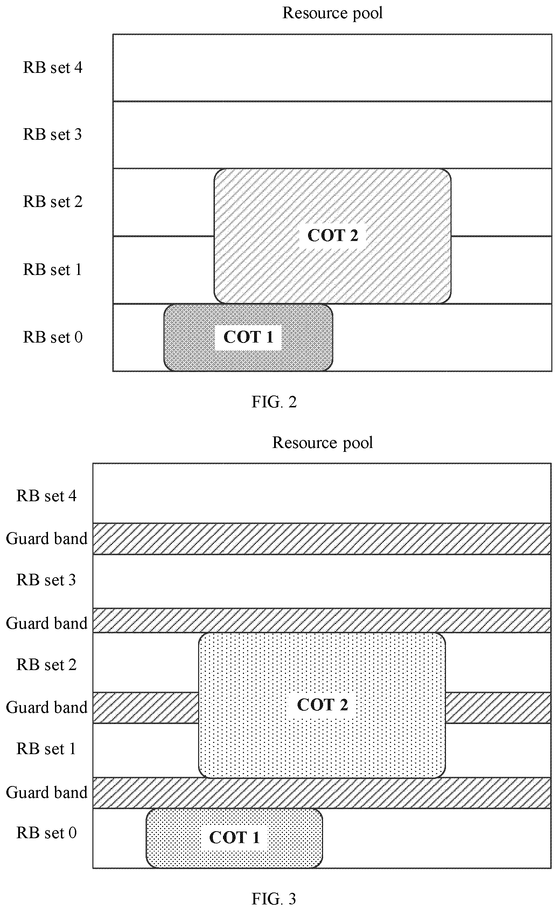

An RB set and a channel have a same meaning, and are a frequency domain unit of a COT. For example, the COT includes M1 RB sets in frequency domain, where M={1, 2, 3, 4, 5}. FIG. 2 is a diagram of an RB set and a COT in a resource pool.

The following describes a relationship between a resource pool and an RB set. The resource pool includes one or more RB sets. One or more COTs can be transmitted in the resource pool, for example, a COT 1 transmitted in an RB set 0, and a COT 2 transmitted in an RB set 1 and an RB set 2. A frequency domain unit of the COT is one or more RB sets. The RB set may also be referred to as a channel.

A bandwidth of the resource pool is C*20 MHz, and C is a positive integer, for example, C={1, 2, 3, 4, 5}. There is at least one channel in the resource pool. For example, the resource pool includes one channel, a channel bandwidth is 20 MHz, and a resource pool bandwidth is 20 MHz. For another example, the resource pool includes two channels, a channel bandwidth is 20 MHz, and a resource pool bandwidth is 40 MHz. For another example, the resource pool includes five channels, a channel bandwidth is 20 MHz, and a resource pool bandwidth is 100 MHz.

A frequency domain bandwidth of the RB set is 20 MHz. A bandwidth of the resource pool is C*20 MHz or C*20+$C_2$ MHz, and C is a positive integer, for example, C={1, 2, 3, 4, 5}. For example, the bandwidth of the resource pool is 20 MHz, and the resource pool includes one RB set. For another example, the bandwidth of the resource pool is 50 MHz, the resource pool includes two RB sets, and the two RB sets may be adjacent or may not be adjacent in frequency domain.

In the resource pool, the terminal apparatus may transmit a PSCCH and/or a PSSCH in one RB set. That the terminal apparatus transmits the PSCCH on A interlaces and transmits the PSSCH on B interlaces is used as an example. An RB with a smallest index in the A interlaces and an RB with a smallest index in the B interlaces are a same RB. For example, A=1, and B=4.

In the resource pool, the terminal apparatus may transmit a PSCCH and/or a PSSCH in D adjacent RB sets. The terminal apparatus transmits the PSCCH on A interlaces in an RB set with a smallest RB set index; and the terminal apparatus transmits the PSSCH on B interlaces in total in the D RB sets. For example, if A=1, B=4, D=2, and RB set indexes are respectively 0 and 1, the terminal apparatus transmits the PSCCH in the RB set whose index is 0.

The resource pool may further include a guard band, as shown in a shadow in FIG. 3. There is a guard band formed by 5, 6, or 7 RBs between RB sets. Using a 100 MHz transmission bandwidth and a 30 KHz SCS in FIG. 3 and Table 3 as an example, there are 273 RBs in total in the 100 MHz transmission bandwidth. An RB set 0 to an RB set 4 respectively include 50, 50, 49, 50, and 50 RBs, and a guard band of six RBs exists between RB sets. The guard band is used to avoid mutual interference between different terminal apparatuses during transmission on adjacent RB sets.

Table 3 RB sets and guard bands for wideband transmission

| SCS (KHz) | Maximum transmission bandwidth (MHz) | | | |
|---|---|---|---|---|
|  | 40 MHz | 60 MHz | 80 MHz | 100 MHz |
| 15 | 105-6-105 (216) | N/A | N/A | N/A |
| 30 | 50-6-50 (106) | 50-6-50-6-50 (162) | 50-6-50-5-50-6-50 (217) | 50-6-50-6-49-6-50-6-50 (273) |
| 60 | 23-5-23 (51) | 23-5-23-5-23 (79) | 23-5-23-5-23-5-23 (107) | 23-5-23-5-23-5-23-5-23 (135) |

Frequency domain of the COT includes one or more RB sets. For frequency domain of the COT including a plurality of RB sets, the COT also includes a guard band between the plurality of RB sets. For example, the COT 1 shown in FIG. 3 includes a resource in the RB set 0, and does not include a resource in a guard band adjacent to the RB set. For another example, the COT 2 shown in FIG. 3 includes resources in the RB set 1 and the RB set 2, and also includes a resource in a guard band between the RB set 1 and the RB set 2.

8. OCB requirement

A nominal channel bandwidth is a widest frequency band allocated to a single channel, including a guard band. An occupied channel bandwidth (Occupied Channel Bandwidth) is a bandwidth that includes 99% of a signal power. A nominal channel bandwidth of a single operating channel is 20 MHz. The occupied channel bandwidth needs to be between 80% and 100% of the nominal channel bandwidth. For a terminal apparatus with a plurality of transmit chains (transmit chains), each transmit chain needs to meet this requirement. The occupied channel bandwidth may vary with a time/payload. During a channel occupancy time (COT, Channel Occupancy Time), the terminal apparatus may temporarily perform transmission in a channel bandwidth lower than 80% of the nominal channel bandwidth, and a minimum transmission bandwidth is 2 MHz.

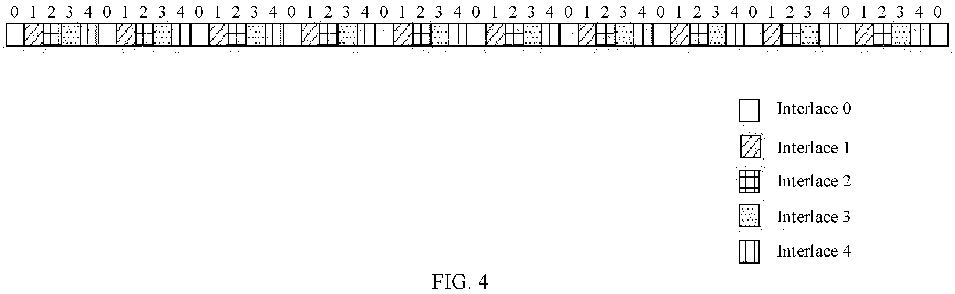

Interlace transmission is used to meet the OCB requirement. Using a 20 MHz bandwidth and a 30 KHz SCS as an example, a transmission bandwidth is 51 RBs. If one subchannel includes 10 RBs, there are five subchannels (one remaining RB is idle). If the terminal apparatus performs sending on one subchannel, a bandwidth of about 4 MHz is occupied, which does not meet the OCB requirement that "the occupied channel bandwidth needs to be between 80% and 100% of the nominal channel bandwidth". If the sending is performed in an interlace manner, for example, as shown in FIG. 4, if the sending is performed in an interlace manner with an index of 0, a bandwidth of about 20 MHz, that is, 100% of the nominal bandwidth, is occupied, or if the sending is performed in an interlace manner with an index of 1, a bandwidth of about 18 MHz, that is, about 46/51≈90% of the bandwidth is occupied. Therefore, the OCB requirement can be met.

In this application, two sending manners are described by using the "interlace manner" and the "non-interlace manner". The interlace manner may be understood as that the terminal apparatus performs transmission on non-contiguous RBs or interlace RBs. The non-interlace manner may be understood as that the terminal apparatus performs transmission on contiguous RBs, or the terminal apparatus performs transmission on contiguous frequency domain resources, or the terminal apparatus performs transmission on a subchannel, or the terminal apparatus performs transmission in a form of a subchannel.

9. Interlace (interlace or interlaced resource blocks)

A protocol defines multiple interlaces of resource blocks (multiple interlaces of resource blocks), which are briefly referred to as interlaces below. An interlace m is formed by common resource blocks (CRBs, common resource blocks) {m, M + m, 2M + m, 3M + m, ...}. Herein, M is a quantity of interlaces, and $m \in \{0,1, ..., M\text{-}1\}$. Optionally, a value of M is related to an SCS. For example, when $\mu$=0 (that is, the sub-carrier spacing is 15 KHz), the value of M is 10. For another example, when $\mu$=1 (that is, the sub-carrier spacing is 30 KHz), the value of M is 5.

A relationship between a CRB $n_{\mathrm{CRB}}^{\mu}$ and an interlaced resource block, a BWP i, and an interlace m satisfies:

$$n_{\mathrm{CRB}}^{\mu} = M \times n_{\mathrm{IRB},m}^{\mu} + N_{\mathrm{BWP},i}^{\mathrm{start},\mu} + \left( \left( m - N_{\mathrm{BWP},i}^{\mathrm{start},\mu} \right) \bmod M \right)$$

. Herein, $N_{\mathrm{BWP},i}^{\mathrm{start},\mu}$ represents a common resource block starting from the BWP, and is a quantity of CBRs relative to a common resource block 0. When there is no risk of confusion, an index $\mu$ can be omitted. A terminal apparatus expects that a quantity of common resource blocks in an interlace included in the BWP i is not less than 10. For ease of description, the common resource block CRB may be understood as an RB.

There are two resource allocation manners: a continuous manner and an interlace manner. The interlace may also be denoted as interleaving, interlacing, row-by-row, or comb teeth. One interlace includes N non-contiguous RBs, and a transmission bandwidth includes M interlaces. Optionally, spacings between RBs in the interlace may be the same or different. For example, in one interlace, spacings between RBs may be M RBs. For example, as shown in FIG. 4, a horizontal axis represents frequency domain, with a unit of an RB, and a vertical axis represents time domain, with a unit of a symbol. In a 20 MHz frequency bandwidth, at a 30 KHz subcarrier spacing, there are 51 resource blocks (RB) in total, that is, 51 different grids. In the 51 resource blocks, 10 or 11 equally-spaced resource blocks form one interlace, and there are a total of five interlaces. In addition, the RB may also be referred to as a PRB (physical resource block), that is, a physical resource block.

Using a 20 MHz transmission bandwidth as an example, the table lists a quantity M of interlaces and a quantity N of PRBs in the interlaces. At least one combination of the quantity M of interlaces and the quantity N of RBs in the interlaces may be determined based on a configuration or a preconfiguration.

Table 4 Combinations of the quantity M of interlaces and the quantity N of PRBs in the interlaces in different SCSs in the transmission bandwidth of 20 MHz

| SCS (15 KHz) | | M | N |
|---|---|---|---|
| 15 | Case 1 | 12 | 8or9 |
| | Case 2 | 10 | 10 or 11 |
| | Case 3 | 8 | 13 or 14 |
| 30 | Case 1 | 6 | 8 or 9 |
| | Case 2 | 5 | 10 or 11 |
| | Case 3 | 4 | 12 or 13 |
| 60 | Case 1 | 4 | 6 |
| | Case 2 | 3 | 8 |
| | Case 3 | 2 | 12 |

In this specification, "transmitting, sending, or receiving a PSCCH in an interlace manner" may also be understood as "mapping a PSCCH in an interlace manner" or "decoding a PSCCH in an interlace manner"; and "transmitting, sending, or receiving a PSSCH in an interlace manner" may also be understood as "mapping a PSSCH in an interlace manner" or "decoding a PSSCH in an interlace manner".

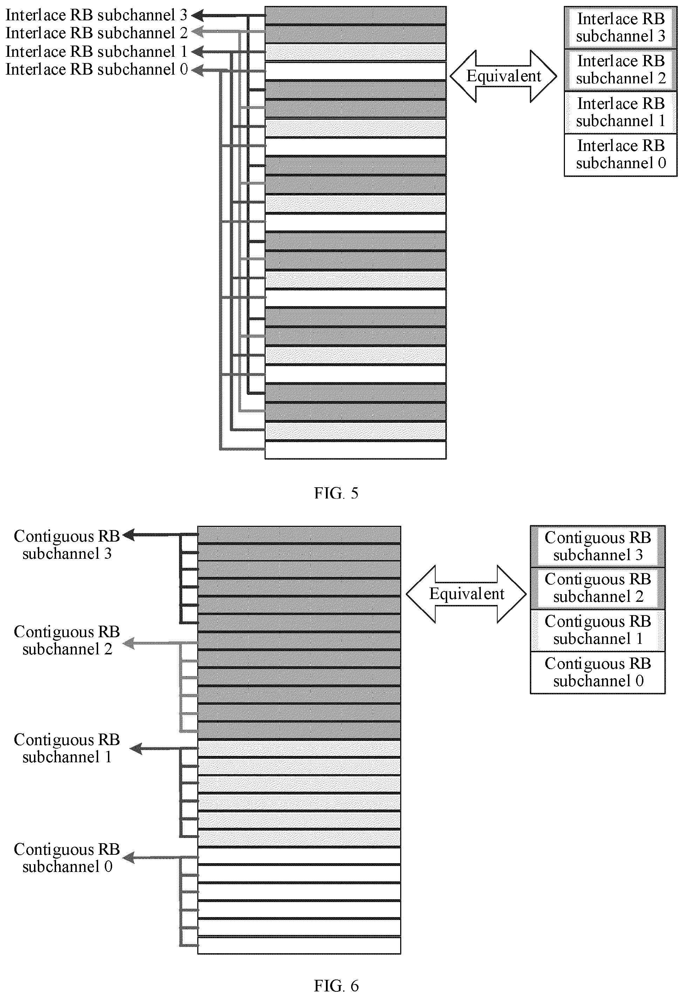

A subchannel may be interlace RB-based (IRB, interlace RB-based), as shown in FIG. 5. The interlace RB-based subchannel may be referred to as an interlace for short. RBs in the interlace are actually spaced apart. In FIG. 5, a horizontal axis represents time domain (for example, one slot or one symbol), and a vertical axis represents frequency domain (for example, one RB set). The RB set includes four interlaces: an interlace 0, an interlace 1, an interlace 2, and an interlace 3, and each interlace includes six RBs. In this application, the right figure in FIG. 6 may represent a same meaning as the left figure in FIG. 5. To be specific, the RB set includes four interlaces, and different UEs perform transmission in a frequency division manner on different interlaces. For example, a first terminal apparatus performs transmission on the interlace 2 and the interlace 3, a second terminal apparatus performs transmission on the interlace 1, and no terminal apparatus performs transmission on the interlace 0.

A subchannel may alternatively contiguous RB-based (CRB, contiguous RB-based), as shown in FIG. 6. In FIG. 6, a horizontal axis represents time domain (for example, one slot or one symbol), and a vertical axis represents frequency domain (for example, one RB set). The RB set includes four contiguous RB subchannels: a subchannel 0, a subchannel 1, a subchannel 2, and a subchannel 3. Each subchannel includes six RBs. In this application, the right figure in FIG. 6 may represent a same meaning as the left figure in FIG. 6. To be specific, the RB set includes four subchannels, and different UEs perform transmission in a frequency division manner on different subchannels. For example, a first terminal apparatus performs transmission on the subchannel 2 and the subchannel 3, a second terminal apparatus performs transmission on the subchannel 1, and no terminal apparatus performs transmission on the subchannel 0.

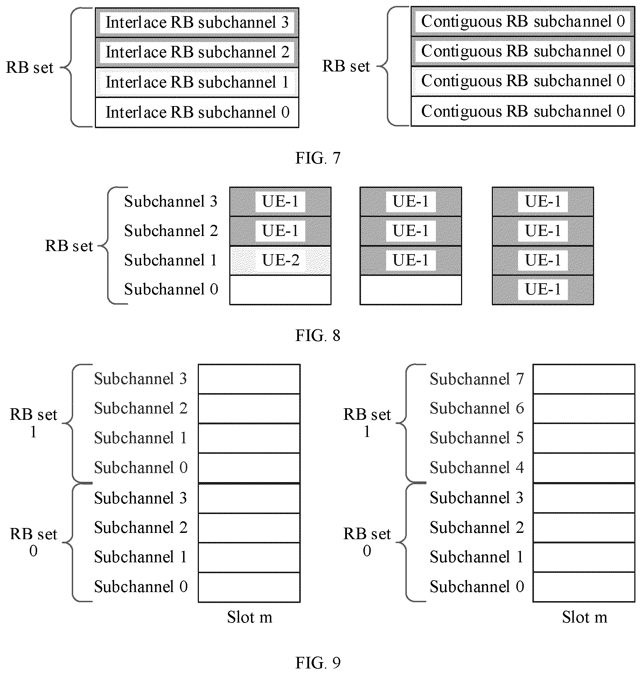

As shown in FIG. 7, the RB set includes N subchannels, where N is a positive integer. The subchannel is a contiguous RB-based subchannel, or the subchannel is an interlace RB-based subchannel. In this application, the subchannel is an interlace RB-based subchannel and/or a contiguous RB-based subchannel.

The RB set may carry transmission of one UE. The transmission of the UE may occupy all or not all subchannels. For example, as shown in the middle figure in FIG. 8, UE-1 performs transmission on a subchannel 1/2/3, and a subchannel 0 does not carry data. For another example, as shown in the right figure in FIG. 8, UE-1 performs transmission on a subchannel 0/1/2/3.

The RB set may carry transmission of a plurality of UEs. For example, as shown in the left figure in FIG. 8, UE-2 performs transmission on a subchannel 1, and UE-1 performs transmission on a subchannel 2 and a subchannel 3, which may also be referred to as the UE-1 and the UE-2 performing transmission in the RB set in an FDM manner.

In addition, in at least two adjacent RB sets, subchannels may be contiguously numbered or may be repeatedly numbered. As shown in the left figure in FIG. 9, subchannel indexes in each of an RB set 0 and an RB set 1 are {0, 1, 2, 3}. However, in the right figure in FIG. 9, subchannel indexes in an RB set 0 are {0, 1, 2, 3}, and subchannel indexes in an RB set 1 are {4, 5, 6, 7}. In a method for contiguously numbering subchannels, an RB set index may be omitted. For example, the subchannel 1 in the RB set 0 may be referred to as a subchannel 1. For another example, the subchannel 4 in the RB set 1 may be referred to as a subchannel 4. In this application, meanings of the two numbering manners are the same. For example, the subchannels {0, 1, 2, 3} in the RB set 1 in the left figure respectively correspond to the subchannels {4, 5, 6, 7} in the RB set 1 in the right figure. In this application, the following uses a repeated numbering manner as an example for description, and contiguous numbering is similar.

10. Time unit and frequency domain unit

A time domain resource includes a symbol (symbol), a slot (slot), a mini-slot (mini-slot), a partial slot (partial slot), a subframe (sub-frame), a radio frame (frame), a sensing slot (sensing slot), and the like.

A frequency domain resource includes a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), and the like.

For ease of description, in this specification, a resource for transmitting a PSCCH/PSSCH is described by using an example in which the time domain resource is a slot, and the frequency domain resource is a subchannel or an interlace.

11. Channel access procedure

Access on an unlicensed spectrum requires listen before talk (listen before talk, LBT). To be specific, a terminal apparatus can perform transmission on a channel only when determining that the channel is idle within a period of time. In NR-U, there are two channel access modes: dynamic (dynamic) channel access and semi-static (semiStatic) channel access. The terminal apparatus determines, based on a configuration or a preconfiguration, to use the dynamic or semi-static channel access method. Dynamic channel access may also be referred to as FBE (Frame Based Equipment) channel access. Alternatively, it may be understood that FBE accesses a channel in the dynamic access mode. Semi-static channel access may also be referred to as LBE (Load Based Equipment) channel access. Alternatively, it may be understood that LBE accesses a channel in the semi-static access mode. In SL-U, the two (or one of) channel access methods are also used.

Dynamic channel access is applicable to a scenario in which an SL terminal and an inter-system terminal perform transmission on an unlicensed spectrum. Dynamic channel access includes two channel access types: Type1 channel access and Type2 channel access. Type1 LBT is backoff-based LBT, in which a backoff time is related to a CAPC, and access can be performed only after a channel is idle for a long time. Type2 channel access includes three types: Type2A, Type2B, and Type2C. In Type2 LBT, the terminal apparatus can access a channel when the channel is idle for only a short time (for example, 16 $\mu$s or 25 $\mu$s). Type2 LBT is mainly used in COT sharing and has a corresponding execution condition.

For example, a terminal apparatus of an initial COT and a terminal apparatus of a shared COT mainly have a receiving and sending relationship.

Type1 channel access (Type1 channel access or Type1 SL channel access)

Type1 channel access may also be referred to as Type1 LBT, and includes two parts: channel sensing with a length of Td (defer duration) and cyclic sensing.

Channel sensing with a length of Td is formed by one Tf=16 $\mu$s and subsequent $m_p$ contiguous $T_{sl}$=9 $\mu$s, that is, $T_d=T_f+m_p*T_{sl}$. A sensing time of Tf is 9 $\mu$s at the beginning, and when all sensing times of Td are idle, cyclic sensing is entered. For a value of $m_p$, refer to Table 5 or Table 6. $CW_{min,p} \leq CW_p \leq CW_{max,p}$ is a contention window (Contention window), and $T_{cot,p}$ is a maximum length of a COT. $CW_{min,p}$ is a minimum value of the contention window when the CAPC is p, and $CW_{max,p}$ is a maximum value of the contention window when the CAPC is p.

Whether the channel is idle or busy is determined based on a channel detection threshold. For example, if received power (received power) is greater than an energy detection threshold $X_{Thresh}$, the channel is busy. For another example, if the received power (received power) is less than the energy detection threshold $X_{Thresh}$, the channel is idle.

Cyclic sensing is a cyclic process based on a counter N, and includes the following steps:

Step 1: Set N to Ninit, where Ninit is a random number ranging from 0 to $CW_p$. Then, go to step 4.

Step 2: If N>0, UE determines to decrease a value of the counter, so that N=N-1.

Step 3: Sense a channel (sense the channel) in a sensing slot (an additional sensing slot duration), and if a sensing result is idle (idle), go to step 4; or otherwise, go to step 5.

Step 4: If N=0, stop; or otherwise, go to step 2.

Step 5: Sense the channel until it is sensed that a sensing slot (sensing slot) in Td is busy (busy), or until all sensing slots in Td are idle.

Step 6: If all the sensing slots in Td are idle, go to step 4; or otherwise, go to step 5.

Before step 1, $CW_{min,p}$ and $CW_{max,p}$ are selected, where $m_p$, $CW_{min,p}$, and $CW_{max,p}$ are determined based on a CAPC (denoted as p) associated with transmission of a network apparatus or a terminal apparatus, as shown in Table 5 or Table 6:

Table 5 Parameter values related to Type1 channel access-Example 1

| CAPC (**p**) | $m_p$ | $CW_{min,p}$ | $CW_{max,p}$ | $T_{cot,p}$ | allowed $CW_p$ sizes |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

Table 6 Parameter values related to Type1 channel access-Example 2

| CAPC (**p**) | $m_p$ | $CW_{min,p}$ | $CW_{max,p}$ | $T_{cot,p}$ | allowed $CW_p$ sizes |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

The network apparatus or the terminal apparatus maintains a value of a contention window CWp, and adjusts a value of CWp according to the following steps before step 1.

For each priority in the table, CWp corresponding to the priority is set to $CW_{min,p}$.

If at least 80% of HARQ-ACK feedback values corresponding to data sent by the network apparatus or the terminal apparatus in a reference subframe k are fed back with a negative acknowledgment (negative acknowledgment, NACK), a value of CWp corresponding to each priority is increased to a next higher allowed value, and is used in step 2; or otherwise, step 1 is performed. The reference subframe k is a start subframe for latest data transmission of the network apparatus or the terminal apparatus on the channel.

Type2 channel access (Type2 channel access or Type2 SL channel access)

Type2 channel access includes three types: Type2A, Type2B, and Type2C. In Type2 LBT, UE can access a channel when the channel is idle for only a short time (for example, 16 µs or 25 µs). Type2 LBT is mainly used in COT sharing and has a corresponding execution condition. For example, UE of an initial COT and UE of a shared COT mainly have a receiving and sending relationship.

- Type2A channel access: The UE transmits data immediately at least after detecting that the channel is idle within a sensing interval $T_{short}$ = 25us. Specifically, $T_{short}$ = 25us is formed by one sensing slot whose Tf is 16 µs and one sensing slot whose $T_{sl}$ is 9 µs. If the two sensing slots are both idle, the channel is considered to be idle.
- Type2B channel access: The UE performs transmission immediately after sensing that the channel is idle in Tf=16 µs. Specifically, channel sensing occurs in last 9 µs of Tf, and a channel sensing time is not less than 5 µs. If it is sensed that the channel is idle for more than 4 µs, it is considered that the channel is idle.
- Type2C channel access: The UE can perform transmission without channel sensing, and a maximum transmission time is 584 µs.

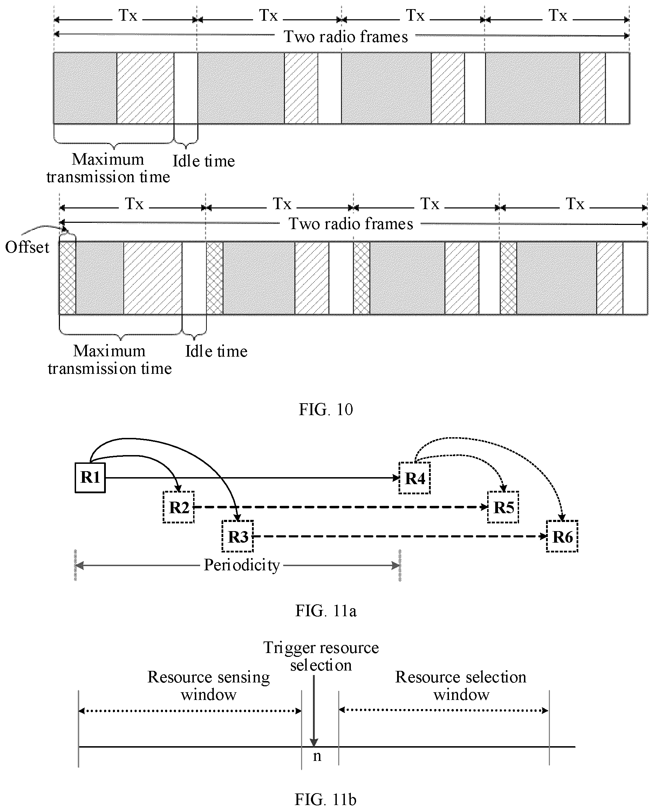

Semi-static channel access is applicable to a scenario in which only an SL terminal performs transmission on an unlicensed spectrum. In semi-static channel access, a base station or a terminal apparatus occupies a channel in every two contiguous radio frames at a period of $T_x$. A time point at which the occupation starts is a position $i \cdot T_x$ or a position $i \cdot T_x$ + offset of a radio frame with an even index. Duration for which the channel is occupied is $0.95T_x$ at most. The last duration $max(0.05T_x, 100us)$ in the period $T_x$ is idle duration (idle duration) of the period. The base station or the terminal apparatus does not perform transmission in the idle duration. $T_x$ is configured or preconfigured, for example, at least any one of {1, 2, 2.5, 4, 5, 10} ms, where $i \in \left\{ 0, 1, ..., \frac{20}{T_x} - 1 \right\}$. FIG. 10 is a diagram of semi-static channel access.

12. Source identifier and destination identifier

A source layer-2 identifier (Source Layer-2 ID or source L2 ID) is 24 bits. The 8 least significant bits (LSB part (8 bits)) of the source layer-2 identifier are referred to as a source layer-1 identifier, that is, a source ID (source ID) indicated in SCI in NR. The 16 most significant bits (MSB part (16 bits)) are referred to as an SRC, and are indicated in a MAC header of a MAC CE. A source identifier in control information may be the source ID indicated in the SCI in NR, the SRC in the MAC header, or the source layer-2 identifier.

A destination layer-2 identifier (Destination Layer-2 ID or destination L2 ID) is 24 bits. The 16 least significant bits (LSB part (16 bits)) of the destination layer-2 identifier are referred to as a destination layer-1 identifier, that is, a destination ID (destination ID) indicated in SCI in NR. The 8 most significant bits (MSB part (8 bits)) are referred to as a DST, and are indicated in a MAC header of a MAC CE. A destination identifier in the control information may be a destination ID indicated in the SCI, the DST in the MAC header, or the destination layer-2 identifier.

In addition, in the protocol, the destination may also be generalized. Specifically, for unicast, the destination represents a pair of a source layer-2 identifier and a destination layer-2 identifier, for broadcast and groupcast, the destination represents a destination layer-2 identifier.

13. Resource reservation

(1) In an NR mechanism, three fields in sidelink control information (SCI): a frequency domain resource assignment (Frequency resource assignment) field, a time domain resource assignment (Time resource assignment) field, and a resource reservation period (Resource reservation period) field may indicate resource reservation for retransmission and/or periodic transmission. For example, the SCI indicates three resources, and the SCI may indicate time domain information, frequency domain information, and subchannel information of the three resources. The 1st resource is a resource at a location at which a PSCCH/PSSCH is currently sent, and the last two resources are resources reserved for retransmission. As shown in FIG. 11a, a terminal apparatus detects SCI (represented by a solid line) on an R1 resource, and reserves a resource (represented by a dashed line) to be used for resource transmission. The two fields, namely, the time domain resource assignment field and the frequency domain resource assignment field, in the SCI indicate three resources: R1, R2, and R3 (Nmax=3), where R2 and R3 are reserved resources for retransmission. The reservation period (or reservation interval) field in the SCI indicates one resource: R4, where R4 is a resource reserved for a period of R1. Because frequency domain resources reserved for a period are the same, and time domain resources are an integer multiple of the period, it is equivalent to that R5 is reserved for a period of R2, and R6 is reserved for a period of R3. That is, although R4 is not used for sidelink transmission when SCI on R1 is detected, it may be considered that R5 and R6 are reserved for R4. The foregoing process is referred to as chain reservation. In embodiments of this application, the "resource indicated by the SCI" may be a resource for currently sending the PSCCH/PSSCH, a reserved resource for retransmission, or a resource reserved for a period.

(2) In an SL communication mode 2, after triggering resource selection, a terminal apparatus may conditionally exclude, based on SCI of another terminal apparatus received in a resource sensing window, a reserved resource of the SCI in a resource selection window, to obtain remaining candidate resources in the resource selection window, so as to select the reserved resource from the candidate resources. After a resource used for transmission is selected, the reserved resource may be indicated by the SCI. For example, it is assumed that the terminal apparatus triggers resource selection in a slot n. For the resource sensing window and the resource selection window, refer to FIG. 11b.

14. A terminal apparatus performs transmission in M slots of a COT

In NR SL, a time domain unit of a resource selected by the terminal apparatus is a slot. The terminal apparatus may select at least one consecutive or non-contiguous resource.

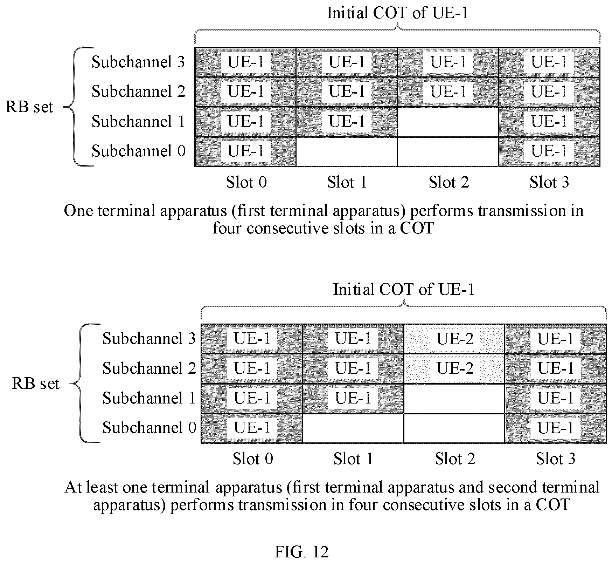

In SL-U, the terminal apparatus needs to perform continuous transmission in the COT. If the transmission is interrupted, LBT is performed again to access a channel. Therefore, a direct manner is that the terminal apparatus selects contiguous resources, and performs transmission on contiguous resources for a period of time. As shown in FIG. 12, the continuous time may be used for transmission of one or more terminal apparatuses.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The communication method provided in embodiments of this application may be applied to various communication systems. For example, the communication method provided in embodiments of this application may be applied to a long term evolution (long term evolution, LTE) system, an NR system, a 5G system, an NTN system, or another future-oriented similar new communication system, for example, a sixth generation (sixth generation, 6G) system. This is not specifically limited in embodiments of this application. In addition, the terms "system" and "network" may be interchanged.

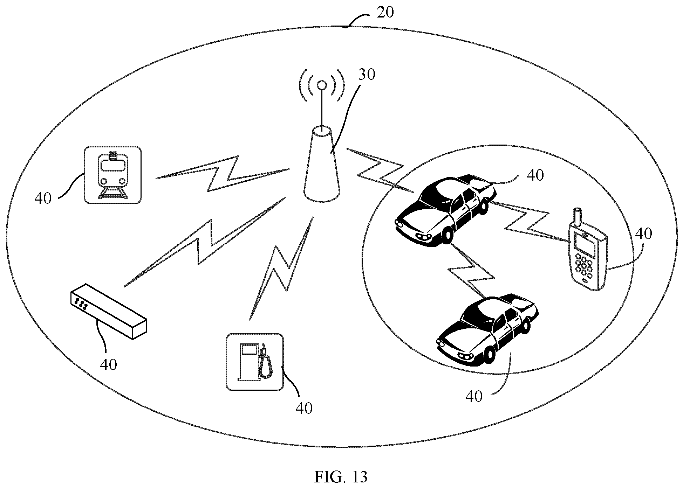

FIG. 13 shows a communication system 20 according to an embodiment of this application. The communication system 20 includes at least one network apparatus 30 and at least one terminal apparatus 40. The terminal apparatus 40 may communicate with the network apparatus 30 in a wireless manner. Optionally, different network apparatuses 30 may communicate with each other. Optionally, different terminal apparatuses 40 may communicate with each other. The network apparatus 30 and/or the terminal apparatus 40 may be at a fixed location, or may be movable.

It should be noted that FIG. 13 is merely a diagram. Although not shown, another network device may be further included in the communication system 20. For example, the communication system 20 may further include one or more of a core network (core network, CN) device, a wireless relay device, and a wireless backhaul device. This is not specifically limited herein. The network apparatus may be connected to the core network device in a wireless or wired manner. The core network device and the network apparatus 30 may be different independent physical devices, or functions of the core network device and logical functions of the network apparatus 30 may be integrated into a same physical device, or some functions of the core network device and some functions of the network apparatus 30 may be integrated into one physical device. This is not specifically limited in embodiments of this application.

Optionally, the network apparatus in embodiments of this application is a device that connects the terminal apparatus to a wireless network. The network apparatus in embodiments of this application may include base stations (base station) in various forms, for example, may be a macro base station, a micro base station (also referred to as a small cell), a relay station, an access point, a transmission point (transmission point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that undertakes a base station function in device-to-device (Device-to-Device, D2D), vehicle-to-everything (vehicle-to-everything, V2X), or machine-to-machine (machine-to-machine, M2M) communication, or the like; may be a network apparatus in an NTN communication system, that is, may be deployed on a high altitude platform station or a satellite; or may be a module or a unit that completes some functions of a base station, for example, may be a central unit (central unit, CU) or a distributed unit (distributed unit, DU) in a cloud radio access network (cloud radio access network, C-RAN) system. A specific technology and a specific device form used by the network apparatus are not limited in embodiments of this application. All or some functions of the network apparatus in this application may alternatively be implemented by using a software function running on hardware, or may be implemented by using a virtualization function instantiated on a platform (for example, a cloud platform). In this application, unless otherwise specified, the network apparatus is a radio access network (radio access network, RAN) device.

Optionally, the terminal apparatus in embodiments of this application may be a device having a wireless transceiver function, and may also be referred to as a terminal (terminal). The terminal apparatus may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication apparatus, a user agent, a user apparatus, or the like. The terminal apparatus may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital processing (personal digital assistant, PDA), a handheld device with a wireless communication function, a computing device or another processing device connected to a wireless modem, a vehicle-mounted device, a communication apparatus mounted on a high-altitude aircraft, a wearable device, an uncrewed aerial vehicle, a robot, an intelligent point of sale (point of sale, POS) machine, a machine type communication apparatus, a terminal apparatus in D2D, a terminal apparatus in V2X, a terminal apparatus in virtual reality (virtual reality, VR), a terminal apparatus in augmented reality (augmented reality, AR), a wireless terminal in industrial control (industrial control), a wireless terminal in self-driving (self-driving), a wireless terminal in telemedicine (remote medical), a wireless terminal in smart grid (smart grid), a wireless terminal in transportation security (transportation safety), a wireless terminal in smart city (smart city), a wireless terminal in smart home (smart home), a terminal device in a future communication network, or the like. A specific technology and a specific device form used by the terminal apparatus are not limited in embodiments of this application. All or some functions of the terminal apparatus in this application may alternatively be implemented by using a software function running on hardware, or may be implemented by using a virtualization function instantiated on a platform (for example, a cloud platform).

Optionally, in embodiments of this application, the network terminal and the terminal terminal may be deployed on land, including an indoor device, an outdoor device, a handheld device, or a vehicle-mounted device; may be deployed on water; or may be deployed on an airplane, a balloon, and a satellite in the air. Application scenarios of the network apparatus and the terminal apparatus are not limited in embodiments of this application.

Optionally, the network apparatus and the terminal apparatus in embodiments of this application may communicate with each other by using a licensed spectrum, may communicate with each other by using an unlicensed spectrum, or may communicate with each other by using both a licensed spectrum and an unlicensed spectrum. The network apparatus and the terminal apparatus may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network apparatus and the terminal apparatus is not limited in embodiments of this application.

Optionally, the network apparatus and the terminal apparatus in embodiments of this application may also be referred to as communication apparatuses, and each may be a general-purpose device or a dedicated device. This is not specifically limited in embodiments of this application.

Optionally, the first terminal apparatus, the second terminal apparatus, or the network apparatus in embodiments of this application may also be referred to as a communication apparatus, and may be a general-purpose device or a dedicated device. This is not specifically limited in embodiments of this application.

Optionally, related functions of the first terminal apparatus, the second terminal apparatus, or the network apparatus in embodiments of this application may be implemented by one device, or may be implemented by a plurality of devices together, or may be implemented by one or more function modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

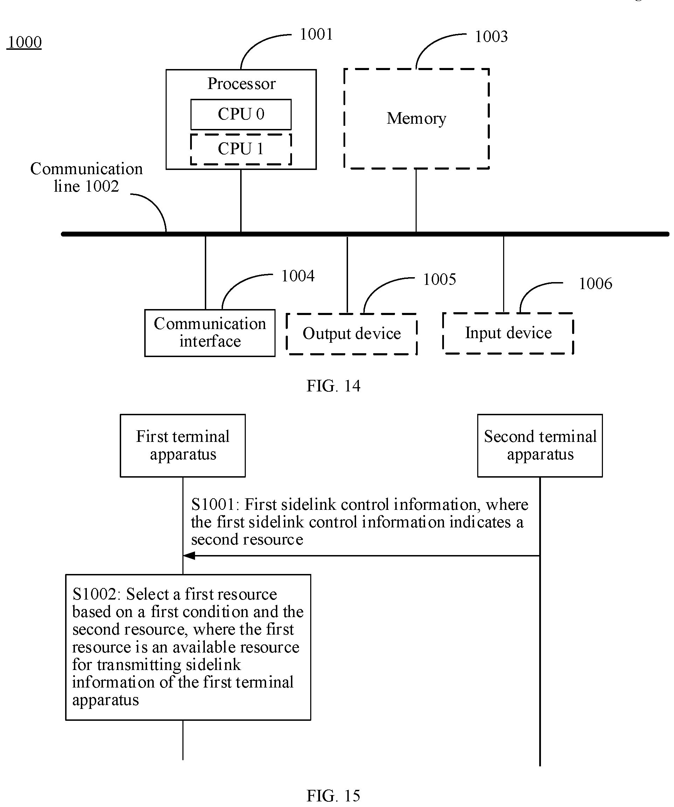

For example, related functions of the first terminal apparatus, the second terminal apparatus, or the network apparatus in embodiments of this application may be implemented by a communication apparatus 1000 in FIG. 14. FIG. 14 is a diagram of a structure of a communication apparatus 1000 according to an embodiment of this application. The communication apparatus 1000 includes one or more processors 1001, a communication line 1002, and at least one communication interface (a communication interface 1004 and one processor 1001 are merely used as an example in FIG. 14 for description), and optionally, may further include a memory 1003.

The processor 1001 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 1002 may include a path for connecting different components.

The communication interface 1004 may be a transceiver module, configured to communicate with another device or a communication network, such as the Ethernet, a RAN, or a wireless local area network (wireless local area network, WLAN). For example, the transceiver module may be an apparatus such as a transceiver or a transceiver. Optionally, the communication interface 1004 may alternatively be a transceiver circuit located in the processor 1001, and is configured to implement signal input and signal output of the processor.

The memory 1003 may be an apparatus with a storage function. For example, the memory 1003 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently and is connected to the processor through the communication line 1002. The memory may alternatively be integrated with the processor.

The memory 1003 is configured to store computer-executable instructions for executing the solutions of this application, and the processor 1001 controls the execution. The processor 1001 is configured to execute the computer-executable instructions stored in the memory 1003, to implement the communication method provided in embodiments of this application.

Alternatively, optionally, in embodiments of this application, the processor 1001 may perform processing related functions in a communication method provided in the following embodiment in this application, and the communication interface 1004 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 1001 may include one or more CPUs such as a CPU 0 and a CPU 1 shown in FIG. 14.

During specific implementation, in an embodiment, the communication apparatus 1000 may include a plurality of processors such as the processor 1001 and a processor 1008 in FIG. 14. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication apparatus 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive user input in a plurality of manners. For example, the input device 1006 may be a mouse, a keyboard, a touchscreen device, or a sensor device.

The communication apparatus 1000 may also be referred to as a communication apparatus sometimes, and may be a general-purpose device or a dedicated device. For example, the communication apparatus 1000 may be a desktop computer, a portable computer, a network server, a palmtop computer (personal digital assistant, PDA), a mobile phone, a tablet computer, a wireless terminal apparatus, an embedded device, the foregoing terminal apparatus, the foregoing network apparatus, or a device having a structure similar to that in FIG. 14. A type of the communication apparatus 1000 is not limited in this embodiment of this application.

The following describes in detail a resource selection method provided in embodiments of this application with reference to FIG. 1 to FIG. 14.

In embodiments of this application, if a network apparatus or a terminal apparatus accesses a channel based on Type1 LBT, a COT obtained after the channel is accessed may be referred to as an initial COT (or referred to as a created COT or the like, and a specific name is not limited).

In embodiments of this application, if the terminal apparatus reserves a time-frequency resource, and expects to access, based on the Type1 LBT, a channel on which the time-frequency resource is located, an estimated initial COT after the channel is accessed may be referred to as a reserved COT.

In embodiments of this application, an initial COT of a terminal apparatus may be shared with one or more other terminal apparatuses. After the initial COT of the terminal apparatus is shared with the another terminal apparatus, the another terminal apparatus may transmit information and/or data on a time-frequency resource that belongs to the COT.

In embodiments of this application, a terminal apparatus that transmits information and/or data in an initial COT of another terminal apparatus may be referred to as a terminal apparatus that shares a COT.

In embodiments of this application, the terminal apparatus that shares the COT may access, based on Type2 LBT, a channel corresponding to the COT.

In embodiments of this application, selecting a resource may also be understood as not excluding a resource. For example, selecting a resource 1 in an RB set 1 may also be understood as not excluding the resource 1 from the RB set 1.

In embodiments of this application, selecting a resource may also be referred to as selecting a resource that overlaps the resource. For example, selecting the resource 1 in the RB set 1 may also be referred to as selecting a resource that overlaps the resource 1 in the RB set.

In embodiments of this application, "sharing a second resource with a second terminal" may also be understood as "sharing a first COT with the second terminal", or may be understood as "sharing a second resource in M consecutive slots with the second terminal". That is, "sharing the second resource the resources in in the M consecutive slots with the second terminal apparatus", "sharing the first COT with the second terminal apparatus", and "sharing the second resource with the second terminal apparatus" may be interchangeably used.

In embodiments of this application, "not sharing a second resource with a second terminal apparatus" may also be understood as "not sharing a first COT with the second terminal", or may be understood as "not sharing a second resource in M consecutive slots with the second terminal". That is, "not sharing the second resource in the resources in the M consecutive slots with the second terminal apparatus", "not sharing the first COT with the second terminal apparatus", and "not sharing the second resource with the second terminal apparatus" may be interchangeably used.

Optionally, in embodiments of this application, overlapping may be full overlapping or partial overlapping. Optionally, the overlapping includes time domain overlapping and/or time-frequency overlapping.

It should be noted that, in the following description of embodiments of this application, "first conditions" that appear for a plurality of times but have different purposes or different content are independent of each other. The "first condition" is an example name provided in embodiments of this application, and does not indicate that a plurality of first conditions appearing in the following are the same or have an association relationship.

It should be noted that, in the following description of embodiments of this application, an example in which a priority value is in inverse proportion to a priority level is used for description. It may be understood that, if the priority value is in direct proportion to the priority level, a value relationship of the priority value in the following description is adaptively reversed, and the communication method in embodiments of this application is still valid. For example, it is assumed that a priority value of a first terminal apparatus is less than a priority value of a second terminal apparatus in the following description. If the priority value is in direct proportion to the priority level, "a priority value of the first terminal apparatus is less than a priority value of the second terminal apparatus" may alternatively be "the priority value of the first terminal apparatus is greater than the priority value of the second terminal apparatus", and vice versa. A priority may be a service priority, a priority indicated by SCI (first-stage SCI and/or second-stage SCI), a CAPC, a priority corresponding to a PSSCH associated with the SCI, a priority of transmitting data, a priority of transmitting a PSSCH, a priority used for selecting a resource, or the like.

The following embodiments of this application may be applied to the following scenarios:

The first terminal apparatus receives first sidelink control information from the second terminal apparatus, where the first sidelink control information indicates a second resource, and/or the first terminal apparatus receives second sidelink control information from a third terminal apparatus, where the second sidelink control information indicates a third resource.

The first terminal apparatus selects a first resource, or the first terminal apparatus selects a first resource and a fifth resource, where the first resource is an available resource for transmitting sidelink information of the first terminal apparatus, and the fifth resource is an available resource for transmitting sidelink information of the second terminal apparatus. The second resource is the fifth resource, or the second resource belongs to the fifth resource.

It may be understood that, when the second resource and the third resource overlap (for example, time-frequency overlapping or time-domain overlapping), or when the second resource and the third resource belong to resources in M consecutive slots, or when the first resource and the second resource belong to resources in M consecutive slots, or when the first resource and the third resource belong to resources in M consecutive slots, the first terminal apparatus shares the second resource (or the fifth resource) with the second terminal apparatus, the second terminal apparatus may perform transmission on the second resource (or the fifth resource), but the third terminal apparatus cannot perform transmission on the third resource. Alternatively, the first terminal apparatus does not share the second resource (or the fifth resource) with the second terminal apparatus, and the first terminal apparatus may perform transmission (for example, time-frequency overlapping or time-domain overlapping) on the first resource that overlaps the second resource (or the fifth resource), but the second terminal apparatus cannot perform transmission on the second resource. Alternatively, the first terminal apparatus does not perform transmission on the first resource that overlaps the third resource, and/or the first terminal apparatus does not share the second resource (or the fifth resource) with the second terminal apparatus, and the third terminal apparatus may perform transmission on the third resource.

Optionally, the first terminal apparatus may determine, according to at least one of the following rules, whether to share the second resource with the second terminal apparatus:

Rule 1: If a service of the second terminal apparatus is more important than a service of the first terminal apparatus, and/or the service of the second terminal apparatus is more important than a service of the third terminal apparatus, the first terminal apparatus may share the second resource with the second terminal apparatus, so that the second terminal apparatus can transmit the sidelink information on the second resource.

Rule 2: If a service of the third terminal apparatus is more important than a service of the first terminal apparatus, and/or the service of the third terminal apparatus is more important than a service of the second terminal apparatus, the first terminal apparatus may not share the second resource with the second terminal apparatus, so that the third terminal apparatus can transmit the sidelink information on the third resource.

Rule 3: If the second terminal apparatus is easier to access a channel than the first terminal apparatus, and/or the second terminal apparatus is easier to access the channel than the third terminal apparatus, the first terminal apparatus may share the second resource with the second terminal apparatus, so that the second terminal apparatus can transmit the sidelink information on the second resource.

Rule 4: If the third terminal apparatus is easier to access a channel than the first terminal apparatus, and/or the third terminal apparatus is easier to access the channel than the second terminal apparatus, the first terminal apparatus may not share the second resource with the second terminal apparatus, so that the third terminal apparatus can transmit the sidelink information on the third resource.

It should be noted that a scenario to which the foregoing embodiments of this application may be applied and a rule for determining, by the first terminal apparatus, whether to share the second resource with the second terminal apparatus may be applied to any embodiment of this application described below.

The following describes embodiments of this application in detail. As shown in FIG. 15, an embodiment of this application provides a communication method, including the following steps.

S1001: Receive first sidelink control information from a second terminal apparatus, where the first sidelink control information indicates a second resource.

Step S1001 may be performed by a first terminal apparatus.

S1002: Select a first resource based on a first condition and the second resource. The first resource is an available resource for transmitting sidelink information of the first terminal apparatus.

Step S1002 may be performed by the first terminal apparatus.

The following describes the method by using an example in which the first terminal apparatus performs the method. However, an entity for performing interaction is not limited in this application. Alternatively, the method may be performed by a chip, a chip system, or a processor that supports the first terminal apparatus in implementing the method, or may be a logical module or software that can implement all or some functions of the first terminal apparatus.

For S1001, the second terminal apparatus sends the first sidelink control information, and correspondingly, the first terminal apparatus receives the first sidelink control information sent by the second terminal apparatus. The first terminal apparatus may determine, based on the second resource indicated by the first sidelink control information, that the second resource is reserved by the second terminal apparatus.

Optionally, the first terminal apparatus may receive the first sidelink control information in a resource sensing window of the first terminal apparatus. The second resource indicated by the first sidelink control information may be in a resource selection window of the first terminal apparatus.

Optionally, the first sidelink control information may indicate a time-frequency domain location of the second resource.

Optionally, the first sidelink control information may be existing information indicating a reserved time-frequency resource, for example, SCI, first-stage SCI, or second-stage SCI, or the first sidelink control information may be COT indication information (or COT sharing information, COT structure information, or the like), or the first sidelink control information may be newly defined sidelink information. This is not limited in this application.

Optionally, the first sidelink control information may further indicate at least one of the following information of the second terminal apparatus: a priority value, a CAPC value, a channel access type, a backoff value, and a value of a contention window. Alternatively, it may be further understood that the first sidelink control information may further indicate at least one of the following sidelink information of the second terminal apparatus: a priority value, a CAPC value, a channel access type, a backoff value, and a value of a contention window. The foregoing information is described below with reference to the first condition, and is not described herein.

For S1002, the first terminal apparatus may select one or more first resources when the first condition is met. The selecting a first resource may be understood as: selecting the first resource from resources including the second resource, or selecting the first resource from resources excluding the second resource. For example, the second resource is excluded from available resources for the sidelink information of the first terminal apparatus. For another example, the second resource is selected as an available resource for transmitting the sidelink information of the first terminal apparatus. For another example, the second resource is selected as an available resource for transmitting the sidelink information of the second terminal apparatus.

It may be understood that the first resource is an available resource for transmitting the sidelink information of the first terminal apparatus, and the first terminal apparatus selects, from a plurality of available resources, a resource for transmitting the sidelink information of the first terminal apparatus. In other words, it does not indicate that a resource in a slot in which the first resource is located is finally used to transmit the sidelink information of the first terminal apparatus. Alternatively, the first resource includes a resource for transmitting the sidelink information of the first terminal apparatus.

Optionally, the first terminal apparatus may select the first resource in the resource selection window. Specifically, the first terminal apparatus may select the first resource from resources included in the resource selection window.

Optionally, when the first condition is met, the first terminal apparatus may select the first resource from resources including the second resource. The first condition may include at least one of the following:

(1) A channel access type of the second terminal apparatus is a first type, and the first type is type 1 (Type1) or type 2 (Type2).

The channel access type of the second terminal apparatus being Type1 may be understood as that the second terminal apparatus expects to perform Type1 LBT on a channel on which the second resource is located, to access the channel on which the second resource is located.

It may be understood that, if the LBT succeeds, the second terminal apparatus may access the channel on which the second resource is located, and transmit information and/or data on the second resource. The second resource is a resource in an initial COT or a reserved COT of the second terminal apparatus.

The channel access type of the second terminal apparatus being Type2 may be understood as that the second terminal apparatus expects to perform Type2 LBT (which may be specifically Type2A, Type2B, or Type2C) on a channel on which the second resource is located, to access the channel on which the second resource is located.

It may be understood that, if the LBT succeeds, the second terminal apparatus may access the channel on which the second resource is located, and transmit information and/or data on the second resource.

Optionally, because the second terminal apparatus expects to access, based on the Type2 LBT, the channel on which the second resource is located, the second resource may be a resource in an initial COT or a reserved COT of another terminal apparatus. For example, the second resource is a resource in an initial COT or a reserved COT of the first terminal apparatus.

Optionally, the channel access type of the second terminal apparatus may be indicated by the first sidelink control information of the second terminal apparatus. For example, a first field in the first sidelink control information indicates that the channel access type is one of Type1 or Type2, or the first field indicates that the channel access type is one of Type1, Type2A, Type2B, or Type2C. Alternatively, the channel access type of the second terminal apparatus may be implicitly associated with the first sidelink control information of the second terminal apparatus. For example, the first sidelink control information indicates a first value, and the first value indicates that the channel access type is Type1. For another example, the first sidelink control information indicates a second value, and the second value indicates that the channel access type is Type2.

(2) The second terminal apparatus is a receiving apparatus of the first terminal apparatus.

In a possible implementation, when at least one of the following cases is met, the first terminal apparatus may determine that the second terminal apparatus is a receiving apparatus of the first terminal apparatus. Alternatively, it may be understood that, when at least one of the following cases is met, the second terminal apparatus is a receiving apparatus for data information sent by the first terminal apparatus. Alternatively, it may be understood that, when at least one of the following cases is met, the first terminal apparatus is a sending apparatus of the second terminal apparatus. Alternatively, it may be understood that, when at least one of the following cases is met, the first terminal apparatus is a sending apparatus for data information sent to the second terminal apparatus.

Case 1: A source ID (source ID) indicated in SCI of the first terminal apparatus is the same as X1 LSBs in a second layer-2 destination ID (Destination Layer-2 ID) of the second terminal apparatus. A value of X1 is an integer from 1 to 24, for example, X1=8 or X1=16. For example, assuming that X1=8, the source ID indicated in the SCI of the first terminal apparatus is the same as the 8 least significant bits in the second layer-2 destination ID of the second terminal apparatus.

Case 2: An SRC indicated in a MAC subheader of the first terminal apparatus is the same as X2 MSBs in a second layer-2 destination ID of the second terminal apparatus. A value of X2 is an integer from 1 to 24, for example, X2=8 or X2=16. For example, assuming that X2=16, the SRC (source, source) indicated in the MAC subheader of the first terminal apparatus is the same as the 16 most significant bits in the second layer-2 destination ID of the second terminal apparatus.

Case 3: A destination ID indicated in SCI of the first terminal apparatus is the same as X3 LSBs in a second layer-2 source ID of the second terminal apparatus. A value of X3 is an integer from 1 to 24, for example, X3=8 or X3=16. For example, assuming that X3=16, the destination ID indicated in the SCI of the first terminal apparatus is the same as the 16 least significant bits in the second layer-2 source ID of the second terminal apparatus.

Case 4: A DST indicated in a MAC subheader of the first terminal apparatus is the same as X4 MSBs in a second layer-2 source ID of the second terminal apparatus. A value of X4 is an integer from 1 to 24, for example, X4=8 or X4=16. For example, assuming that X4=8, the DST indicated in the MAC subheader of the first terminal apparatus is the same as the 8 most significant bits in the second layer-2 source ID of the second terminal apparatus.

Optionally, a source ID indicated in SCI of the first terminal apparatus is X5 LSBs in a first layer-2 source ID of the first terminal apparatus, where a value of X5 is an integer from 1 to 24, for example, X5=8 or X5=16. For example, assuming that X5=8, the source ID indicated in the SCI of the first terminal apparatus is the 8 least significant bits in the first layer-2 source ID of the first terminal apparatus.

Optionally, an SRC indicated in a MAC subheader of the first terminal apparatus may be X6 MSBs in a first layer-2 source ID of the first terminal apparatus, where a value of X6 is an integer from 1 to 24, for example, X6=8 or X6=16. For example, assuming that X6=16, the SRC indicated in the MAC subheader of the first terminal apparatus is the 16 MSBs in the first layer-2 source ID of the first terminal apparatus.

Optionally, X5+X6=24.

Optionally, a destination ID indicated in SCI of the first terminal apparatus may be X7 LSBs in a first layer-2 destination ID of the first terminal apparatus. A value of X7 is an integer from 1 to 24, for example, X7=8 or X7=16. For example, assuming that X7=16, the destination ID indicated in the SCI of the first terminal apparatus is the 16 least significant bits in the first layer-2 destination ID of the first terminal apparatus.

Optionally, a destination (destination, DST) indicated in a MAC subheader of the first terminal apparatus may be X8 MSBs in a first layer-2 destination ID of the first terminal apparatus. A value of X8 is an integer from 1 to 24, for example, X8=8 or X8=16. For example, assuming that X8=8, the DST indicated in the MAC subheader of the first terminal apparatus is the 8 most significant bits in the first layer-2 destination ID of the first terminal apparatus.

Optionally, X7+X8=24.

Further, when any one of the foregoing cases 1 to 4 is met, a data transmission type indicated in the SCI of the first terminal apparatus may be unicast.

Optionally, the SCI of the first terminal apparatus may be, for example, any one of COT indication information, COT sharing information, and COT structure information. The COT indication information, the COT sharing information, or the COT structure information may indicate whether to share a COT with another terminal apparatus. For example, the first terminal apparatus sends COT indication information to the second terminal apparatus, to indicate to share the second resource in the COT with the second terminal apparatus for use.

Optionally, the first resource carries the SCI of the first terminal apparatus and/or the MAC subheader of the first terminal apparatus; or the first resource in resources in M consecutive slots carries the SCI of the first terminal apparatus and/or the MAC subheader of the first terminal apparatus. The resources in the M consecutive slots include the available resource for transmitting the sidelink information of the first terminal apparatus. Details are described below.

In a possible implementation, when at least one of the following cases is met, the first terminal apparatus may determine that the second terminal apparatus is a receiving apparatus of the first terminal apparatus. Alternatively, it may be further understood that, when at least one of the following cases is met, the second terminal apparatus is a receiving apparatus for data information sent by the first terminal apparatus. Alternatively, it may be further understood that, when at least one of the following cases is met, the first terminal apparatus is a sending apparatus of the second terminal apparatus. Alternatively, it may be further understood that, when at least one of the following cases is met, the first terminal apparatus is a sending apparatus for data information sent to the second terminal apparatus.

Case 5: A destination ID indicated in SCI of the first terminal apparatus is the same as X3 LSBs in a second layer-2 destination ID of the second terminal apparatus. A value of X3 is an integer from 1 to 24, for example, X3=8 or X3=16. For example, assuming that X3=16, the destination ID indicated in the SCI of the first terminal apparatus is the same as the 16 least significant bits in the second layer-2 destination ID of the second terminal apparatus.

Case 6: A DST indicated in a MAC subheader of the first terminal apparatus is the same as X4 MSBs in a second layer-2 destination ID of the second terminal apparatus. A value of X4 is an integer from 1 to 24, for example, X4=8 or X4=16. For example, assuming that X4=8, the DST indicated in the MAC subheader of the first terminal apparatus is the same as the 8 most significant bits in the second layer-2 destination ID of the second terminal apparatus.

Optionally, a destination ID indicated in SCI of the first terminal apparatus is X7 LSBs in a first layer-2 destination ID of the first terminal apparatus. A value of X7 is an integer from 1 to 24, for example, X7=8 or X7=16. For example, assuming that X7=16, the destination ID indicated in the SCI of the first terminal apparatus is the 16 least significant bits in the first layer-2 destination ID of the first terminal apparatus.

Optionally, a DST indicated in a MAC subheader of the first terminal apparatus is X8 MSBs in a first layer-2 destination ID of the first terminal apparatus. A value of X8 is an integer from 1 to 24, for example, X8=8 or X8=16. For example, assuming that X8=8, the DST indicated in the MAC subheader of the first terminal apparatus is the 8 most significant bits in the first layer-2 destination ID of the first terminal apparatus.

Optionally, X7+X8=24.

Further, when at least one of the foregoing cases 5 and 6 is met, a data transmission type indicated in the SCI of the first terminal apparatus may be groupcast or broadcast.

Optionally, the SCI of the first terminal apparatus may be, for example, any one of COT indication information, COT sharing information, and COT structure information.

Optionally, the first resource carries the SCI of the first terminal apparatus and/or the MAC subheader of the first terminal apparatus; or the first resource in M consecutive slots carries the SCI of the first terminal apparatus and/or the MAC subheader of the first terminal apparatus.

In a possible implementation, when at least one of the following cases is met, the first terminal apparatus may determine that the second terminal apparatus is a receiving apparatus of the first terminal apparatus. Alternatively, it may be further understood that, when at least one of the following cases is met, the second terminal apparatus is a receiving apparatus for control information sent by the first terminal apparatus. Alternatively, when at least one of the following cases is met, the first terminal apparatus is a sending apparatus of the second terminal apparatus. Alternatively, when at least one of the following cases is met, the first terminal apparatus is a sending apparatus for control information sent to the second terminal apparatus.

Case 7: The second terminal apparatus decodes SCI of the first terminal apparatus, where the SCI includes first-stage SCI and/or second-stage SCI.

Case 8: The second terminal apparatus decodes first indication information of the first terminal apparatus. Optionally, the first indication information may be indicated by SCI of the first terminal apparatus. Optionally, the first indication information may be at least one of COT sharing information, COT indication information, and COT structure information.

Decoding may also be understood as receiving or monitoring.

(3) The first terminal apparatus is a receiving apparatus of the second terminal apparatus.

In a possible implementation, when at least one of the following cases is met, the first terminal apparatus may determine that the first terminal apparatus is a receiving apparatus of the second terminal apparatus. Alternatively, it may be further understood that, when at least one of the following cases is met, the first terminal apparatus is a receiving apparatus for data information sent by the second terminal apparatus. Alternatively, when at least one of the following cases is met, the second terminal apparatus is a sending apparatus of the first terminal apparatus. Alternatively, when at least one of the following cases is met, the second terminal apparatus is a sending apparatus for data information sent to the first terminal apparatus.

Case 9: A source ID indicated in SCI of the second terminal apparatus is the same as X1 LSBs in a first layer-2 destination ID of the first terminal apparatus. A value of X1 is an integer from 1 to 24, for example, X1=8 or X1=16. For details, refer to case 1.

Case 10: An SRC indicated in a MAC subheader of the second terminal apparatus is the same as X2 MSBs in a first layer-2 destination ID of the first terminal apparatus. A value of X2 is an integer from 1 to 24, for example, X2=8 or X2=16. For details, refer to case 2.

Case 11: A destination ID indicated in SCI of the second terminal apparatus is the same as X3 LSBs in a first layer-2 source ID of the first terminal apparatus. A value of X3 is an integer from 1 to 24, for example, X3=8 or X3=16. For details, refer to case 3.

Case 12: A DST indicated in a MAC subheader of the second terminal apparatus is the same as X4 MSBs in a first layer-2 source ID of the first terminal apparatus. A value of X4 is an integer from 1 to 24, for example, X4=8 or X4=16. For details, refer to case 4.

Optionally, a source ID indicated in SCI of the second terminal apparatus is X5 LSBs in a second layer-2 source ID of the second terminal apparatus. A value of X5 is an integer from 1 to 24, for example, X5=8 or X5=16. For details, refer to the foregoing description of X5.

Optionally, an SRC indicated in a MAC subheader of the second terminal apparatus is X6 MSBs in a second layer-2 source ID of the second terminal apparatus. A value of X6 is an integer from 1 to 24, for example, X6=8 or X6=16. For details, refer to the foregoing description of X6.

Optionally, X5+X6=24.

Optionally, a destination ID indicated in SCI of the second terminal apparatus is X7 LSBs in a second layer-2 destination ID of the second terminal apparatus. A value of X7 is an integer from 1 to 24, for example, X7=8 or X7=16. For details, refer to the foregoing description of X7.

Optionally, a DST indicated in a MAC subheader of the second terminal apparatus is X8 MSBs in a second layer-2 destination ID of the second terminal apparatus. A value of X8 is an integer from 1 to 24, for example, X8=8 or X8=16. For details, refer to the foregoing description of X8.

Optionally, X7+X8=24.

Further, when at least one of the foregoing cases 7 to 12 is met, a data transmission type indicated in the SCI of the second terminal apparatus may be unicast.

In a possible implementation, when at least one of the following cases is met, the first terminal apparatus may determine that the first terminal apparatus is a receiving apparatus of the second terminal apparatus. Alternatively, it may be further understood that, when at least one of the following cases is met, the first terminal apparatus is a receiving apparatus for data information sent by the second terminal apparatus. Alternatively, when at least one of the following cases is met, the second terminal apparatus is a sending apparatus of the first terminal apparatus. Alternatively, when at least one of the following cases is met, the second terminal apparatus is a sending apparatus for data information sent to the first terminal apparatus.

Case 13: A destination ID indicated in SCI of the second terminal apparatus is the same as X3 LSBs in a first layer-2 destination ID of the first terminal apparatus. A value of X3 is an integer from 1 to 24, for example, X3=8 or X3=16. For details, refer to case 3.

Case 14: A DST indicated in a MAC subheader of the second terminal apparatus is different from X4 MSBs in a first layer-2 destination ID of the first terminal apparatus. A value of X4 is an integer from 1 to 24, for example, X4=8 or X4=16. For details, refer to case 4.

Optionally, a destination ID indicated in SCI of the second terminal apparatus is X7 LSBs in a second layer-2 destination ID of the second terminal apparatus. A value of X7 is an integer from 1 to 24, for example, X7=8 or X7=16. For details, refer to the foregoing description of X7.

Optionally, a DST indicated in a MAC subheader of the second terminal apparatus is X8 MSBs in a second layer-2 destination ID of the second terminal apparatus. A value of X8 is an integer from 1 to 24, for example, X8=8 or X8=16. For details, refer to the foregoing description of X8.

Optionally, X7+X8=24.

Further, when at least one of the foregoing cases 13 and 14 is met, a cast type indicated in the SCI of the second terminal apparatus is groupcast or broadcast.

Optionally, a MAC subheader of the second terminal apparatus is carried by a second PSSCH, and SCI of the second terminal apparatus is carried by a second PSCCH. The second PSCCH schedules the second PSSCH. The second PSCCH and the second PSSCH are sidelink information of the second terminal apparatus.

In a possible implementation, when at least one of the following cases is met, the first terminal apparatus may determine that the first terminal apparatus is a receiving apparatus of the second terminal apparatus. Alternatively, it may be further understood that, when at least one of the following cases is met, the first terminal apparatus is a receiving apparatus for control information sent by the second terminal apparatus. Alternatively, it may be further understood that, when at least one of the following cases is met, the second terminal apparatus is a sending apparatus of the first terminal apparatus. Alternatively, it may be further understood that, when at least one of the following cases is met, the second terminal apparatus is a sending apparatus for control information sent to the first terminal apparatus.

Case 15: The first terminal apparatus decodes SCI of the second terminal apparatus, where the SCI includes first-stage SCI and/or second-stage SCI.

Decoding may also be understood as receiving or monitoring.

(4) A CAPC value of the second terminal apparatus is less than a CAPC value of the first terminal apparatus.

The CAPC value of the first terminal apparatus is used by the first terminal apparatus to perform channel access, for example, Type1 channel access. The CAPC value of the second terminal apparatus is used by the second terminal apparatus to perform channel access, for example, Type1 channel access.

Optionally, the CAPC value of the first terminal apparatus may be indicated by a network apparatus to the first terminal apparatus; or the CAPC value of the first terminal apparatus is preconfigured for the first terminal apparatus; or the CAPC value of the first terminal apparatus is indicated by a higher layer of the first terminal apparatus. Optionally, the CAPC value of the first terminal apparatus is related to the sidelink information of the first terminal apparatus.

Optionally, the first terminal apparatus may indicate the CAPC value of the first terminal apparatus by using SCI, and the second terminal apparatus may determine the CAPC value of the first terminal apparatus based on the SCI of the first terminal apparatus. The SCI includes first-stage SCI and/or second-stage SCI.

Optionally, the CAPC value of the second terminal apparatus may be indicated by a network apparatus to the second terminal apparatus; or the CAPC value of the second terminal apparatus is preconfigured for the second terminal apparatus; or the CAPC value of the second terminal apparatus is indicated by a higher layer of the second terminal apparatus. Optionally, the CAPC value of the second terminal apparatus is related to the sidelink information of the second terminal apparatus.

Optionally, the second terminal apparatus may indicate the CAPC value of the second terminal apparatus by using SCI, and the first terminal apparatus may determine the CAPC of the second terminal apparatus based on the SCI of the second terminal apparatus. The SCI includes first-stage SCI and/or second-stage SCI.

(5) A CAPC value of the second terminal apparatus is less than a first CAPC threshold.

The CAPC value of the second terminal apparatus is used by the second terminal apparatus to perform channel access, for example, Type1 channel access.

Optionally, the first CAPC threshold may be preconfigured in the first terminal apparatus. Alternatively, the first CAPC threshold may be indicated by a network apparatus to the first terminal apparatus.

Optionally, the first CAPC threshold may be preconfigured in the second terminal apparatus. Alternatively, the first CAPC threshold may be indicated by a network apparatus to the second terminal apparatus.

Optionally, the CAPC value of the second terminal apparatus may be indicated by a network apparatus to the second terminal apparatus; or the CAPC value of the second terminal apparatus is preconfigured for the second terminal apparatus; or the CAPC value of the second terminal apparatus is indicated by a higher layer of the second terminal apparatus. Optionally, the CAPC value of the second terminal apparatus is related to the sidelink information of the second terminal apparatus.

Optionally, the second terminal apparatus may indicate the CAPC value of the second terminal apparatus by using SCI, and the first terminal apparatus may determine the CAPC of the second terminal apparatus based on the SCI of the second terminal apparatus. The SCI includes first-stage SCI and/or second-stage SCI.

(6) A quantity of RB sets corresponding to the second resource is less than or equal to a quantity of first RB sets, and the quantity of first RB sets is a quantity of RB sets of a resource reserved by the first terminal apparatus.

The quantity of first RB sets may also be understood as a quantity of channels used by the first terminal apparatus to perform multichannel access on a selected resource, or a quantity of RB sets corresponding to an initial COT of the first terminal apparatus, or a quantity of RB sets of a resource selected by the first terminal apparatus.

Optionally, the quantity of first RB sets is indicated by a higher layer of the first terminal apparatus.

(7) The second resource belongs to resources in M consecutive slots.

The resources in the M consecutive slots are resources in resources that are selected by the first terminal apparatus and that can be used to transmit the sidelink information of the first terminal apparatus.

The M consecutive slots may also be understood as a first COT. In other words, "M consecutive slots" and "first COT" may be equivalently replaced. The first COT may be an initial COT of the first terminal apparatus, or the first COT may be a COT reserved by the first terminal apparatus, or the first COT may be a COT to be initialized by the first terminal apparatus. The first COT may also be referred to as a COT for short.

The resources in the M consecutive slots include at least one of a COT candidate resource selected by the first terminal apparatus, a resource for transmitting the sidelink information of the first terminal apparatus, a reserved resource of the first terminal apparatus, a first resource, an available resource for transmitting the sidelink information of the first terminal apparatus, and an available resource for transmitting the sidelink information of the second terminal apparatus.

Optionally, that the second resource belongs to resources in M consecutive slots includes: a slot in which the second resource is located belongs to the resources in the M consecutive slots; and/or an RB set in which the second resource is located belongs to the resources in the M consecutive slots; and/or a subchannel in which the second resource is located belongs to the resources in the M consecutive slots.

That the second resource belongs to resources in M consecutive slots may also be understood as that the second resource is a resource in available resources in the M consecutive slots.

That the second resource does not belongs to resources in M consecutive slots may also be understood as that the second resource is not a resource in available resources in the M consecutive slots.

(8) An RSRP measurement value of the second resource is less than or equal to a first RSRP threshold.

The first RSRP threshold may be indicated by a network apparatus to the first terminal apparatus, or the first RSRP threshold may be preconfigured in the first terminal apparatus. Alternatively, the first RSRP threshold may be indicated by a network apparatus to the second terminal apparatus, or the first RSRP threshold may be preconfigured in the second terminal apparatus.

Optionally, the first RSRP threshold may be related to at least any one of a priority of the first terminal apparatus, a CAPC value of the first terminal apparatus, a priority of the second terminal apparatus, and a CAPC value of the second terminal apparatus.

(9) A priority value of the second terminal apparatus is less than a priority value of the first terminal apparatus.

A priority may be a service priority, and the service priority may also be understood as a priority for resource selection, and may be indicated by using sent SCI. For example, a service priority value of the second terminal apparatus may be indicated by using SCI of the second terminal apparatus. A service priority value of the first terminal apparatus may be indicated by using SCI of the first terminal apparatus, or a service priority value of the first terminal apparatus is indicated by a higher layer of the first terminal apparatus.

(10) A priority value of the second terminal apparatus is less than a first priority threshold.

A priority may be a service priority.

Optionally, a first service priority threshold may be indicated by a network apparatus to the first terminal apparatus, or a first service priority threshold may be preconfigured in the first terminal apparatus.

Optionally, a first service priority threshold may be indicated by a network apparatus to the second terminal apparatus, or a first service priority threshold may be preconfigured in the second terminal apparatus.

(11) A CPE length of the second terminal apparatus is greater than or equal to a CPE length of the first terminal apparatus.

The CPE length is a length of CPE in time domain.

Optionally, the CPE length of the second terminal apparatus may be a CPE length before the second resource. Alternatively, the CPE length of the second terminal apparatus may be a CPE length on the second resource.

Optionally, the CPE length of the second terminal apparatus may be determined based on a priority value of the second terminal apparatus; or the CPE length of the second terminal apparatus may be determined based on a CAPC value of the second terminal apparatus; or the CPE length of the second terminal apparatus may be indicated by a higher layer of the second terminal apparatus.

Optionally, the CPE length of the first terminal apparatus may be determined based on a service priority value of the first terminal apparatus; or the CPE length of the first terminal apparatus may be determined based on a CAPC value of the first terminal apparatus; or the CPE length of the first terminal apparatus may be indicated by a higher layer of the first terminal apparatus.

(12) A CPE length of the second terminal apparatus is greater than or equal to a first CPE threshold.

Optionally, the first CPE threshold may be indicated by a network apparatus to the first terminal apparatus, or the first CPE threshold may be preconfigured in the first terminal apparatus.

Optionally, a second CPE threshold may be indicated by a network apparatus to the second terminal apparatus, or the second CPE threshold may be preconfigured in the second terminal apparatus.

(13) A backoff value of the second terminal apparatus is less than or equal to a backoff value of the first terminal apparatus.

The backoff value is used for channel access. For example, the backoff value of the second terminal apparatus may be a backoff value used by the second terminal apparatus to perform LBT on a channel on which the second resource is located.

Optionally, the backoff value may be a backoff value used for performing channel access based on Type1 LBT. For example, the backoff value may be a value of a counter N in the Type1 LBT.

Optionally, the second terminal apparatus may indicate the backoff value of the second terminal apparatus by using SCI. For example, the second terminal apparatus includes the backoff value of the second terminal apparatus in the SCI, and the first terminal apparatus may determine the backoff value of the second terminal apparatus based on the SCI of the second terminal apparatus.

Alternatively, the second terminal apparatus may indicate the backoff value of the second terminal apparatus by using COT information.

Optionally, the first terminal apparatus may determine the backoff value of the second terminal apparatus based on a priority value (a service priority value of the second terminal apparatus) indicated by SCI of the second terminal apparatus.

Alternatively, the first terminal apparatus may determine the backoff value of the second terminal apparatus based on a CAPC value of the second terminal apparatus.

Optionally, the backoff value of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the backoff value of the first terminal apparatus based on a CAPC value of the first terminal apparatus.

Optionally, the backoff value of the second terminal apparatus may be indicated by a network apparatus to the second terminal apparatus, or preconfigured in the second terminal apparatus, or indicated by a higher layer of the second terminal apparatus.

Alternatively, the second terminal apparatus may determine the backoff value of the second terminal apparatus based on a CAPC value of the second terminal apparatus.

(14) A backoff value of the second terminal apparatus is less than or equal to a first backoff threshold, where the backoff value is used for channel access.

Optionally, the first backoff threshold may be indicated by a network apparatus to the first terminal apparatus, or the first backoff threshold may be preconfigured in the first terminal apparatus.

Optionally, the first backoff threshold may be indicated by a network apparatus to the second terminal apparatus, or the first backoff threshold may be preconfigured in the second terminal apparatus.

(15) A value of a contention window of the second terminal apparatus is less than or equal to a value of a contention window of the first terminal apparatus, where the contention window is used for channel access.

The value of the contention window is a length (or referred to as duration) of the contention window.

Optionally, the value of the contention window may be a value of a contention window used for performing channel access based on Type1 LBT. For example, a contention window CW1 of the first terminal apparatus is a contention window for channel access performed by the first terminal apparatus before transmission on the first resource. For another example, a contention window CW2 of the second terminal apparatus is a contention window for channel access performed by the second terminal apparatus before transmission on the second resource.

Optionally, the second terminal apparatus may indicate the value of the contention window of the second terminal apparatus by using SCI. For example, the second terminal apparatus includes the value of the contention window of the second terminal apparatus in the SCI, and the first terminal apparatus may determine the value of the contention window of the second terminal apparatus based on the SCI of the second terminal apparatus. Optionally, the SCI is SCI that indicates the second resource.

Alternatively, the second terminal apparatus may indicate the value of the contention window of the second terminal apparatus by using COT information.

Alternatively, the first terminal apparatus may determine the value of the contention window of the second terminal apparatus based on a priority value (a service priority value of the second terminal apparatus) indicated by SCI of the second terminal apparatus.

Alternatively, the first terminal apparatus may determine the value of the contention window of the second terminal apparatus based on a CAPC value of the second terminal apparatus.

Optionally, the value of the contention window of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the value of the contention window of the first terminal apparatus based on a CAPC value of the first terminal apparatus.

Optionally, the value of the contention window of the second terminal apparatus is indicated by a network apparatus to the second terminal apparatus, or preconfigured in the second terminal apparatus, or indicated by a higher layer of the second terminal apparatus.

Alternatively, the second terminal apparatus may determine the value of the contention window of the second terminal apparatus based on a CAPC value of the second terminal apparatus.

(16) A value of a contention window of the second terminal apparatus is less than or equal to a first contention window threshold, where the contention window is used for channel access.

Optionally, the first contention window threshold may be indicated by a network apparatus to the first terminal apparatus, or the first contention window threshold may be preconfigured in the first terminal apparatus.

Optionally, the first contention window threshold may be indicated by a network apparatus to the second terminal apparatus, or the first contention window threshold may be preconfigured in the second terminal apparatus.

(17) No reserved resource of another terminal apparatus exists in an RB set in which the second resource is located.

The another terminal apparatus is a terminal apparatus different from the second terminal apparatus.

Optionally, the first terminal apparatus may determine, based on a resource indicated in SCI sent by the another terminal apparatus, that no reserved resource of the another terminal apparatus exists in the RB set in which the second resource is located.

For S1002, when the first condition is met, the first terminal apparatus may exclude the second resource, to select the first resource from remaining resources in the resource selection window. Optionally, "excluding the second resource from the resource selection window" may also be understood as "excluding the second resource and a resource adjacent to the second resource from the resource selection window". For details about "a resource adjacent to the second resource", refer to a subsequent definition. In simple terms, the resource adjacent to the second resource includes at least one of the following resources: a resource in the RB set in which the second resource is located; a resource in a time unit in which the second resource is located; a resource whose frequency domain location is the same as a frequency domain location of the second resource and whose time domain location is in first duration before the second resource; a resource whose frequency domain location is the same as a frequency domain location of the second resource and whose time domain location is in second duration after the second resource; a resource whose time domain location is in first duration before the second resource in the RB set in which the second resource is located; or a resource whose time domain location is in second duration after the second resource in the RB set in which the second resource is located.

Optionally, when the first condition is met, the first terminal apparatus may exclude the second resource, to select the first resource from remaining resources. The first condition may include at least one of the following:

(1) A channel access type of the second terminal apparatus is a first type, and the first type is type 1 (Type1) or type 2 (Type2).
For the condition, refer to the foregoing description of selecting, by the first terminal apparatus based on the first condition, the resources including the second resource. Details are not described herein again.
(2) The second terminal apparatus is not a receiving apparatus of the first terminal apparatus.

In a possible implementation, when at least one of the following cases is met, the first terminal apparatus may determine that the second terminal apparatus is not a receiving apparatus of the first terminal apparatus. Alternatively, when at least one of the following cases is met, the second terminal apparatus is not a receiving apparatus for data information sent by the first terminal apparatus. Alternatively, when at least one of the following cases is met, the first terminal apparatus is a sending apparatus of the second terminal apparatus. Alternatively, when at least one of the following cases is met, the first terminal apparatus is a sending apparatus for data information sent to the second terminal apparatus.

Case 1: A source ID (source ID) indicated in SCI of the first terminal apparatus is different from X1 LSBs in a second layer-2 destination ID (Destination Layer-2 ID) of the second terminal apparatus. A value of X1 is an integer from 1 to 24, for example, X1=8 or X1=16. For example, assuming that X1=8, the source ID indicated in the SCI of the first terminal apparatus is different from the 8 least significant bits in the second layer-2 destination ID of the second terminal apparatus.

Case 2: An SRC indicated in a MAC subheader of the first terminal apparatus is different from X2 MSBs in a second layer-2 destination ID of the second terminal apparatus. A value of X2 is an integer from 1 to 24, for example, X2=8 or X2=16. For example, assuming that X2=16, the SRC indicated in the MAC subheader of the first terminal apparatus is different from the 16 most significant bits in the second layer-2 destination ID of the second terminal apparatus.

Case 3: A destination ID indicated in SCI of the first terminal apparatus is different from X3 LSBs in a second layer-2 source ID of the second terminal apparatus. A value of X3 is an integer from 1 to 24, for example, X3=8 or X3=16. For example, assuming that X3=16, the destination ID indicated in the SCI of the first terminal apparatus is different from the 16 least significant bits in the second layer-2 source ID of the second terminal apparatus.

Case 4: A DST indicated in a MAC subheader of the first terminal apparatus is different from X4 MSBs in a second layer-2 source ID of the second terminal apparatus. A value of X4 is an integer from 1 to 24, for example, X4=8 or X4=16. For example, assuming that X4=8, the DST indicated in the MAC subheader of the first terminal apparatus is different from the 8 most significant bits in the second layer-2 source ID of the second terminal apparatus.

Optionally, a source ID indicated in SCI of the first terminal apparatus is X5 LSBs in a first layer-2 source ID of the first terminal apparatus, for example, X5=8; or an SRC indicated in a MAC subheader of the first terminal apparatus is X6 MSBs in a first layer-2 source ID of the first terminal apparatus, for example, X6=16. A value of X5 is an integer from 1 to 24, for example, X5=8 or X5=16. A value of X6 is an integer from 1 to 24, for example, X6=8 or X6=16. Optionally, X5+X6=24.

Optionally, a destination ID indicated in SCI of the first terminal apparatus is X7 LSBs in a first layer-2 destination ID of the first terminal apparatus; or a DST indicated in a MAC subheader of the first terminal apparatus is X8 MSBs of a first layer-2 destination ID of the first terminal apparatus. A value of X7 is an integer from 1 to 24, for example, X7=8 or X7=16. A value of X8 is an integer from 1 to 24, for example, X8=8 or X8=16. Optionally, X7+X8=24. For example, assuming that X7=16, and X8=8, the destination ID indicated in the SCI of the first terminal apparatus is the 16 least significant bits of the first layer-2 destination ID of the first terminal apparatus; or the DST indicated in the MAC subheader of the first terminal apparatus is the 8 most significant bits of the first layer-2 destination ID of the first terminal apparatus.

Further, when at least one of the foregoing cases 1 to 4 is met, a data transmission type indicated in the SCI of the first terminal apparatus may be unicast.

Optionally, the SCI of the first terminal apparatus may be, for example, any one of COT indication information, COT sharing information, and COT structure information.

Optionally, the first resource carries the SCI of the first terminal apparatus and/or the MAC subheader of the first terminal apparatus; or the first resource in M consecutive slots carries the SCI of the first terminal apparatus and/or the MAC subheader of the first terminal apparatus.

In a possible implementation, when at least one of the following cases is met, the first terminal apparatus may determine that the second terminal apparatus is not a receiving apparatus of the first terminal apparatus. Alternatively, it may be further understood that, when at least one of the following cases is met, the second terminal apparatus is not a receiving apparatus for data information sent by the first terminal apparatus. Alternatively, when at least one of the following cases is met, the first terminal apparatus is not a sending apparatus of the second terminal apparatus. Alternatively, when at least one of the following cases is met, the first terminal apparatus is not a sending apparatus for data information sent to the second terminal apparatus.

Case 5: A destination ID indicated in SCI of the first terminal apparatus is different from X3 LSBs in a second layer-2 destination ID of the second terminal apparatus. A value of X3 is an integer from 1 to 24, for example, X3=8 or X3=16. For example, assuming that X3=16, the destination ID indicated in the SCI of the first terminal apparatus is different from the 16 least significant bits in the second layer-2 destination ID of the second terminal apparatus.

Case 6: A DST indicated in a MAC subheader of the first terminal apparatus is different from X4 MSBs in a second layer-2 destination ID of the second terminal apparatus. A value of X4 is an integer from 1 to 24, for example, X4=8 or X4=16. For example, assuming that X4=8, the DST indicated in the MAC subheader of the first terminal apparatus is different from the 8 most significant bits in the second layer-2 destination ID of the second terminal apparatus.

Optionally, a destination ID indicated in SCI of the first terminal apparatus is X7 LSBs in a first layer-2 destination ID of the first terminal apparatus; or a DST indicated in a MAC subheader of the first terminal apparatus is X8 MSBs of a first layer-2 destination ID of the first terminal apparatus. A value of X7 is an integer from 1 to 24, for example, X7=8 or X7=16. A value of X8 is an integer from 1 to 24, for example, X8=8 or X8=16. Optionally, X7+X8=24. For example, assuming that X7=16, and X8=8, the destination ID indicated in the SCI of the first terminal apparatus is the 16 least significant bits of the first layer-2 destination ID of the first terminal apparatus; or the DST indicated in the MAC subheader of the first terminal apparatus is the 8 most significant bits of the first layer-2 destination ID of the first terminal apparatus.

Further, when at least one of the foregoing cases 5 and 6 is met, a data transmission type indicated in the SCI of the first terminal apparatus may be groupcast or broadcast.

Optionally, the SCI of the first terminal apparatus may be, for example, any one of COT indication information, COT sharing information, and COT structure information.

Optionally, the first resource carries the SCI of the first terminal apparatus and/or the MAC subheader of the first terminal apparatus; or the first resource in M consecutive slots carries the SCI of the first terminal apparatus and/or the MAC subheader of the first terminal apparatus.

In a possible implementation, when at least one of the following cases is met, the first terminal apparatus may determine that the second terminal apparatus is not a receiving apparatus of the first terminal apparatus. Alternatively, it may be further understood that, when at least one of the following cases is met, the second terminal apparatus is not a receiving apparatus for control information sent by the first terminal apparatus. Alternatively, when at least one of the following cases is met, the first terminal apparatus is not a sending apparatus of the second terminal apparatus. Alternatively, when at least one of the following cases is met, the first terminal apparatus is not a sending apparatus for control information sent to the second terminal apparatus.

Case 7: The second terminal apparatus does not decode SCI of the first terminal apparatus, where the SCI includes first-stage SCI and/or second-stage SCI.

Case 8: The second terminal apparatus does not decode first indication information of the first terminal apparatus. Optionally, the first indication information may be indicated by SCI of the first terminal apparatus. Optionally, the first indication information is at least one of COT sharing information, COT indication information, and COT structure information.

Not decoding may also be understood as not receiving or not monitoring. Not decoding, not receiving, or not monitoring may also be understood as that decoding cannot be performed, receiving cannot be performed, or monitoring cannot be performed.

(3) The first terminal apparatus is not a receiving apparatus of the second terminal apparatus.

In a possible implementation, when at least one of the following cases is met, the first terminal apparatus may determine that the first terminal apparatus is not a receiving apparatus of the second terminal apparatus. Alternatively, it may be further understood that, when at least one of the following cases is met, the first terminal apparatus is not a receiving apparatus for data information sent by the second terminal apparatus. Alternatively, when at least one of the following cases is met, the second terminal apparatus is not a sending apparatus of the first terminal apparatus. Alternatively, when at least one of the following cases is met, the second terminal apparatus is not a sending apparatus for data information sent to the first terminal apparatus.

Case 9: A source ID indicated in SCI of the second terminal apparatus is different from X1 LSBs in a first layer-2 destination ID of the first terminal apparatus. A value of X1 is an integer from 1 to 24, for example, X1=8 or X1=16. For details, refer to case 1.

Case 10: An SRC indicated in a MAC subheader of the second terminal apparatus is different from X2 MSBs in a first layer-2 destination ID of the first terminal apparatus. A value of X2 is an integer from 1 to 24, for example, X2=8 or X2=16. For details, refer to case 2.

Case 11: A destination ID indicated in SCI of the second terminal apparatus is different from X3 LSBs in a first layer-2 source ID of the first terminal apparatus. A value of X3 is an integer from 1 to 24, for example, X3=8 or X3=16. For details, refer to case 3.

Case 12: A DST indicated in a MAC subheader of the second terminal apparatus is different from X4 MSBs in a first layer-2 source ID of the first terminal apparatus. A value of X4 is an integer from 1 to 24, for example, X4=8 or X4=16. For details, refer to case 4.

Optionally, a source ID indicated in SCI of the second terminal apparatus is X5 LSBs in a second layer-2 source ID of the second terminal apparatus, or an SRC indicated in a MAC subheader of the second terminal apparatus is X6 MSBs of a second layer-2 source ID of the second terminal apparatus. A value of X5 is an integer from 1 to 24, for example, X5=8 or X5=16. A value of X6 is an integer from 1 to 24, for example, X6=8 or X6=16. Optionally, X5+X6=24.

Optionally, a destination ID indicated in SCI of the second terminal apparatus is X7 LSBs in a second layer-2 destination ID of the second terminal apparatus; or a DST indicated in a MAC subheader of the second terminal apparatus is X8 MSBs of a second layer-2 destination ID of the second terminal apparatus. A value of X7 is an integer from 1 to 24, for example, X7=8 or X7=16. A value of X8 is an integer from 1 to 24, for example, X8=8 or X8=16. Optionally, X7+X8=24. For details, refer to case 6.

Further, when at least one of the foregoing cases 9 to 12 is met, a data transmission type indicated in the SCI of the second terminal apparatus may be unicast.

In a possible implementation, when at least one of the following cases is met, the first terminal apparatus may determine that the first terminal apparatus is not a receiving apparatus of the second terminal apparatus. Alternatively, it may be further understood that, when at least one of the following cases is met, the first terminal apparatus is not a receiving apparatus for data information sent by the second terminal apparatus. Alternatively, when at least one of the following cases is met, the second terminal apparatus is not a sending apparatus of the first terminal apparatus. Alternatively, when at least one of the following cases is met, the second terminal apparatus is not a sending apparatus for data information sent to the first terminal apparatus.

Case 13: A destination ID indicated in SCI of the second terminal apparatus is different from X3 LSBs in a first layer-2 destination ID of the first terminal apparatus. A value of X3 is an integer from 1 to 24, for example, X3=8 or X3=16. For details, refer to case 7.

Case 14: A DST indicated in a MAC subheader of the second terminal apparatus is X4 MSBs in a first layer-2 source ID of the first terminal apparatus. A value of X4 is an integer from 1 to 24, for example, X4=8 or X4=16. For details, refer to case 8.

Optionally, a destination ID indicated in SCI of the second terminal apparatus is X7 LSBs in a second layer-2 destination ID of the second terminal apparatus; or a DST indicated in a MAC subheader of the second terminal apparatus is X8 MSBs of a second layer-2 destination ID of the second terminal apparatus. A value of X7 is an integer from 1 to 24, for example, X7=8 or X7=16. A value of X8 is an integer from 1 to 24, for example, X8=8 or X8=16. Optionally, X7+X8=24. For details, refer to case 9.

Further, when at least one of the foregoing cases 13 and 14 is met, a cast type indicated in the SCI of the second terminal apparatus is groupcast or broadcast.

Optionally, a MAC subheader of the second terminal apparatus is carried by a second PSSCH, and SCI of the second terminal apparatus is carried by a second PSCCH. The second PSCCH schedules the second PSSCH. The second PSCCH and the second PSSCH are sidelink information of the second terminal apparatus.

In a possible implementation, when the following cases are met, the first terminal apparatus may determine that the first terminal apparatus is not a receiving apparatus of the second terminal apparatus. Alternatively, it may be further understood that, when at least one of the following cases is met, the first terminal apparatus is not a receiving apparatus for control information sent by the second terminal apparatus. Alternatively, when at least one of the following cases is met, the second terminal apparatus is not a sending apparatus of the first terminal apparatus. Alternatively, when at least one of the following cases is met, the second terminal apparatus is not a sending apparatus for control information sent to the first terminal apparatus.

Case 15: The first terminal apparatus does not decode SCI of the second terminal apparatus, where the SCI includes first-stage SCI and/or second-stage SCI.

Not decoding may also be understood as not receiving or not monitoring. Not decoding, not receiving, or not monitoring may also be understood as that decoding cannot be performed, receiving cannot be performed, or monitoring cannot be performed.

(4) A CAPC value of the second terminal apparatus is greater than a CAPC value of the first terminal apparatus.

For the condition, refer to the foregoing description of selecting, by the first terminal apparatus based on the first condition, the resources including the second resource. Details are not described herein again.

(5) A CAPC value of the second terminal apparatus is greater than a first CAPC threshold.

For the condition, refer to the foregoing description of selecting, by the first terminal apparatus based on the first condition, the resources including the second resource. Details are not described herein again.

(6) A quantity of RB sets corresponding to the second resource is greater than or equal to a quantity of first RB sets, and the quantity of first RB sets is a quantity of RB sets of a resource reserved by the first terminal apparatus.

For the condition, refer to the foregoing description of selecting, by the first terminal apparatus based on the first condition, the resources including the second resource. Details are not described herein again.

(7) A frequency domain resource of the second resource belongs to frequency domain resources of resources in M consecutive slots.

For the condition, refer to the foregoing description of selecting, by the first terminal apparatus based on the first condition, the resources including the second resource. Details are not described herein again.

(8) An RSRP measurement value of the second resource is greater than or equal to a first RSRP threshold.

For the condition, refer to the foregoing description of selecting, by the first terminal apparatus based on the first condition, the resources including the second resource. Details are not described herein again.

(9) A service priority value of the second terminal apparatus is greater than a service priority value of the first terminal apparatus.

For the condition, refer to the foregoing description of selecting, by the first terminal apparatus based on the first condition, the resources including the second resource. Details are not described herein again.

(10) A service priority value of the second terminal apparatus is greater than a first service priority threshold.

For the condition, refer to the foregoing description of selecting, by the first terminal apparatus based on the first condition, the resources including the second resource. Details are not described herein again.

(11) A CPE length of the second terminal apparatus is less than or equal to a CPE length of the first terminal apparatus.

For the condition, refer to the foregoing description of selecting, by the first terminal apparatus based on the first condition, the resources including the second resource. Details are not described herein again.

(12) A CPE length of the second terminal apparatus is less than or equal to a first CPE threshold.

For the condition, refer to the foregoing description of selecting, by the first terminal apparatus based on the first condition, the resources including the second resource. Details are not described herein again.

(13) A backoff value of the second terminal apparatus is greater than or equal to a backoff value of the first terminal apparatus.

For the condition, refer to the foregoing description of selecting, by the first terminal apparatus based on the first condition, the resources including the second resource. Details are not described herein again.

(14) A backoff value of the second terminal apparatus is greater than or equal to a first backoff threshold, where the backoff value is used for channel access.

For the condition, refer to the foregoing description of selecting, by the first terminal apparatus based on the first condition, the resources including the second resource. Details are not described herein again.

(15) A value of a contention window of the second terminal apparatus is greater than or equal to a value of a contention window of the first terminal apparatus, where the contention window is used for channel access.

For the condition, refer to the foregoing description of selecting, by the first terminal apparatus based on the first condition, the resources including the second resource. Details are not described herein again.

(16) A value of a contention window of the second terminal apparatus is greater than or equal to a first contention window threshold, where the contention window is used for channel access.

For the condition, refer to the foregoing description of selecting, by the first terminal apparatus based on the first condition, the resources including the second resource. Details are not described herein again.

When determining that the first condition is met, the first terminal apparatus selects the first resource, which is specifically described below.

The first resource may be an available resource (or referred to as a candidate resource) that is reported by a physical layer of the first terminal apparatus to a MAC layer and that is used to transmit sidelink information of the first terminal apparatus. A set including the first resource may be referred to as a candidate resource set. The physical layer of the first terminal apparatus reports the selected first resource to the MAC layer, and the MAC layer selects, from the first resource, a resource that is finally used to transmit the sidelink information of the first terminal apparatus. It may be understood that the resource finally used to transmit the sidelink information of the first terminal apparatus is a resource reserved by the first terminal apparatus.

Optionally, the first resource selected by the first terminal apparatus based on the second resource may include at least one of the following resources, in other words, the first terminal apparatus may select at least one of the following resources as the first resource:

the second resource; a resource in the RB set in which the second resource is located; a resource in a time unit in which the second resource is located; a resource whose frequency domain location is the same as a frequency domain location of the second resource and whose time domain location is in first duration before the second resource; a resource whose frequency domain location is the same as a frequency domain location of the second resource and whose time domain location is in second duration after the second resource; a resource whose time domain location is in first duration before the second resource in the RB set in which the second resource is located; or a resource whose time domain location is in second duration after the second resource in the RB set in which the second resource is located.

Optionally, the first terminal apparatus may exclude at least one of the following resources, and use a remaining resource as the first resource:

the second resource; a resource in the RB set in which the second resource is located; a resource in a time unit in which the second resource is located; a resource whose frequency domain location is the same as a frequency domain location of the second resource and whose time domain location is in first duration before the second resource; a resource whose frequency domain location is the same as a frequency domain location of the second resource and whose time domain location is in second duration after the second resource; a resource whose time domain location is in first duration before the second resource in the RB set in which the second resource is located; or a resource whose time domain location is in second duration after the second resource in the RB set in which the second resource is located.

The following separately provides detailed descriptions.

(1) Second resource:

The first terminal apparatus determines a reserved resource (a second resource) of the second terminal apparatus, and the first terminal apparatus excludes the second resource from a candidate resource set, or the terminal apparatus does not select the second resource to transmit the SL information.

For example, the first terminal apparatus does not share a COT with the second terminal apparatus. The first terminal apparatus may select a resource that overlaps the second resource to transmit the sidelink information of the first terminal apparatus.

Optionally, the second resource includes A1 subchannels, and A1 is a positive integer. Optionally, the second resource belongs to A2 RB sets, where A2 is a positive integer.

(2) Resource in the RB set in which the second resource is located:

The resource in the RB set in which the second resource is located may be, for example, a resource whose time domain location is a slot in which the second resource is located, and whose frequency domain location belongs to the RB set in which the second resource is located. Correspondingly, the resource in the RB set in which the second resource is located may be, for example, a resource whose time domain location is the slot in which the second resource is located and whose frequency domain location belongs to the RB set in which the second resource is located.

The first terminal apparatus may select, as the first resource, a resource in the RB set in which the second resource is located except a resource that overlaps the second resource. In other words, the first terminal apparatus may exclude, from the RB set in which the second resource is located, a resource that overlaps the second resource, and uses a remaining resource as the first resource. For example, the second terminal apparatus is not a receiving apparatus of the first terminal apparatus, and/or the first terminal apparatus is not a receiving apparatus of the second terminal apparatus, and the first terminal apparatus performs the foregoing resource selection/resource exclusion process.

Optionally, the RB set in which the second resource is located includes all subchannels of the RB set in which the second resource is located. Optionally, the second resource includes A1 subchannels, and A1 is a positive integer. Optionally, the second resource belongs to A2 RB sets, where A2 is a positive integer.

Optionally, the first terminal apparatus selects, as the first resource, a resource whose time domain location is the same as that of the second resource in the RB set in which the second resource is located. Optionally, the first terminal apparatus selects, as the first resource, a resource whose time domain location is the same as that of the second resource and whose frequency domain location does not overlap the RB set in which the second resource is located. A resource whose time domain location is the same as that of the second resource may also be understood as a resource in the slot in which the second resource is located.

Optionally, when the following case is met, the first terminal apparatus may determine that the first terminal apparatus is not a receiving apparatus of the second terminal apparatus: a destination ID indicated in the first sidelink control information of the second terminal apparatus is not associated with the first terminal apparatus, or a destination ID indicated in the first sidelink control information of the second terminal apparatus is not associated with a source ID of the first terminal apparatus. The first sidelink control information may also be understood as second-stage SCI in the first sidelink control information.

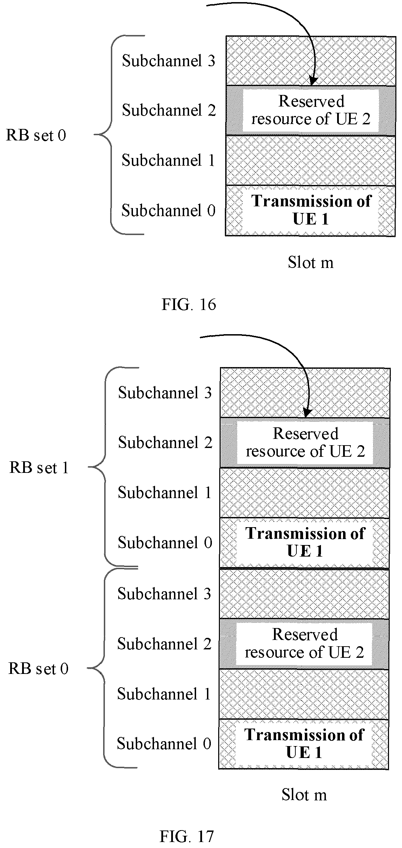

For example, as shown in FIG. 16 and FIG. 17, the first terminal apparatus may select, as the first resource, a resource in the RB set in which the second resource is located except a resource that overlaps the second resource. Further, the first terminal apparatus may determine, from the first resource, a resource used to transmit sidelink information.

The first terminal apparatus may select, as the first resource, a resource whose time domain location does not overlap a time domain location of the second resource. For example, the first terminal apparatus selects, as the first resource, a resource whose time domain location does not overlap the time domain location of the second resource in the RB set in which the second resource is located. In other words, the first terminal apparatus may exclude a resource whose time domain location overlaps a time domain location of the second resource, and use a remaining resource as the first resource. For example, the first terminal apparatus excludes, from the RB set in which the second resource is located, a resource whose time domain location overlaps the time domain location of the second resource, and uses a remaining resource as the first resource. For example, the second terminal apparatus is a receiving apparatus of the first terminal apparatus, and/or the first terminal apparatus is a receiving apparatus of the second terminal apparatus, and the first terminal apparatus performs the foregoing resource selection/resource exclusion process.

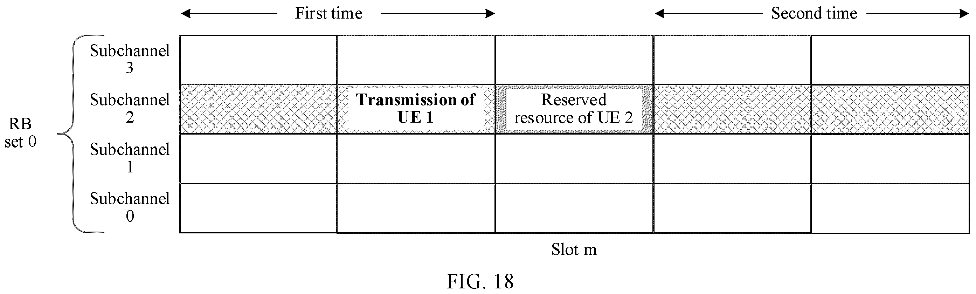

For example, as shown in FIG. 18, the first terminal apparatus may select, as the first resource, the resource whose time domain location does not overlap the time domain location of the second resource in the RB set in which the second resource is located. Further, the first terminal apparatus may determine, from the first resource, the resource used to transmit the sidelink information.

(3) Resource in the time unit in which the second resource is located:

If the second terminal apparatus is not a receiving apparatus of the first terminal apparatus, and/or the first terminal apparatus is not a receiving apparatus of the second terminal apparatus, the first terminal apparatus may select, as the first resource, a resource in the time unit in which the second resource is located except a resource that overlaps the second resource. In other words, the first terminal apparatus may exclude, from the time unit in which the second resource is located, a resource that overlaps the second resource, and uses a remaining resource as the first resource.

Optionally, the first terminal apparatus selects a resource, as the first resource, whose time domain location is the same as that of the second resource. The resource in the time unit in which the second resource is located may also be understood as a resource in the slot in which the second resource is located.

Optionally, when the following case is met, the first terminal apparatus may determine that the first terminal apparatus is not a receiving apparatus of the second terminal apparatus: a destination ID indicated in the first sidelink control information of the second terminal apparatus is not associated with the first terminal apparatus, or a destination ID indicated in the first sidelink control information of the second terminal apparatus is not associated with a source ID of the first terminal apparatus. The first sidelink control information may also be understood as second-stage SCI in the first sidelink control information.

If the second terminal apparatus is a receiving apparatus of the first terminal apparatus, the first terminal apparatus may select, as the first resource, a resource whose time domain location does not overlap a time domain location of the second resource. In other words, the first terminal apparatus may exclude a resource whose time domain location overlaps a time domain location of the second resource, and use a remaining resource as the first resource.

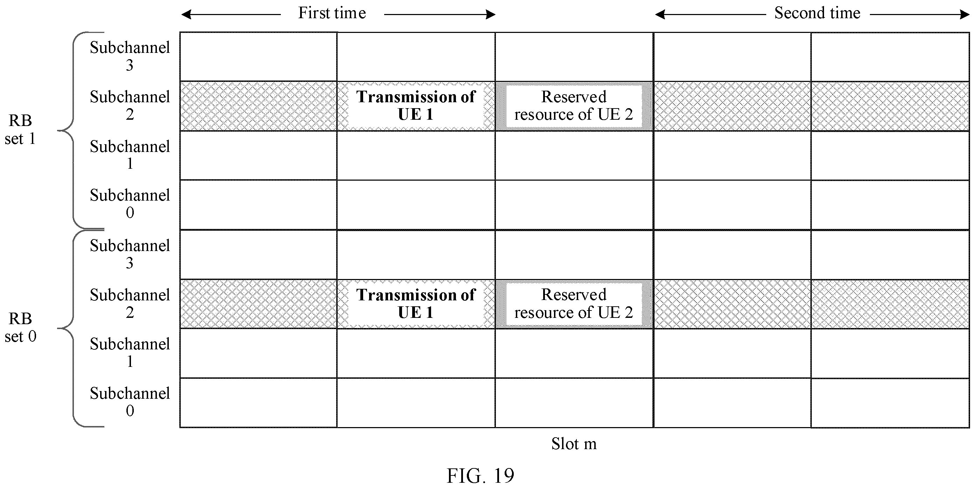

For example, as shown in FIG. 19, the first terminal apparatus may select, as the first resource, the resource whose time domain location does not overlap the time domain location of the second resource. Further, the first terminal apparatus may determine, from the first resource, the resource used to transmit the sidelink information.

(4) Resource whose frequency domain location is the same as the frequency domain location of the second resource:

A frequency domain location of the first resource is the same as the frequency domain location of the second resource, and a time domain location of the first resource is different from a time domain location of the second resource.

Optionally, the time domain location of the first resource is in first duration before the second resource, in other words, a resource whose frequency domain location is the same as a frequency domain location of a third resource and whose time domain location is within the first duration before the second resource is the first resource.

The time domain location of the first resource belongs to a slot in the first duration before the second resource. It may be understood that the first duration includes one or more first resources.

The first terminal apparatus selects, as the first resource, a resource whose frequency domain location is the same as the frequency domain location of the second resource and whose time domain location is in the first duration before the second resource. Alternatively, the first terminal apparatus selects a resource, as the first resource, whose frequency domain location is the same as a frequency domain location of the second resource and whose time domain location overlaps that of a resource in first duration before the second resource.

The first terminal apparatus excludes, from the candidate resource set, a resource that overlaps a resource in the first duration before the second resource. Optionally, the first terminal apparatus selects, as the first resource, a resource that does not overlap a resource in the first duration before the second resource. For example, the second terminal apparatus is not a receiving apparatus of the first terminal apparatus, or the first terminal apparatus is not a receiving apparatus of the second terminal apparatus.

The first terminal apparatus selects, as the first resource, a resource whose frequency domain location is the same as the frequency domain location of the second resource and whose time domain location is in the first duration before the second resource. Alternatively, the first terminal apparatus selects, as the first resource, a resource whose frequency domain location is the same as a frequency domain location of the second resource and whose time domain location overlaps that of a resource in first duration before the second resource. For example, the second terminal apparatus is a receiving apparatus of the first terminal apparatus, or the first terminal apparatus is a receiving apparatus of the second terminal apparatus.

Optionally, a frequency domain resource of the second resource includes A1 subchannels, and A1 is a positive integer. Optionally, the second resource belongs to A2 RB sets, where A2 is a positive integer.

Optionally, the time domain location of the resource in the first duration before the second resource is a resource in at least one slot from the first duration before the second resource to a last slot before the second resource.

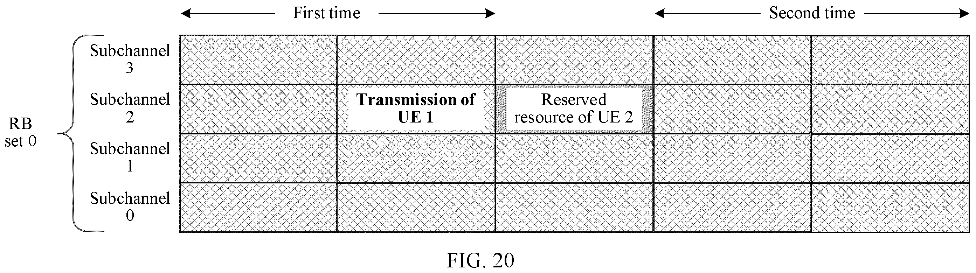

Optionally, excluding a resource that overlaps "a resource in the first duration before the second resource" includes: excluding "a resource whose frequency domain resource is the same as that of the second resource and whose time domain resource belongs to at least one slot from the first duration before the second resource to a last slot before the second resource". For example, as shown in FIG. 20, the first terminal apparatus may select, as the first resource, the resource whose frequency domain location is the same as the frequency domain location of the second resource and whose time domain location is in the first duration before the second resource. Further, the first terminal apparatus may determine, from the first resource, the resource used to transmit the sidelink information.

Optionally, a granularity of the first duration may be a slot. In other words, the first duration includes one or more slots.

Optionally, the first duration is related to at least one of the following: a priority value indicated by the first sidelink control information of the second terminal apparatus (a service priority value of the second terminal apparatus), a CAPC value of the second terminal apparatus, a CPE length of the second terminal apparatus (a CPE length on the second resource or before the second resource), a channel access type (for example, Type1 or Type2) of the second terminal apparatus, a backoff value of the second terminal apparatus, a value of a contention window of the second terminal apparatus, an RSRP measurement value of the second resource, a priority value of a resource selected by the first terminal apparatus (a service priority value of the second terminal apparatus), a CAPC of the first terminal apparatus, a CPE length of the first terminal apparatus, a channel access type of the first terminal apparatus, a backoff value of the first terminal apparatus, a value of a contention window of the first terminal apparatus, a channel busy degree, and a channel occupation degree.

In the foregoing parameters related to the first duration, for parameters such as the service priority value, the CAPC value, the CPE length, the channel access type, the backoff value, the value of the contention window, and the RSRP measurement value of the first terminal apparatus or the second terminal apparatus, refer to the foregoing descriptions of the related parameters in the first condition. Details are not described herein again.

In the foregoing parameters related to the first duration, the channel busy degree is a busy degree of a channel on which the second resource is located, for example, may be a channel busy ratio (channel busy ratio, CBR) of the channel on which the second resource is located. The channel occupancy degree is an occupancy degree of a channel on which the second resource is located, for example, may be a channel occupancy ratio (channel occupancy ratio, COR) of the channel on which the second resource is located.

Optionally, the time domain location of the first resource may be in second duration after the second resource. In other words, a resource whose frequency domain location is the same as the frequency domain location of the second resource and whose time domain location is in the second duration after the second resource may be the first resource.

The time domain location of the first resource belongs to a slot in the second duration after the second resource. It may be understood that the second duration includes one or more first resources.

The first terminal apparatus selects, as the first resource, a resource whose frequency domain location is the same as the frequency domain location of the second resource and whose time domain location is in the second duration after the second resource. Alternatively, the first terminal apparatus selects, as the first resource, a resource whose frequency domain location is the same as the frequency domain location of the second resource and whose time domain location overlaps that of a resource in the second duration after the second resource.

The first terminal apparatus excludes, from the candidate resource set, a resource that overlaps a resource in the second duration after the second resource, or the first terminal apparatus selects, as the first resource, a resource that does not overlap a resource in the second duration after the second resource. For example, the second terminal apparatus is not a receiving apparatus of the first terminal apparatus, or the first terminal apparatus is not a receiving apparatus of the second terminal apparatus.

The first terminal apparatus selects, as the first resource, the resource whose frequency domain location is the same as the frequency domain location of the second resource and whose time domain location is within the first duration after the second resource, or the first terminal apparatus selects, as the first resource, the resource whose frequency domain location is the same as the frequency domain location of the second resource and whose time domain location overlaps that of a resource in the second duration after the second resource. For example, the second terminal apparatus is a receiving apparatus of the first terminal apparatus, or the first terminal apparatus is a receiving apparatus of the second terminal apparatus.

Optionally, a frequency domain resource of the second resource includes A1 subchannels, and A1 is a positive integer. Optionally, the second resource belongs to A2 RB sets, where A2 is a positive integer.

Optionally, the time domain location of the resource in the second duration after the second resource is a resource in at least one slot from a 1st slot after the second resource to second duration after the second resource.

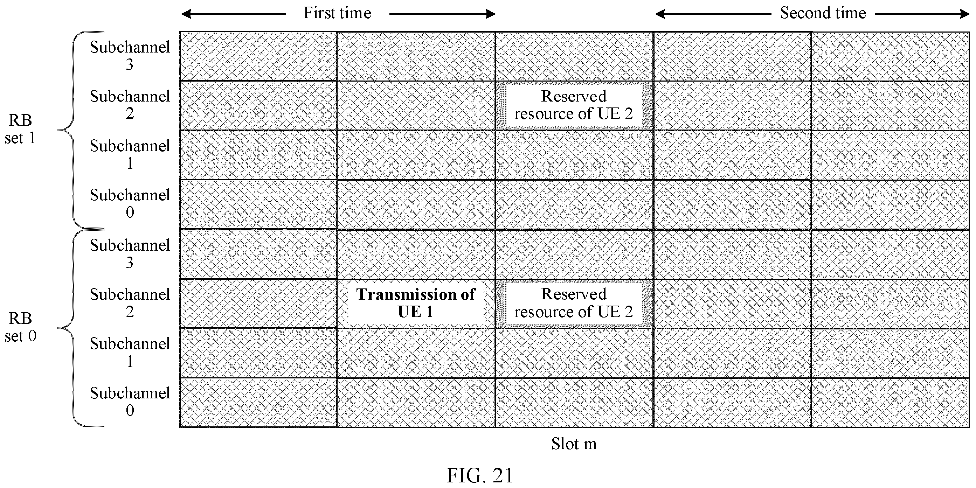

Optionally, excluding a resource that overlaps "a resource in the second duration after the second resource" includes: excluding "a resource whose frequency domain resource is the same as that of the second resource and whose time domain resource belongs to at least one slot from a 1st slot after the second resource to the second duration after the second resource". For example, as shown in FIG. 21, the first terminal apparatus may select, as the first resource, the resource whose frequency domain location is the same as the frequency domain location of the second resource and whose time domain location is in the second duration after the second resource. Further, the first terminal apparatus may determine, from the first resource, the resource used to transmit the sidelink information.

Optionally, a granularity of the second duration may be a slot. In other words, the second duration includes one or more slots.

Optionally, the first duration is related to at least one of the following: a priority value indicated by the first sidelink control information of the second terminal apparatus (a service priority value of the second terminal apparatus), a CAPC value of the second terminal apparatus, a CPE length of the second terminal apparatus (a CPE length on the second resource or before the second resource), a channel access type (for example, Type1 or Type2) of the second terminal apparatus, a backoff value of the second terminal apparatus, a value of a contention window of the second terminal apparatus, an RSRP measurement value of the second resource, a priority value of a resource selected by the first terminal apparatus (a service priority value of the second terminal apparatus), a CAPC of the first terminal apparatus, a CPE length of the first terminal apparatus, a channel access type of the first terminal apparatus, a backoff value of the first terminal apparatus, a value of a contention window of the first terminal apparatus, a channel busy degree, and a channel occupation degree. For details about the parameters related to the second duration, refer to the foregoing description of the parameters related to the first duration.

(5) Resource whose time domain location is in the first duration before the second resource in the RB set in which the second resource is located:

The first terminal apparatus selects, as the first resource, a resource that overlaps a resource in the first duration before the second resource in the RB set in which the second resource is located; or selects, as the first resource, a resource in the first duration before the second resource in the RB set in which the second resource is located.

Optionally, the time domain location of the resource in the first duration before the second resource is a resource in at least one slot from the first duration before the second resource to a last slot before the second resource. The first terminal apparatus may select, as the first resource, a resource that overlaps a resource in the first duration before a time domain end location of the second resource in the RB set in which the second resource is located; or the first terminal apparatus excludes, from the candidate resource set, a resource that overlaps a resource in the first duration before the RB set in which the second resource is located; or the first terminal apparatus selects, as the first resource, a resource that does not overlap a resource in the first duration before the RB set in which the second resource is located. For example, the second terminal apparatus is not a receiving apparatus of the first terminal apparatus, or the first terminal apparatus is not a receiving apparatus of the second terminal apparatus.

The first terminal apparatus may select, as the first resource, a resource that overlaps a resource in the first duration before a time domain start location of the second resource in the RB set in which the second resource is located; or select, as the first resource, a resource in the first duration before the second resource in the RB set in which the second resource is located. For example, the second terminal apparatus is a receiving apparatus of the first terminal apparatus, or the first terminal apparatus is a receiving apparatus of the second terminal apparatus.

Optionally, the time domain location of the resource in the first duration before the second resource is a resource in at least one slot from the first duration before the second resource to a last slot before the second resource.

Optionally, excluding a resource that overlaps "a resource in the first duration before the RB set in which the second resource is located" includes: excluding "a resource whose frequency domain resource is the same as that of the RB set in which the second resource is located and whose time domain resource belongs to at least one slot from the first duration before the second resource to a last slot before the second resource".

For example, as shown in FIG. 20, the first terminal apparatus selects, as the first resource, the resource that overlaps the resource in the first duration before the second resource in the RB set in which the second resource is located. Further, the first terminal apparatus may determine, from the first resource, the resource used to transmit the sidelink information.

(6) Resource whose time domain location is in the second duration after the second resource in the RB set in which the second resource is located:

The first terminal apparatus selects, as the first resource, a resource that overlaps a resource in the second duration after the second resource in the RB set in which the second resource is located; or selects, as the first resource, a resource in the second duration after the second resource in the RB set in which the second resource is located.

Optionally, the time domain location of the resource in the second duration after the second resource is a resource in at least one slot from a 1st slot after the second resource to second duration after the second resource.

The first terminal apparatus may select, as the first resource, a resource that overlaps a resource in the second duration after a time domain start location of the second resource in the RB set in which the second resource is located; or the first terminal apparatus excludes, from the candidate resource set, a resource that overlaps a resource in the second duration after the RB set in which the second resource is located; or the first terminal apparatus selects a resource that does not overlap a resource in the second duration after the RB set in which the second resource is located, to transmit SL information. For example, the second terminal apparatus is not a receiving apparatus of the first terminal apparatus, or the first terminal apparatus is not a receiving apparatus of the second terminal apparatus. The first terminal apparatus may select, as the first resource, a resource that overlaps a resource in the second duration after the time domain start location of the second resource in the RB set in which the second resource is located; or select, as the first resource, a resource in the second duration after the second resource in the RB set in which the second resource is located. For example, the second terminal apparatus is a receiving apparatus of the first terminal apparatus, or the first terminal apparatus is a receiving apparatus of the second terminal apparatus.

Optionally, the time domain location of the resource in the second duration after the second resource is a resource in at least one slot from a 1st slot after the second resource to the second duration after the second resource.

Optionally, excluding a resource that overlaps "a resource in the second duration after the RB set in which the second resource is located" includes: excluding "a resource whose frequency domain resource is the same as that of the RB set in which the second resource is located and whose time domain resource belongs to at least one slot from a 1st slot after the second resource to the second duration after the second resource".

For example, as shown in FIG. 21, the first terminal apparatus selects, as the first resource, the resource that overlaps the resource in the second duration after the second resource in the RB set in which the second resource is located. Further, the first terminal apparatus may determine, from the first resource, the resource used to transmit the sidelink information.

Optionally, a time granularity of the first resource selected by the first terminal apparatus may be M slots, in other words, the first resource may include M slots in time domain, where M is a positive integer. For example, a time granularity of the first resource selected by the first terminal apparatus may be one or more slots. In other words, the first resource may include one or more slots in time domain.

Optionally, a frequency domain granularity of the first resource selected by the first terminal apparatus may be an RB set or a subchannel. That a frequency domain granularity is an RB set includes: the frequency domain granularity is $L_{RS}$ RB sets. That a frequency domain granularity is a subchannel includes: the frequency domain granularity is $L_{SubCH}$ subchannels. The following separately provides descriptions:

(1) The frequency domain granularity of the first resource is $L_{RS}$ RB sets.

$L_{RS}$ is a positive integer. For example, $L_{RS}$ is at least any one of {1, 2, 3, 4, 5}.

Optionally, $L_{RS}$ may be a quantity of RB sets corresponding to multichannel access performed by the first terminal apparatus.

Optionally, a value of $L_{RS}$ may be indicated by a MAC layer. For example, the MAC layer indicates that $L_{RS}$ is at least any one of {1, 2, 3, 4, 5}.

Optionally, when the first terminal apparatus reports the candidate resource set including the first resource to the MAC layer, the first resource may be represented by $A_{x,y}$. Specifically, $A_{x,y}$ represents a resource of an RB set index x+j and a slot y; or $A_{x,y}$ represents a resource of an RB set index x+j and a slot y+i. Herein, j={0, ..., $L_{RS}$-1}, i={0, ..., M-1}, x is an integer, and y is an integer.

(2) The frequency domain granularity of the first resource is $L_{SubCH}$ subchannels.

$L_{SubCH}$ is a positive integer. For example, $L_{SubCH}$ is at least any one of {1, 2, 3, 4, 5, ..., 27}.

Optionally, a value of $L_{SubCH}$ may be indicated by a MAC layer. For example, the MAC layer indicates that $L_{SubCH}$ is at least any one of {1, 2, 3, 4, 5, ..., 27}.

Optionally, when the first terminal apparatus reports the candidate resource set including the first resource to the MAC layer, $A_{x,y}$ may be reported, where $A_{x,y}$ represents a resource of an RB set index x and a slot y. The first terminal apparatus reports $A_{x,y}$, to indicate that resources corresponding to all subchannels in the slot y and the RB set index x are the first resource.

Alternatively, when the first terminal apparatus reports the candidate resource set including the first resource to the MAC layer, the first resource may be represented by $R_{x,y}$. Specifically, $R_{x,y}$ represents a candidate resource of a subchannel index x+j and a slot y; or $R_{x,y}$ represents a candidate resource of a subchannel index x+j and a slot y+i, where j= {0, ..., $L_{SubCH-1}$}, i={0, ..., M-1}, x is an integer, and y is an integer.

It should be noted that, in the foregoing description of the frequency domain granularity of the first resource, the parameter names such as $L_{RS}$, $L_{SubCH}$, $A_{x,y}$, and $R_{x,y}$ are example names provided in embodiments of this application. Specific names of these parameters are not limited in embodiments of this application. For example, the frequency domain granularity of the first resource may be Lx RB sets.

It should be noted that a time sequence of the steps in the method embodiment shown in FIG. 15 is not limited in this application. The steps in the method embodiment shown in FIG. 15 may be performed according to a specific time sequence, or may be performed simultaneously. For example, S1001 and S1002 may be performed simultaneously, or S1001 may be performed before S1002 and S1502 according to a specific time sequence.

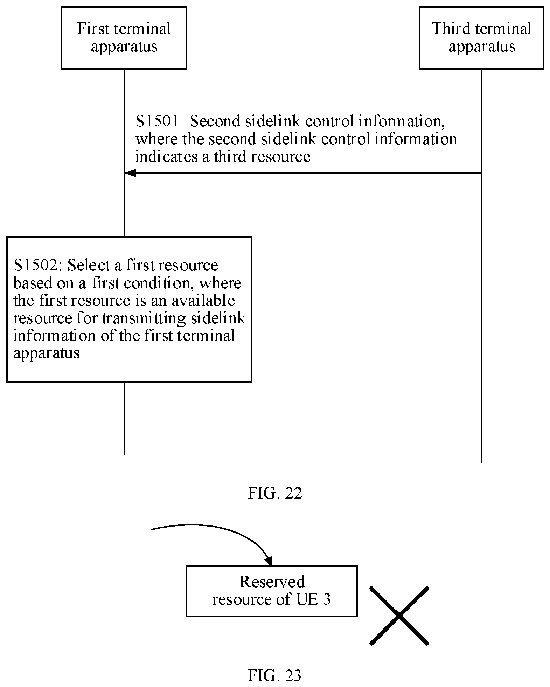

As shown in FIG. 22, an embodiment of this application further provides another communication method. The communication method includes S1501 and S1502.

S1501: Receive second sidelink control information from a third terminal apparatus, where the second sidelink control information indicates a third resource.

Step S1501 may be performed by a first terminal apparatus.

S1502: Select a first resource based on a first condition, where the first resource is an available resource for transmitting sidelink information of the first terminal apparatus.

Step S1502 may be performed by the first terminal apparatus.

The following describes the method by using an example in which the first terminal apparatus performs the method. However, an entity for performing interaction is not limited in this application. Alternatively, the method may be performed by a chip, a chip system, or a processor that supports the first terminal apparatus in implementing the method, or may be a logical module or software that can implement all or some functions of the first terminal apparatus.

For S1501, the first terminal apparatus receives the second sidelink control information sent by the third terminal apparatus, and the first terminal apparatus may determine, based on the third resource indicated by the second sidelink control information, that the third resource is reserved by the third terminal apparatus.

Optionally, the first terminal apparatus may receive the second sidelink control information in a resource sensing window of the first terminal apparatus. The third resource indicated by the second sidelink control information may be in a resource selection window of the first terminal apparatus.

Optionally, the second sidelink control information may indicate a time-frequency domain location of the third resource.

Optionally, the second sidelink control information may be existing information indicating a reserved time-frequency resource, for example, SCI, first-stage SCI, or second-stage SCI, or the second sidelink control information may be COT indication information (or COT sharing information, COT structure information, or the like), or the second sidelink control information may be newly defined sidelink information. This is not limited in this application.

For S1502, the first terminal apparatus may exclude a fourth resource from the resource selection window based on the first condition and the third resource, to select the first resource from remaining resources in the resource selection window.

For a definition of the first resource, refer to the foregoing descriptions of the first resource in S1001 and S1002.

The first terminal apparatus may exclude one or more fourth resources when the first condition is met.

Optionally, the first condition may include at least one of the following:

(1) A channel access type of the third terminal apparatus is a first type, and the first type is type 1 (Type1) or type 2 (Type2).

The channel access type of the third terminal apparatus being Type1 may be understood as that the third terminal apparatus expects to perform Type1 LBT on a channel on which the third resource is located, to access the channel on which the third resource is located.

The channel access type of the third terminal apparatus being Type2 may be understood as that the third terminal apparatus expects to perform Type2 LBT (which may be specifically Type2A, Type2B, or Type2C) on a channel on which the third resource is located, to access the channel on which the third resource is located.

It may be understood that, if the LBT succeeds, the third terminal apparatus may access the channel on which the third resource is located, and transmit information and/or data on the third resource.

Optionally, when the channel access type of the third terminal apparatus is Type2, because the third terminal apparatus expects to access, based on the Type2 LBT, the channel on which the third resource is located, the third resource may be a resource in an initial COT or a reserved COT of another terminal apparatus.

Optionally, the channel access type of the third terminal apparatus may be indicated by the second sidelink control information of the third terminal apparatus. For example, a first field in the second sidelink control information indicates that the channel access type is one of Type1 or Type2, or the first field indicates that the channel access type is one of Type1, Type2A, Type2B, or Type2C. Alternatively, the channel access type of the third terminal apparatus may be implicitly associated with the second sidelink control information of the third terminal apparatus. For example, the second sidelink control information indicates a first value, and the channel access type is Type1; or the second sidelink control information indicates a second value, and the channel access type is Type2.

(2) A CAPC value of the first terminal apparatus is greater than a CAPC value of the third terminal apparatus, and/or a CAPC value of the second terminal apparatus is greater than the CAPC value of the third terminal apparatus.

The CAPC value of the first terminal apparatus is used by the first terminal apparatus to perform channel access, for example, Type1 channel access. The CAPC value of the third terminal apparatus is used by the third terminal apparatus to perform channel access, for example, Type1 channel access.

Optionally, the CAPC value of the first terminal apparatus may be indicated by a network apparatus to the first terminal apparatus. Alternatively, the CAPC value of the first terminal apparatus may be preconfigured in the first terminal apparatus. Alternatively, the CAPC value of the first terminal apparatus is indicated by a higher layer of the first terminal apparatus.

Optionally, the CAPC value of the first terminal apparatus is related to the sidelink information of the first terminal apparatus.

Optionally, the CAPC value of the third terminal apparatus may be indicated by a network apparatus to the third terminal apparatus. Alternatively, the CAPC value of the third terminal apparatus may be preconfigured in the third terminal apparatus. Alternatively, the CAPC value of the third terminal apparatus is indicated by a higher layer of the third terminal apparatus.

Optionally, the CAPC value of the third terminal apparatus is related to sidelink information of the third terminal apparatus.

Optionally, the third terminal apparatus may indicate the CAPC value of the third terminal apparatus by using SCI, and the first terminal apparatus may determine the CAPC value of the third terminal apparatus based on the SCI of the third terminal apparatus.

Optionally, the first terminal apparatus may indicate the CAPC value of the first terminal apparatus by using SCI, and the third terminal apparatus may determine the CAPC of the first terminal apparatus based on the SCI of the first terminal apparatus.

For details, refer to the foregoing descriptions of S1001 and S1002.

(3) A CAPC value of the third terminal apparatus is less than a first CAPC threshold, and/or a CAPC value of the second terminal apparatus is greater than the first CAPC threshold.

The CAPC value of the third terminal apparatus is used by the third terminal apparatus to perform channel access, for example, Typel channel access.

Optionally, the first CAPC threshold may be preconfigured in the first terminal apparatus. Alternatively, the first CAPC threshold may be indicated by a network apparatus to the first terminal apparatus.

Optionally, the first CAPC threshold may be preconfigured in the third terminal apparatus. Alternatively, the first CAPC threshold may be indicated by a network apparatus to the third terminal apparatus.

Optionally, the first CAPC threshold may be preconfigured in the second terminal apparatus. Alternatively, the first CAPC threshold may be indicated by a network apparatus to the second terminal apparatus.

Optionally, the CAPC value of the third terminal apparatus may be indicated by a network apparatus to the third terminal apparatus; or the CAPC value of the third terminal apparatus is preconfigured for the third terminal apparatus; or the CAPC value of the third terminal apparatus is indicated by a higher layer of the third terminal apparatus. Optionally, the CAPC value of the third terminal apparatus is related to sidelink information of the third terminal apparatus.

Optionally, the third terminal apparatus may indicate the CAPC value of the third terminal apparatus by using SCI, and the first terminal apparatus may determine the CAPC of the third terminal apparatus based on the SCI of the third terminal apparatus. The SCI includes first-stage SCI and/or second-stage SCI.

For details, refer to the foregoing descriptions of S1001 and S 1002.

(4) An RSRP measurement value of the third resource is greater than or equal to an RSRP measurement value of the second resource.

The RSRP measurement value of the third resource is measured by the first terminal apparatus, and is determined by measuring a PSCCH and/or a PSSCH in which the SCI (second sidelink control information) for the reserved third resource is located.

The RSRP measurement value of the second resource is measured by the first terminal apparatus, and is determined by measuring a PSCCH and/or a PSSCH in which the SCI (first sidelink control information) for the reserved second resource is located.

For details, refer to the foregoing descriptions of S1001 and S 1002.

(5) An RSRP measurement value of the third resource is greater than or equal to a first RSRP threshold, and/ or an RSRP measurement value of the second resource is less than or equal to the first RSRP threshold.

The first RSRP threshold may be indicated by a network apparatus to the first terminal apparatus, or the first RSRP threshold may be preconfigured in the first terminal apparatus.

Alternatively, the first RSRP threshold may be indicated by a network apparatus to the third terminal apparatus, or the first RSRP threshold may be preconfigured in the third terminal apparatus.

Optionally, the first RSRP threshold may be related to at least any one of a priority of the first terminal apparatus, a CAPC value of the first terminal apparatus, a priority of the second terminal apparatus, a CAPC value of the second terminal apparatus, a priority of the third terminal apparatus, and a CAPC value of the third terminal apparatus.

For details, refer to the foregoing descriptions of S1001 and S 1002.

(6) A priority value of the third terminal apparatus is less than a priority value of the first terminal apparatus, and/or the priority value of the third terminal apparatus is less than a priority value of the second terminal apparatus.

A priority may also be understood as a priority for resource selection, and may be indicated by using sent SCI. For example, a service priority value of the third terminal apparatus may be indicated by using SCI of the third terminal apparatus. The priority value of the first terminal apparatus may be indicated by using SCI of the first terminal apparatus, or the priority value of the first terminal apparatus is indicated by a higher layer of the first terminal apparatus.

For details, refer to the foregoing descriptions of S1001 and S 1002.

(7) A service priority value of the third terminal apparatus is less than a first service priority threshold, and/or a service priority value of the second terminal apparatus is greater than the first service priority threshold.

Optionally, the first service priority threshold may be indicated by a network apparatus to the first terminal apparatus, or the first service priority threshold may be preconfigured in the first terminal apparatus.

Optionally, the first service priority threshold may be indicated by a network apparatus to the third terminal apparatus, or the first service priority threshold may be preconfigured in the third terminal apparatus.

For details, refer to the foregoing descriptions of S1001 and S 1002.

(8) A CPE length of the third terminal apparatus is greater than or equal to a CPE length of the first terminal apparatus, and/or the CPE length of the third terminal apparatus is greater than or equal to a CPE length of the second terminal apparatus.

The CPE length is a length of CPE in time domain.

Optionally, the CPE length of the third terminal apparatus may be a CPE length before the third resource. Alternatively, the CPE length of the third terminal apparatus may be a CPE length on the third resource.

Optionally, the CPE length of the third terminal apparatus may be determined based on a service priority value of the third terminal apparatus; or the CPE length of the third terminal apparatus may be determined based on a CAPC value of the third terminal apparatus; or the CPE length of the third terminal apparatus may be indicated by a higher layer of the third terminal apparatus.

Optionally, the CPE length of the first terminal apparatus may be determined based on a service priority value of the first terminal apparatus; or the CPE length of the first terminal apparatus may be determined based on a CAPC value of the first terminal apparatus; or the CPE length of the first terminal apparatus may be indicated by a higher layer of the first terminal apparatus.

For details, refer to the foregoing descriptions of S1001 and S 1002.

(9) A CPE length of the third terminal apparatus is greater than or equal to a first CPE threshold, and/or a CPE length of the second terminal apparatus is less than or equal to the first CPE threshold.

Optionally, the first CPE threshold may be indicated by a network apparatus to the first terminal apparatus, or the first CPE threshold may be preconfigured in the first terminal apparatus.

Optionally, the first CPE threshold may be indicated by a network apparatus to the second terminal apparatus, or the first CPE threshold may be preconfigured in the second terminal apparatus.

Optionally, the first CPE threshold may be indicated by a network apparatus to the third terminal apparatus, or the first CPE threshold may be preconfigured in the third terminal apparatus.

For details, refer to the foregoing descriptions of S1001 and S 1002.

(10) A backoff value of the third terminal apparatus is less than or equal to a backoff value of the first terminal apparatus, and/or the backoff value of the third terminal apparatus is less than or equal to a backoff value of the second terminal apparatus, where the backoff value is used for channel access.

The backoff value is used for channel access. For example, the backoff value of the third terminal apparatus may be a backoff value used by the third terminal apparatus to perform LBT on a channel on which the second resource is located.

Optionally, the backoff value may be a backoff value used for performing channel access based on TypeI LBT. For example, the backoff value may be a value of a counter N in the TypeI LBT.

Optionally, the third terminal apparatus may indicate the backoff value of the third terminal apparatus by using SCI. For example, the third terminal apparatus includes the backoff value of the third terminal apparatus in the SCI, and the first terminal apparatus may determine the backoff value of the third terminal apparatus based on the SCI of the third terminal apparatus.

Alternatively, the third terminal apparatus may indicate the backoff value of the second terminal apparatus by using COT information.

Alternatively, the first terminal apparatus may determine the backoff value of the second terminal apparatus based on a priority value (a service priority value of the second terminal apparatus) indicated by SCI of the third terminal apparatus.

Alternatively, the first terminal apparatus may determine the backoff value of the second terminal apparatus based on a CAPC value of the third terminal apparatus.

Optionally, the backoff value of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the backoff value of the first terminal apparatus based on a CAPC value of the first terminal apparatus.

For details, refer to the foregoing descriptions of S1001 and S1002.

(11) A backoff value of the third terminal apparatus is less than or equal to a first backoff threshold, and/or a backoff value of the second terminal apparatus is greater than or equal to the first backoff threshold, where the backoff value is used for channel access.

Optionally, the first backoff threshold may be indicated by a network apparatus to the first terminal apparatus, or the first backoff threshold may be preconfigured in the first terminal apparatus.

Optionally, the first backoff threshold may be indicated by a network apparatus to the third terminal apparatus, or the first backoff threshold may be preconfigured in the third terminal apparatus.

For details, refer to the foregoing descriptions of S1001 and S1002.

(12) A value of a contention window of the third terminal apparatus is less than or equal to a value of a contention window of the first terminal apparatus, and/or the value of the contention window of the third terminal apparatus is less than or equal to a value of a contention window of the second terminal apparatus, where the backoff value is used for channel access.

The value of the contention window is a length (or referred to as duration) of the contention window.

Optionally, the value of the contention window may be a value of a contention window used for performing channel access based on Typel LBT. For example, a contention window CW1 of the first terminal apparatus is a contention window for channel access performed by the first terminal apparatus before transmission on the first resource. For another example, a contention window CW2 of the second terminal apparatus is a contention window for channel access performed by the second terminal apparatus before transmission on the second resource. For another example, a contention window CW3 of the third terminal apparatus is a contention window for channel access performed by the third terminal apparatus before transmission on the third resource.

Optionally, the third terminal apparatus may indicate the value of the contention window of the third terminal apparatus by using SCI. For example, the third terminal apparatus includes the value of the contention window of the third terminal apparatus in the SCI, and the first terminal apparatus may determine the backoff value of the third terminal apparatus based on the SCI of the third terminal apparatus. Optionally, the SCI is SCI that indicates the third resource.

Alternatively, the third terminal apparatus may indicate the value of the contention window of the third terminal apparatus by using COT information.

Alternatively, the first terminal apparatus may determine the value of the contention window of the third terminal apparatus based on a priority value (a service priority value of the third terminal apparatus) indicated by SCI of the third terminal apparatus.

Alternatively, the first terminal apparatus may determine the value of the contention window of the third terminal apparatus based on a CAPC value of the third terminal apparatus.

Optionally, the value of the contention window of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the value of the contention window of the first terminal apparatus based on a CAPC value of the first terminal apparatus.

For details, refer to the foregoing descriptions of S1001 and S1002.

(13) A value of a contention window of the third terminal apparatus is less than or equal to a first contention window threshold, and/or a value of a contention window of the second terminal apparatus is greater than or equal to the first contention window threshold, where the contention window is used for channel access.

Optionally, the first contention window threshold may be indicated by a network apparatus to the first terminal apparatus, or the first contention window threshold may be preconfigured in the first terminal apparatus.

Optionally, the first contention window threshold may be indicated by a network apparatus to the third terminal apparatus, or the first contention window threshold may be preconfigured in the third terminal apparatus.

For details, refer to the foregoing descriptions of S1001 and S1002.

(14) The third terminal apparatus is not a receiving apparatus of the first terminal apparatus.

In a possible implementation, when at least one of the following cases is met, the first terminal apparatus may determine that the third terminal apparatus is not a receiving apparatus of the first terminal apparatus. Alternatively, when at least one of the following cases is met, the third terminal apparatus is not a receiving apparatus for data information sent by the first terminal apparatus. Alternatively, when at least one of the following cases is met, the first terminal apparatus is not a sending apparatus of the third terminal apparatus. Alternatively, when at least one of the following cases is met, the first terminal apparatus is not a sending apparatus for data information sent to the third terminal apparatus.

Case 1: A source ID (source ID) indicated in SCI of the first terminal apparatus is different from X1 LSBs in a third layer-2 destination ID (Destination Layer-2 ID) of the third terminal apparatus. A value of X1 is an integer from 1 to 24, for example, X1=8 or X1=16. For example, assuming that X1=8, the source ID indicated in the SCI of the first terminal apparatus is different from the 8 least significant bits in the third layer-2 destination ID of the third terminal apparatus.

Case 2: An SRC indicated in a MAC subheader of the first terminal apparatus is different from X2 MSBs in a third layer-2 destination ID of the third terminal apparatus. A value of X2 is an integer from 1 to 24, for example, X2=8 or X2=16. For example, assuming that X2=16, the SRC indicated in the MAC subheader of the first terminal apparatus is different from the 16 most significant bits in the third layer-2 destination ID of the third terminal apparatus.

Case 3: A destination ID indicated in SCI of the first terminal apparatus is different from X3 LSBs in a third layer-2 source ID of the third terminal apparatus. A value of X3 is an integer from 1 to 24, for example, X3=8 or X3=16. For example, assuming that X3=16, the destination ID indicated in the SCI of the first terminal apparatus is different from the 16 least significant bits in the third layer-2 source ID of the third terminal apparatus.

Case 4: A DST indicated in a MAC subheader of the first terminal apparatus is different from X4 MSBs in a third layer-2 source ID of the third terminal apparatus. A value of X4 is an integer from 1 to 24, for example, X4=8 or X4=16. For example, assuming that X4=8, the DST indicated in the MAC subheader of the first terminal apparatus is different from the 8 most significant bits in the third layer-2 source ID of the third terminal apparatus.

Optionally, a source ID indicated in SCI of the first terminal apparatus is X5 LSBs in a first layer-2 source ID of the first terminal apparatus, for example, X5=8; or an SRC indicated in a MAC subheader of the first terminal apparatus is X6 MSBs in a first layer-2 source ID of the first terminal apparatus, for example, X6=16. A value of X5 is an integer from 1 to 24, for example, X5=8 or X5=16. A value of X6 is an integer from 1 to 24, for example, X6=8 or X6=16. Optionally, X5+X6=24.

Optionally, a destination ID indicated in SCI of the first terminal apparatus is X7 LSBs in a first layer-2 destination ID of the first terminal apparatus; or a DST indicated in a MAC subheader of the first terminal apparatus is X8 MSBs of a first layer-2 destination ID of the first terminal apparatus. A value of X7 is an integer from 1 to 24, for example, X7=8 or X7=16. A value of X8 is an integer from 1 to 24, for example, X8=8 or X8=16. Optionally, X7+X8=24. For example, assuming that X7=16, and X8=8, the destination ID indicated in the SCI of the first terminal apparatus is the 16 least significant bits of the first layer-2 destination ID of the first terminal apparatus; or the DST indicated in the MAC subheader of the first terminal apparatus is the 8 most significant bits of the first layer-2 destination ID of the first terminal apparatus.

Further, when at least one of the foregoing cases 1 to 4 is met, a data transmission type indicated in the SCI of the first terminal apparatus may be unicast.

Optionally, the SCI of the first terminal apparatus may be, for example, any one of COT indication information, COT sharing information, and COT structure information.

Optionally, the first resource carries the SCI of the first terminal apparatus and/or the MAC subheader of the first terminal apparatus; or the first resource in M consecutive slots carries the SCI of the first terminal apparatus and/or the MAC subheader of the first terminal apparatus.

In a possible implementation, when at least one of the following cases is met, the first terminal apparatus may determine that the third terminal apparatus is not a receiving apparatus of the first terminal apparatus. Alternatively, it may be further understood that, when at least one of the following cases is met, the third terminal apparatus is not a receiving apparatus for data information sent by the first terminal apparatus. Alternatively, when at least one of the following cases is met, the first terminal apparatus is not a sending apparatus of the third terminal apparatus. Alternatively, when at least one of the following cases is met, the first terminal apparatus is not a sending apparatus for data information sent to the third terminal apparatus.

Case 5: A destination ID indicated in SCI of the first terminal apparatus is different from X3 LSBs in a third layer-2 destination ID of the third terminal apparatus. A value of X3 is an integer from 1 to 24, for example, X3=8 or X3=16. For example, assuming that X3=16, the destination ID indicated in the SCI of the first terminal apparatus is different from the 16 least significant bits in the third layer-2 destination ID of the third terminal apparatus.

Case 6: A DST indicated in a MAC subheader of the first terminal apparatus is different from X4 MSBs in a third layer-2 destination ID of the third terminal apparatus. A value of X4 is an integer from 1 to 24, for example, X4=8 or X4=16. For example, assuming that X4=8, the DST indicated in the MAC subheader of the first terminal apparatus is different from the 8 most significant bits in the third layer-2 destination ID of the third terminal apparatus.

Optionally, a destination ID indicated in SCI of the first terminal apparatus is X7 LSBs in a first layer-2 destination ID of the first terminal apparatus; or a DST indicated in a MAC subheader of the first terminal apparatus is X8 MSBs of a first layer-2 destination ID of the first terminal apparatus. A value of X7 is an integer from 1 to 24, for example, X7=8 or X7=16. A value of X8 is an integer from 1 to 24, for example, X8=8 or X8=16. Optionally, X7+X8=24. For example, assuming that X7=16, and X8=8, the destination ID indicated in the SCI of the first terminal apparatus is the 16 least significant bits of the first layer-2 destination ID of the first terminal apparatus; or the DST indicated in the MAC subheader of the first terminal apparatus is the 8 most significant bits of the first layer-2 destination ID of the first terminal apparatus.

Further, when at least one of the foregoing cases 5 and 6 is met, a data transmission type indicated in the SCI of the first terminal apparatus may be groupcast or broadcast.

Optionally, the SCI of the first terminal apparatus may be, for example, any one of COT indication information, COT sharing information, and COT structure information.

Optionally, the first resource carries the SCI of the first terminal apparatus and/or the MAC subheader of the first terminal apparatus; or the first resource in M consecutive slots carries the SCI of the first terminal apparatus and/or the MAC subheader of the first terminal apparatus.

In a possible implementation, when at least one of the following cases is met, the first terminal apparatus may determine that the third terminal apparatus is not a receiving apparatus of the first terminal apparatus. Alternatively, it may be further understood that, when at least one of the following cases is met, the third terminal apparatus is not a receiving apparatus for control information sent by the first terminal apparatus. Alternatively, when at least one of the following cases is met, the first terminal apparatus is not a sending apparatus of the third terminal apparatus. Alternatively, when at least one of the following cases is met, the first terminal apparatus is not a sending apparatus for control information sent to the third terminal apparatus.

Case 7: The third terminal apparatus does not decode SCI of the first terminal apparatus, where the SCI includes first-stage SCI and/or second-stage SCI.

Case 8: The third terminal apparatus does not decode first indication information of the first terminal apparatus. Optionally, the first indication information may be indicated by SCI of the first terminal apparatus. Optionally, the first indication information is at least one of COT sharing information, COT indication information, and COT structure information.

Not decoding may also be understood as not receiving or not monitoring. Not decoding, not receiving, or not monitoring may also be understood as that decoding cannot be performed, receiving cannot be performed, or monitoring cannot be performed.

For details, refer to the foregoing descriptions of S1001 and S1002.

(15) The first terminal apparatus is not a receiving apparatus of the third terminal apparatus.

In a possible implementation, when at least one of the following cases is met, the first terminal apparatus may determine that the first terminal apparatus is not a receiving apparatus of the third terminal apparatus. Alternatively, it may be further understood that, when at least one of the following cases is met, the first terminal apparatus is not a receiving apparatus for data information sent by the third terminal apparatus. Alternatively, when at least one of the following cases is met, the third terminal apparatus is not a sending apparatus of the first terminal apparatus. Alternatively, when at least one of the following cases is met, the third terminal apparatus is not a sending apparatus for data information sent to the first terminal apparatus.

Case 9: A source ID indicated in SCI of the third terminal apparatus is different from X1 LSBs in a first layer-2 destination ID of the first terminal apparatus. A value of X1 is an integer from 1 to 24, for example, X1=8 or X1=16. For details, refer to case 1.

Case 10: An SRC indicated in a MAC subheader of the third terminal apparatus is different from X2 MSBs in a first layer-2 destination ID of the first terminal apparatus. A value of X2 is an integer from 1 to 24, for example, X2=8 or X2=16. For details, refer to case 2.

Case 11: A destination ID indicated in SCI of the third terminal apparatus is different from X3 LSBs in a first layer-2 source ID of the first terminal apparatus. A value of X3 is an integer from 1 to 24, for example, X3=8 or X3=16. For details, refer to case 3.

Case 12: A DST indicated in a MAC subheader of the third terminal apparatus is different from X4 MSBs in a first layer-2 source ID of the first terminal apparatus. A value of X4 is an integer from 1 to 24, for example, X4=8 or X4=16. For details, refer to case 4.

Optionally, a source ID indicated in SCI of the third terminal apparatus is X5 LSBs in a third layer-2 source ID of the third terminal apparatus, or an SRC indicated in a MAC subheader of the third terminal apparatus is X6 MSBs of a third layer-2 source ID of the third terminal apparatus. A value of X5 is an integer from 1 to 24, for example, X5=8 or X5=16. A value of X6 is an integer from 1 to 24, for example, X6=8 or X6=16. Optionally, X5+X6=24.

Optionally, a destination ID indicated in SCI of the third terminal apparatus is X7 LSBs in a third layer-2 destination ID of the third terminal apparatus, or a DST indicated in a MAC subheader of the third terminal apparatus is X8 MSBs of a third layer-2 destination ID of the third terminal apparatus. A value of X7 is an integer from 1 to 24, for example, X7=8 or X7=16. A value of X8 is an integer from 1 to 24, for example, X8=8 or X8=16. Optionally, X7+X8=24. For details, refer to case 6.

Further, when at least one of the foregoing cases 9 to 12 is met, a data transmission type indicated in the SCI of the third terminal apparatus may be unicast.

In a possible implementation, when at least one of the following cases is met, the first terminal apparatus may determine that the first terminal apparatus is not a receiving apparatus of the third terminal apparatus. Alternatively, it may be further understood that, when at least one of the following cases is met, the first terminal apparatus is not a receiving apparatus for data information sent by the third terminal apparatus. Alternatively, when at least one of the following cases is met, the third terminal apparatus is not a sending apparatus of the first terminal apparatus. Alternatively, when at least one of the following cases is met, the third terminal apparatus is not a sending apparatus for data information sent to the first terminal apparatus.

Case 13: A destination ID indicated in SCI of the third terminal apparatus is different from X3 LSBs in a first layer-2 destination ID of the first terminal apparatus. A value of X3 is an integer from 1 to 24, for example, X3=8 or X3=16. For details, refer to case 7.

Case 14: A DST indicated in a MAC subheader of the third terminal apparatus is different from X4 MSBs in a first layer-2 destination ID of the first terminal apparatus. A value of X4 is an integer from 1 to 24, for example, X4=8 or X4=16. For details, refer to case 8.

Optionally, a destination ID indicated in SCI of the third terminal apparatus is X7 LSBs in a third layer-2 destination ID of the third terminal apparatus, or a DST indicated in a MAC subheader of the third terminal apparatus is X8 MSBs of a third layer-2 destination ID of the third terminal apparatus. A value of X7 is an integer from 1 to 24, for example, X7=8 or X7=16. A value of X8 is an integer from 1 to 24, for example, X8=8 or X8=16. Optionally, X7+X8=24. For details, refer to case 9.

Further, when at least one of the foregoing cases 13 and 14 is met, a cast type indicated in the SCI of the third terminal apparatus is groupcast or broadcast.

Optionally, a MAC subheader of the third terminal apparatus is carried by a third PSSCH, and SCI of the third terminal apparatus is carried by a third PSCCH. The third PSCCH schedules the third PSSCH. The third PSCCH and the third PSSCH are sidelink information of the third terminal apparatus.

In a possible implementation, when the following cases are met, the first terminal apparatus may determine that the first terminal apparatus is not a receiving apparatus of the third terminal apparatus. Alternatively, it may be further understood that, when at least one of the following cases is met, the first terminal apparatus is not a receiving apparatus for control information sent by the third terminal apparatus. Alternatively, when at least one of the following cases is met, the third terminal apparatus is not a sending apparatus of the first terminal apparatus. Alternatively, when at least one of the following cases is met, the third terminal apparatus is not a sending apparatus for control information sent to the first terminal apparatus.

Case 15: The first terminal apparatus does not decode SCI of the third terminal apparatus, where the SCI includes first-stage SCI and/or second-stage SCI.

Not decoding may also be understood as not receiving or not monitoring. Not decoding, not receiving, or not monitoring may also be understood as that decoding cannot be performed, receiving cannot be performed, or monitoring cannot be performed.

For details, refer to the foregoing descriptions of S1001 and S1002.

Optionally, the first terminal apparatus may select the fourth resource when the first condition is met. Optionally, the first condition may include at least one of the following:

(1) A channel access type of the third terminal apparatus is a first type, and the first type is type 1 (Type 1) or type 2 (Type2).

The channel access type of the third terminal apparatus being Type1 may be understood as that the third terminal apparatus expects to perform Type1 LBT on a channel on which the third resource is located, to access the channel on which the third resource is located.

The channel access type of the third terminal apparatus being Type2 may be understood as that the third terminal apparatus expects to perform Type2 LBT (which may be specifically Type2A, Type2B, or Type2C) on a channel on which the third resource is located, to access the channel on which the third resource is located.

It may be understood that, if the LBT succeeds, the third terminal apparatus may access the channel on which the third resource is located, and transmit information and/or data on the third resource.

Optionally, when the channel access type of the third terminal apparatus is Type2, because the third terminal apparatus expects to access, based on the Type2 LBT, the channel on which the third resource is located, the third resource may be a resource in an initial COT or a reserved COT of another terminal apparatus.

Optionally, the channel access type of the third terminal apparatus may be indicated by the second sidelink control information of the third terminal apparatus. For example, a first field in the second sidelink control information indicates that the channel access type is one of Type1 or Type2, or the first field indicates that the channel access type is one of Type1, Type2A, Type2B, or Type2C. Alternatively, the channel access type of the third terminal apparatus may be implicitly associated with the second sidelink control information of the third terminal apparatus. For example, the second sidelink control information indicates a first value, and the channel access type is Type1; or the second sidelink control information indicates a second value, and the channel access type is Type2.

(2) A CAPC value of the first terminal apparatus is less than a CAPC value of the third terminal apparatus, and/or a CAPC value of the second terminal apparatus is less than the CAPC value of the third terminal apparatus.

The CAPC value of the first terminal apparatus is used by the first terminal apparatus to perform channel access, for example, Type1 channel access. The CAPC value of the third terminal apparatus is used by the second terminal apparatus to perform channel access, for example, Type1 channel access.

Optionally, the CAPC value of the first terminal apparatus may be indicated by a network apparatus to the first terminal apparatus. Alternatively, the CAPC value of the first terminal apparatus may be preconfigured in the first terminal apparatus. Alternatively, the CAPC value of the first terminal apparatus is indicated by a higher layer of the first terminal apparatus.

Optionally, the CAPC value of the first terminal apparatus is related to the sidelink information of the first terminal apparatus.

Optionally, the CAPC value of the third terminal apparatus may be indicated by a network apparatus to the third terminal apparatus. Alternatively, the CAPC value of the third terminal apparatus may be preconfigured in the third terminal apparatus. Alternatively, the CAPC value of the third terminal apparatus is indicated by a higher layer of the first terminal apparatus.

Optionally, the CAPC value of the third terminal apparatus is related to sidelink information of the third terminal apparatus.

Optionally, the third terminal apparatus may indicate the CAPC value of the third terminal apparatus by using SCI, and the first terminal apparatus may determine the CAPC value of the second terminal apparatus based on the SCI of the third terminal apparatus.

Optionally, the first terminal apparatus may indicate the CAPC value of the first terminal apparatus by using SCI, and the third terminal apparatus may determine the CAPC of the third terminal apparatus based on the SCI of the first terminal apparatus.

For details, refer to the foregoing descriptions of S1001 and S 1002.

(3) A CAPC value of the third terminal apparatus is greater than a first CAPC threshold, and/or a CAPC value of the second terminal apparatus is less than the first CAPC threshold.

The CAPC value of the third terminal apparatus is used by the third terminal apparatus to perform channel access, for example, Typel channel access.

Optionally, the first CAPC threshold may be preconfigured in the first terminal apparatus. Alternatively, the first CAPC threshold may be indicated by a network apparatus to the first terminal apparatus.

Optionally, the first CAPC threshold may be preconfigured in the third terminal apparatus. Alternatively, the first CAPC threshold may be indicated by a network apparatus to the third terminal apparatus.

Optionally, the CAPC value of the third terminal apparatus may be indicated by a network apparatus to the third terminal apparatus; or the CAPC value of the third terminal apparatus is preconfigured for the third terminal apparatus; or the CAPC value of the third terminal apparatus is indicated by a higher layer of the third terminal apparatus. Optionally, the CAPC value of the third terminal apparatus is related to sidelink information of the third terminal apparatus.

Optionally, the third terminal apparatus may indicate the CAPC value of the third terminal apparatus by using SCI, and the first terminal apparatus may determine the CAPC of the third terminal apparatus based on the SCI of the third terminal apparatus. The SCI includes first-stage SCI and/or second-stage SCI.

For details, refer to the foregoing descriptions of S1001 and S 1002.

(4) An RSRP measurement value of the third resource is less than or equal to an RSRP measurement value of the second resource.

The RSRP measurement value of the third resource is measured by the first terminal apparatus, and is determined by measuring a PSCCH and/or a PSSCH in which the SCI (second sidelink control information) for the reserved third resource is located.

The RSRP measurement value of the second resource is measured by the first terminal apparatus, and is determined by measuring a PSCCH and/or a PSSCH in which the SCI (first sidelink control information) for the reserved second resource is located.

For details, refer to the foregoing descriptions of S1001 and S 1002.

(5) An RSRP measurement value of the third resource is less than or equal to a first RSRP threshold, and/ or an RSRP measurement value of the second resource is greater than or equal to the first RSRP threshold.

The first RSRP threshold may be indicated by a network apparatus to the first terminal apparatus, or the first RSRP threshold may be preconfigured in the first terminal apparatus.

Alternatively, the first RSRP threshold may be indicated by a network apparatus to the third terminal apparatus, or the first RSRP threshold may be preconfigured in the third terminal apparatus.

Optionally, the first RSRP threshold may be related to at least any one of a priority of the first terminal apparatus, a CAPC value of the first terminal apparatus, a priority of the second terminal apparatus, a CAPC value of the second terminal apparatus, a priority of the third terminal apparatus, and a CAPC value of the third terminal apparatus.

For details, refer to the foregoing descriptions of S1001 and S 1002.

(6) A priority value of the third terminal apparatus is greater than a priority value of the first terminal apparatus, and/or the priority value of the third terminal apparatus is greater than a priority value of the second terminal apparatus.

A priority may also be understood as a priority for resource selection, and may be indicated by using sent SCI. For example, a service priority value of the third terminal apparatus may be indicated by using SCI of the third terminal apparatus. The priority value of the first terminal apparatus may be indicated by using SCI of the first terminal apparatus, or the priority value of the first terminal apparatus is indicated by a higher layer of the first terminal apparatus.

For details, refer to the foregoing descriptions of S1001 and S 1002.

(7) A service priority value of the third terminal apparatus is greater than a first service priority threshold, and/or a service priority value of the second terminal apparatus is less than the first service priority threshold.

Optionally, the first service priority threshold may be indicated by a network apparatus to the first terminal apparatus, or the first service priority threshold may be preconfigured in the first terminal apparatus.

Optionally, the first service priority threshold may be indicated by a network apparatus to the third terminal apparatus, or the first service priority threshold may be preconfigured in the third terminal apparatus.

For details, refer to the foregoing descriptions of S1001 and S 1002.

(8) A CPE length of the third terminal apparatus is less than or equal to a CPE length of the first terminal apparatus, and/or the CPE length of the third terminal apparatus is less than or equal to a CPE length of the second terminal apparatus.

The CPE length is a length of CPE in time domain.

Optionally, the CPE length of the third terminal apparatus may be a CPE length before the third resource. Alternatively, the CPE length of the third terminal apparatus may be a CPE length on the third resource.

Optionally, the CPE length of the third terminal apparatus may be determined based on a service priority value of the third terminal apparatus; or the CPE length of the third terminal apparatus may be determined based on a CAPC value of the third terminal apparatus; or the CPE length of the third terminal apparatus may be indicated by a higher layer of the third terminal apparatus.

Optionally, the CPE length of the first terminal apparatus may be determined based on a service priority value of the first terminal apparatus; or the CPE length of the first terminal apparatus may be determined based on a CAPC value of the first terminal apparatus; or the CPE length of the first terminal apparatus may be indicated by a higher layer of the first terminal apparatus.

For details, refer to the foregoing descriptions of S1001 and S 1002.

(9) A CPE length of the third terminal apparatus is less than or equal to a first CPE threshold, and/or a CPE length of the second terminal apparatus is greater than or equal to the first CPE threshold.

Optionally, the first CPE threshold may be indicated by a network apparatus to the first terminal apparatus, or the first CPE threshold may be preconfigured in the first terminal apparatus.

Optionally, the first CPE threshold may be indicated by a network apparatus to the second terminal apparatus, or the first CPE threshold may be preconfigured in the second terminal apparatus.

Optionally, the first CPE threshold may be indicated by a network apparatus to the third terminal apparatus, or the first CPE threshold may be preconfigured in the third terminal apparatus.

For details, refer to the foregoing descriptions of S1001 and S1002.

(10) A backoff value of the third terminal apparatus is greater than or equal to a backoff value of the first terminal apparatus, and/or the backoff value of the third terminal apparatus is greater than or equal to a backoff value of the second terminal apparatus, where the backoff value is used for channel access.

The backoff value is used for channel access. For example, the backoff value of the third terminal apparatus may be a backoff value used by the third terminal apparatus to perform LBT on a channel on which the second resource is located.

Optionally, the backoff value may be a backoff value used for performing channel access based on Typel LBT. For example, the backoff value may be a value of a counter N in the Typel LBT.

Optionally, the third terminal apparatus may indicate the backoff value of the third terminal apparatus by using SCI. For example, the third terminal apparatus includes the backoff value of the third terminal apparatus in the SCI, and the first terminal apparatus may determine the backoff value of the third terminal apparatus based on the SCI of the third terminal apparatus.

Alternatively, the third terminal apparatus may indicate the backoff value of the second terminal apparatus by using COT information.

Alternatively, the first terminal apparatus may determine the backoff value of the second terminal apparatus based on a priority value (a service priority value of the second terminal apparatus) indicated by SCI of the third terminal apparatus.

Alternatively, the first terminal apparatus may determine the backoff value of the second terminal apparatus based on a CAPC value of the third terminal apparatus.

Optionally, the backoff value of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the backoff value of the first terminal apparatus based on a CAPC value of the first terminal apparatus.

For details, refer to the foregoing descriptions of S1001 and S1002.

(11) A backoff value of the third terminal apparatus is greater than or equal to a first backoff threshold, and/or a backoff value of the second terminal apparatus is less than or equal to the first backoff threshold, where the backoff value is used for channel access.

Optionally, the first backoff threshold may be indicated by a network apparatus to the first terminal apparatus, or the first backoff threshold may be preconfigured in the first terminal apparatus.

Optionally, the first backoff threshold may be indicated by a network apparatus to the third terminal apparatus, or the first backoff threshold may be preconfigured in the third terminal apparatus.

For details, refer to the foregoing descriptions of S1001 and S1002.

(12) A value of a contention window of the third terminal apparatus is greater than or equal to a value of a contention window of the first terminal apparatus, and/or the value of the contention window of the third terminal apparatus is greater than or equal to a value of a contention window of the second terminal apparatus, where the backoff value is used for channel access.

The value of the contention window is a length (or referred to as duration) of the contention window.

Optionally, the value of the contention window may be a value of a contention window used for performing channel access based on TypeI LBT. For example, a contention window CW1 of the first terminal apparatus is a contention window for channel access performed by the first terminal apparatus before transmission on the first resource. For another example, a contention window CW2 of the second terminal apparatus is a contention window for channel access performed by the second terminal apparatus before transmission on the second resource. For another example, a contention window CW3 of the third terminal apparatus is a contention window for channel access performed by the third terminal apparatus before transmission on the third resource.

Optionally, the third terminal apparatus may indicate the value of the contention window of the third terminal apparatus by using SCI. For example, the third terminal apparatus includes the value of the contention window of the third terminal apparatus in the SCI, and the first terminal apparatus may determine the backoff value of the second terminal apparatus based on the SCI of the third terminal apparatus. Optionally, the SCI is SCI that indicates the third resource.

Alternatively, the third terminal apparatus may indicate the value of the contention window of the third terminal apparatus by using COT information.

Alternatively, the first terminal apparatus may determine the value of the contention window of the third terminal apparatus based on a priority value (a service priority value of the third terminal apparatus) indicated by SCI of the third terminal apparatus.

Alternatively, the first terminal apparatus may determine the value of the contention window of the third terminal apparatus based on a CAPC value of the third terminal apparatus.

Optionally, the value of the contention window of the first terminal apparatus is indicated by a network apparatus to the first terminal apparatus, or preconfigured in the first terminal apparatus, or indicated by a higher layer of the first terminal apparatus.

Alternatively, the first terminal apparatus may determine the value of the contention window of the first terminal apparatus based on a CAPC value of the first terminal apparatus.

For details, refer to the foregoing descriptions of S1001 and S 1002.

(13) A value of a contention window of the third terminal apparatus is greater than or equal to a first contention window threshold, and/or a value of a contention window of the second terminal apparatus is less than or equal to the first contention window threshold, where the contention window is used for channel access.

Optionally, the first contention window threshold may be indicated by a network apparatus to the first terminal apparatus, or the first contention window threshold may be preconfigured in the first terminal apparatus.

Optionally, the first contention window threshold may be indicated by a network apparatus to the third terminal apparatus, or the first contention window threshold may be preconfigured in the third terminal apparatus.

For details, refer to the foregoing descriptions of S1001 and S 1002.

(14) The third terminal apparatus is not a receiving apparatus of the first terminal apparatus.

For details about the condition, refer to the foregoing descriptions of different cases in which the third terminal apparatus is not a receiving apparatus of the first terminal apparatus in the description that the first terminal apparatus excludes the fourth resource based on the first condition. Details are not described herein again.

(15) The first terminal apparatus is not a receiving apparatus of the third terminal apparatus.

For details about the condition, refer to the foregoing descriptions of different cases in which the first terminal apparatus is not a receiving apparatus of the third terminal apparatus in the description that the first terminal apparatus excludes the fourth resource based on the first condition. Details are not described herein again.

After determining that the first condition is met, the first terminal apparatus may exclude the fourth resource or select the fourth resource based on the third resource. The following provides specific descriptions.

Optionally, that the first terminal apparatus excludes the fourth resource based on the third resource may include at least one of the following:

the third resource; a resource in an RB set in which the third resource is located; a resource whose frequency domain location is the same as a frequency domain location of the third resource and whose time domain location is in third duration before the third resource; a resource whose frequency domain location is the same as a frequency domain location of the third resource and whose time domain location is in fourth duration after the third resource; a resource whose time domain location is in third duration before the third resource in an RB set in which the third resource is located; or a resource whose time domain location is in fourth duration after the third resource in an RB set in which the third resource is located.

Optionally, that the first terminal apparatus selects the fourth resource based on the third resource may include at least one of the following:

the third resource; a resource in an RB set in which the third resource is located; a resource whose frequency domain location is the same as a frequency domain location of the third resource and whose time domain location is in third duration before the third resource; a resource whose frequency domain location is the same as a frequency domain location of the third resource and whose time domain location is in fourth duration after the third resource; a resource whose time domain location is in third duration before the third resource in an RB set in which the third resource is located; or a resource whose time domain location is in fourth duration after the third resource in an RB set in which the second resource is located.

The following separately provides detailed descriptions.

(1) Third resource:

That the first terminal apparatus excludes the third resource may also be referred to as that the first terminal apparatus excludes a resource that overlaps the third resource.

The first terminal apparatus determines a reserved resource (a third resource) of the third terminal apparatus, and the first terminal apparatus excludes the third resource from a candidate resource set, or the terminal apparatus does not select the third resource to transmit the SL information.

For example, the first terminal apparatus may select a resource that overlaps the third resource to transmit the sidelink information of the first terminal apparatus.

Optionally, the third resource includes A1 subchannels, and A1 is a positive integer. Optionally, the third resource belongs to A2 RB sets, where A2 is a positive integer.

For example, as shown in FIG. 23, the first terminal apparatus excludes the third resource.

(2) Resource in the RB set in which the third resource is located:

"In the RB set in which the third resource is located" may be, for example, "a time domain location is a slot in which the third resource is located, and a frequency domain location belongs to the RB set in which the third resource is located". Correspondingly, the resource in the RB set in which the third resource is located may be, for example, a resource whose time domain location is the slot in which the third resource is located and whose frequency domain location belongs to the RB set in which the third resource is located.

The resource in the RB set in which the third resource is located may also be understood as the fourth resource. A time domain resource of the fourth resource is a slot in which the third resource is located, and a frequency domain resource of the fourth resource is a resource in the RB set in which the third resource is located. Optionally, the frequency domain resource of the fourth resource includes all subchannels of the RB set in which the third resource is located.

The first terminal apparatus may exclude the fourth resource, or the first terminal apparatus may exclude a resource that overlaps the fourth resource, or the first terminal apparatus selects a resource that does not overlap the fourth resource as the first resource.

Optionally, the third resource includes A1 subchannels, and A1 is a positive integer. Optionally, the third resource belongs to A2 RB sets, where A2 is a positive integer.

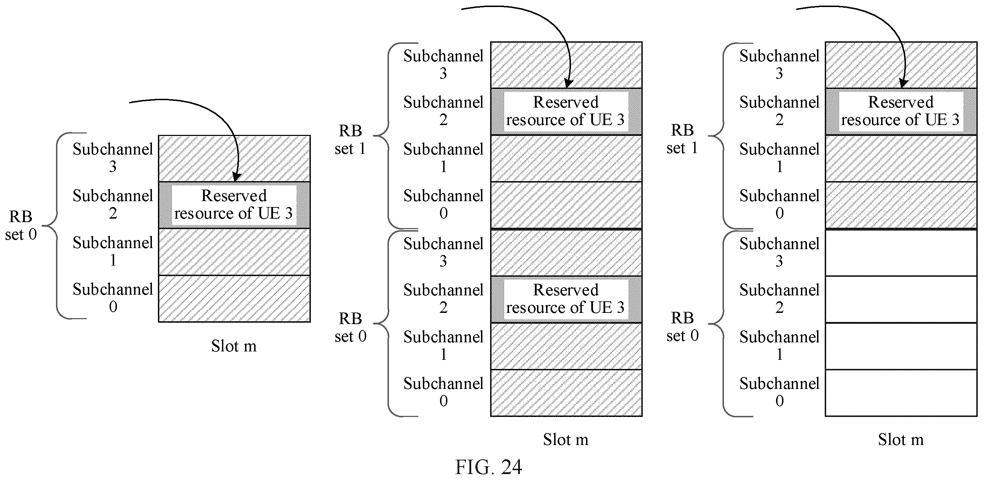

For example, as shown in FIG. 24, the first terminal apparatus may exclude the resource in the RB set in which the third resource is located.

Optionally, the first terminal apparatus may not exclude a resource that does not overlap the RB set in which the third resource is located. Alternatively, the first terminal apparatus may select a resource that does not overlap the RB set in which the third resource is located as the available resource for transmitting the sidelink information of the first terminal apparatus.

(3) Resource in the time unit in which the third resource is located:

The fourth resource is the resource in the time unit in which the third resource is located. The resource in the time unit in which the third resource is located may also be understood as a resource in the slot in which the third resource is located.

The first terminal apparatus may exclude the fourth resource, to select the first resource from remaining resources. In other words, the first terminal apparatus may select a resource that does not overlap the fourth resource as the first resource.

(4) Resource whose frequency domain location is the same as the frequency domain location of the third resource:

A frequency domain location of the fourth resource is the same as the frequency domain location of the third resource, and a time domain location of the fourth resource is different from a time domain location of the third resource.

Optionally, the time domain location of the fourth resource may be in third duration before the third resource. In other words, a resource whose frequency domain location is the same as the frequency domain location of the third resource and whose time domain location is in the third duration before the third resource is the fourth resource.

The time domain location of the fourth resource belongs to a slot in the third duration before the third resource. It may be understood that the third duration includes one or more fourth resources.

Optionally, the time domain location of the resource in the third duration before the third resource is a resource in at least one slot from the third duration before the third resource to a last slot before the third resource.

The first terminal apparatus excludes a resource whose frequency domain location is the same as the frequency domain location of the third resource and whose time domain location is in the third duration before the third resource. In other words, the first terminal apparatus may select a resource that does not overlap the fourth resource as the first resource.

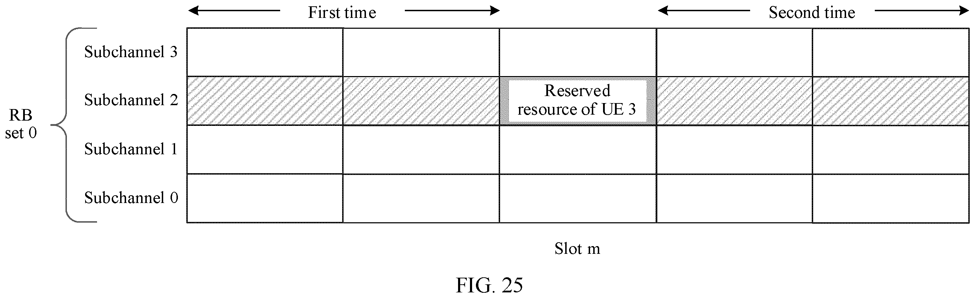

For example, as shown in FIG. 25, the first terminal apparatus may exclude the resource whose frequency domain location is the same as the frequency domain location of the third resource and whose time domain location is in the third duration before the third resource.

Optionally, a granularity of the third duration may be a slot. In other words, the third duration may include one or more slots.

Optionally, the third duration is related to at least one of the following: a priority value indicated by the second sidelink control information of the third terminal apparatus (a priority value of the third terminal apparatus), a CAPC value of the third terminal apparatus, a CPE length of the third terminal apparatus, a channel access type (for example, Typel or Type2) of the third terminal apparatus, a backoff value of the third terminal apparatus, a value of a contention window of the third terminal apparatus, an RSRP measurement value of the third resource, a priority value indicated by the first sidelink control information of the second terminal apparatus (a priority value of the second terminal apparatus), a CAPC value of the second terminal apparatus, a CPE length of the second terminal apparatus, a channel access type (for example, Typel or Type2) of the second terminal apparatus, a backoff value of the second terminal apparatus, a value of a contention window of the second terminal apparatus, an RSRP measurement value of the second resource, a priority value of a resource selected by the first terminal apparatus (a priority value of the second terminal apparatus), a CAPC of the first terminal apparatus, a CPE length of the first terminal apparatus, a channel access type of the first terminal apparatus, a backoff value of the first terminal apparatus, a value of a contention window of the first terminal apparatus, a channel busy degree, and a channel occupation degree.

In the foregoing parameters related to the third duration, for parameters such as the service priority value, the CAPC value, the CPE length, the channel access type, the backoff value, the value of the contention window, and the RSRP measurement value of the first terminal apparatus, the second terminal apparatus, or the third terminal apparatus, refer to the foregoing descriptions of the related parameters in the first condition. Details are not described herein again.

In the foregoing parameters related to the third duration, the channel busy degree is a busy degree of a channel on which the third resource is located, for example, may be a CBR of the channel on which the third resource is located. The channel occupancy degree is an occupancy degree of a channel on which the third resource is located, for example, may be a CR of the channel on which the third resource is located.

For details about the parameters related to the third duration, refer to the foregoing description of the parameters related to the first duration.

Optionally, the time domain location of the fourth resource may be in fourth duration after the third resource. In other words, a resource whose frequency domain location is the same as the frequency domain location of the third resource and whose time domain location is in the fourth duration after the third resource may be the fourth resource.

The time domain location of the fourth resource belongs to a slot in the fourth duration after the third resource. It may be understood that the fourth duration includes one or more fourth resources.

Optionally, the time domain location of the resource in the fourth after the third resource is a resource in at least one slot from a $1^{st}$ slot after the third resource to the fourth duration after the third resource.

The first terminal apparatus excludes a resource whose frequency domain location is the same as the frequency domain location of the third resource and whose time domain location is in the fourth duration after the third resource. In other words, the first terminal apparatus may select a resource that does not overlap the fourth resource as the first resource.

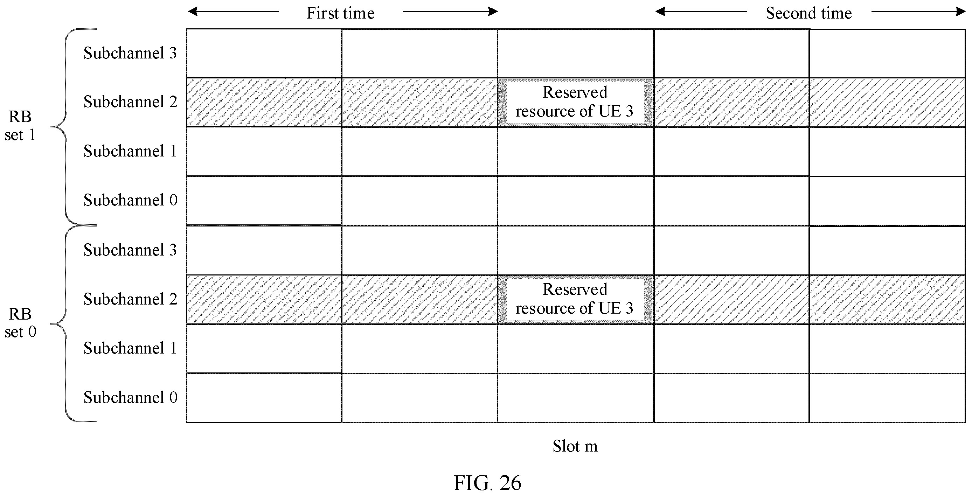

For example, as shown in FIG. 26, the first terminal apparatus may exclude the resource whose frequency domain location is the same as the frequency domain location of the third resource and whose time domain location is in the fourth duration after the third resource.

Optionally, a granularity of the fourth duration may be a slot. In other words, the fourth duration may include one or more slots.

Optionally, the fourth duration is related to at least one of the following: a priority value indicated by the second sidelink control information of the third terminal apparatus (a priority value of the third terminal apparatus), a CAPC value of the third terminal apparatus, a CPE length of the third terminal apparatus, a channel access type (for example, Typel or Type2) of the third terminal apparatus, a backoff value of the third terminal apparatus, a value of a contention window of the third terminal apparatus, an RSRP measurement value of the third resource, a priority value indicated by the first sidelink control information of the second terminal apparatus (a priority value of the second terminal apparatus), a CAPC value of the second terminal apparatus, a CPE length of the second terminal apparatus, a channel access type (for example, Type1 or Type2) of the second terminal apparatus, a backoff value of the second terminal apparatus, a value of a contention window of the second terminal apparatus, an RSRP measurement value of the second resource, a priority value of a resource selected by the first terminal apparatus (a priority value of the second terminal apparatus), a CAPC of the first terminal apparatus, a CPE length of the first terminal apparatus, a channel access type of the first terminal apparatus, a backoff value of the first terminal apparatus, a value of a contention window of the first terminal apparatus, a channel busy degree, and a channel occupation degree.

For details about the parameters related to the fourth duration, refer to the foregoing description of the parameters related to the third duration.

(3) Resource whose time domain location is in the third duration before the third resource in the RB set in which the third resource is located:

A resource whose frequency domain location is the same as the frequency domain location of the RB set in which the third resource is located and whose time domain location is in the fourth duration after the third resource may be also understood as the fourth resource. Alternatively, a frequency domain location of the fourth resource is the same as the RB set in which the third resource is located, and a time domain location of the fourth resource belongs to a slot in the fourth duration after the third resource. It may be understood that the fourth duration includes one or more fourth resources.

Optionally, the time domain location of the resource in the thirdfirst duration before the third resource is a resource in at least one slot from the third duration before the third resource to a last slot before the third resource.

The first terminal apparatus excludes a resource that overlaps a resource in the third duration before the third resource in the RB set in which the third resource is located. In other words, the first terminal apparatus may select a resource that does not overlap the fourth resource as the first resource.

In a possible implementation, the first terminal apparatus may exclude a resource that overlaps a resource in the third duration before a time domain end location of the third resource in the RB set in which the third resource is located.

In a possible implementation, the first terminal apparatus may exclude a resource that overlaps a resource in the third duration before a time domain start location of the third resource in the RB set in which the third resource is located.

Optionally, excluding a resource that overlaps "a resource in the third duration before the RB set in which the third resource is located" includes: excluding "a resource whose frequency domain resource is the same as that of the RB set in which the third resource is located and whose time domain resource belongs to at least one slot from the third duration before the third resource to a last slot before the third resource".

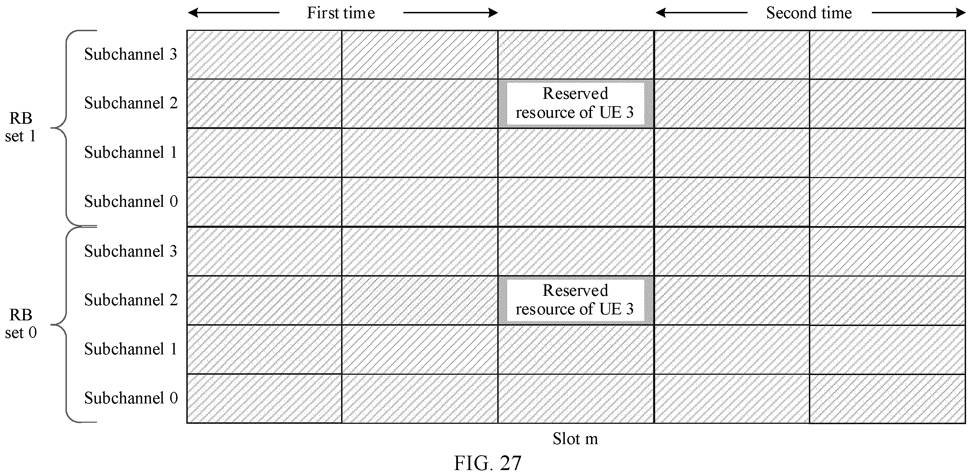

For example, FIG. 27 shows two implementations in which the first terminal apparatus excludes the resource that overlaps the resource in the third duration before the third resource in the RB set in which the third resource is located.

(4) Resource whose time domain location is in the fourth duration after the third resource in the RB set in which the third resource is located:

The first terminal apparatus excludes a resource that overlaps a resource in the fourth duration after the third resource in the RB set in which the third resource is located.

Optionally, the time domain location of the resource in the fourth after the third resource is a resource in at least one slot from a $1^{st}$ slot after the third resource to the fourth duration after the third resource.

In a possible implementation, the first terminal apparatus may exclude a resource that overlaps a resource in the fourth duration after a time domain start location of the third resource in the RB set in which the third resource is located.

In another possible implementation, the first terminal apparatus may exclude a resource that overlaps a resource in the fourth duration after a time domain end location of the third resource in the RB set in which the third resource is located.

Optionally, excluding a resource that overlaps "a resource in the fourth duration after the RB set in which the third resource is located" includes: excluding "a resource whose frequency domain resource is the same as that of the RB set in which the third resource is located and whose time domain resource belongs to at least one slot from a $1^{st}$ slot after the third resource to the fourth duration after the third resource".

For example, FIG. 27 shows two implementations in which the first terminal apparatus excludes the resource that overlaps the resource in the fourth duration after the third resource in the RB set in which the third resource is located.

The first terminal apparatus may select the first resource from remaining resources after excluding the fourth resource.

In a possible implementation, the first terminal apparatus may use the remaining resources as the first resource.

In another possible implementation, the first terminal apparatus may select some of the remaining resources as the first resource. For example, after excluding the fourth resource, the first terminal apparatus may further exclude a resource from the remaining resources according to an existing step of excluding a candidate resource in the resource selection window, and then use the remaining resources as the first resource.

Optionally, a time granularity of the first resource selected by the first terminal apparatus may be a slot. In other words, the first resource may include one or more slots in time domain.

Optionally, a frequency domain granularity of the first resource selected by the first terminal apparatus may be $L_{RS}$ RB sets or $L_{SubCH}$ subchannels. For details, refer to the foregoing descriptions of the frequency domain granularity of the first resource in S1001 and S1002.

It should be noted that the method embodiment shown in FIG. 15 and the method embodiment shown in FIG. 22 may be applied independently or in combination.

It should be noted that a time sequence of the steps in the method embodiment shown in FIG. 15 and the method embodiment shown in FIG. 22 is not limited in this application. The steps in the method embodiment shown in FIG. 15 and the method embodiment shown in FIG. 22 may be performed according to a specific time sequence, or may be performed simultaneously. For example, S1001, S1002, S1501, and S1502 may be performed simultaneously, or S1001 and S1501 may be performed before S1002 and S1502 according to a specific time sequence.

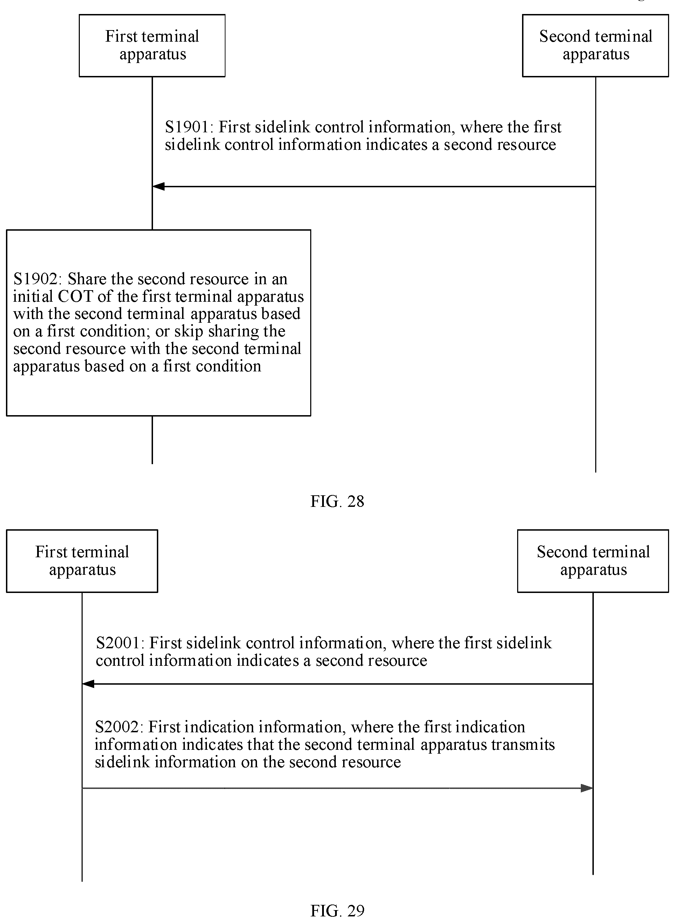

As shown in FIG. 28, an embodiment of this application further provides another communication method. The communication method includes S1901 and S1902.

S1901: Receive first sidelink control information from a second terminal apparatus, where the first sidelink control information indicates a second resource.

Step S1901 may be performed by the first terminal apparatus.

S1902: Share the second resource in an initial COT of the first terminal apparatus with a second terminal apparatus based on the first condition; or skip sharing the second resource with the second terminal apparatus based on the first condition.

Step S1902 may be performed by the first terminal apparatus.

The following describes the method by using an example in which the first terminal apparatus performs the method. However, an entity for performing interaction is not limited in this application. Alternatively, the method may be performed by a chip, a chip system, or a processor that supports the first terminal apparatus in implementing the method, or may be a logical module or software that can implement all or some functions of the first terminal apparatus.

That the first terminal apparatus shares the COT with the second terminal apparatus may also be understood as: the first terminal apparatus sends a COT sharing indication to the second terminal apparatus, or the first terminal apparatus shares the second resource in the COT with the second terminal apparatus, or the first terminal apparatus shares the COT with the second terminal apparatus on the second resource, or the first terminal apparatus shares the COT with the second terminal apparatus in a slot in which the second resource is located.

That the first terminal apparatus does not share the COT with the second terminal apparatus may also be understood as: the first terminal apparatus does not send a COT sharing indication to the second terminal apparatus, or the first terminal apparatus does not share the second resource in the COT with the second terminal apparatus, or the first terminal apparatus does not share the COT with the second terminal apparatus on the second resource, or the first terminal apparatus does not share the COT with the second terminal apparatus in a slot in which the second resource is located.

Correspondingly, as shown in FIG. 29, an embodiment of this application further provides another communication method. The communication method includes S2001 and S2002.

S2001: Send first sidelink control information, where the first sidelink control information indicates a second resource.

Step S2001 may be performed by a second terminal apparatus.

S2002: Receive first indication information from a first terminal apparatus, where the first indication information indicates that the second terminal apparatus transmits sidelink information on the second resource.

Step S2001 may be performed by the second terminal apparatus.

The following describes the method by using an example in which the second terminal apparatus performs the method. However, an entity for performing interaction is not limited in this application. Alternatively, the method may be performed by a chip, a chip system, or a processor that supports the second terminal apparatus in implementing the method, or may be a logical module or software that can implement all or some functions of the second terminal apparatus.

That the first indication information indicates that the second terminal apparatus transmits the sidelink information on the second resource may also be understood as follows: The first indication information indicates that the second terminal apparatus shares a COT, or the first indication information indicates that the second terminal apparatus shares the second resource, or the first indication information indicates that the second terminal apparatus shares the second resource in the COT. The COT may also be referred to as M consecutive slots.

For S1901, the first terminal apparatus receives the first sidelink control information sent by the second terminal apparatus, and the first terminal apparatus may determine, based on the second resource indicated by the first sidelink control information, that the second resource is reserved by the second terminal apparatus.

Optionally, the first terminal apparatus may receive the first sidelink control information in a resource sensing window of the first terminal apparatus. The second resource indicated by the first sidelink control information may be in a resource selection window of the first terminal apparatus.

Optionally, the first sidelink control information may indicate a time-frequency domain location of the second resource.

Optionally, the first sidelink control information may be existing information indicating a reserved time-frequency resource, for example, SCI, first-stage SCI, or second-stage SCI, or the first sidelink control information may be COT indication information (or COT sharing information, COT structure information, or the like), or the first sidelink control information may be newly defined sidelink information. This is not limited in this application.

For implementation of S2001, refer to S1901. Details are not described herein again.

In S1902, when the first condition is met, the first terminal apparatus may determine that the initial COT may be shared with the second terminal apparatus.

S2002: When a first condition is met, the second terminal apparatus determines that the initial COT of the first terminal apparatus may be shared.

Optionally, the first condition for determining to share the COT may include at least one of the following:

(1) The second terminal apparatus is a receiving apparatus of the first terminal apparatus.

In a possible implementation, when at least one of the following cases is met, the first terminal apparatus may determine that the second terminal apparatus is a receiving apparatus of the first terminal apparatus. Alternatively, it may be further understood that, when at least one of the following cases is met, the second terminal apparatus is a receiving apparatus for data information sent by the first terminal apparatus. Alternatively, it may be further understood that, when at least one of the following cases is met, the first terminal apparatus is a sending apparatus of the second terminal apparatus. Alternatively, it may be further understood that, when at least one of the following cases is met, the first terminal apparatus is a sending apparatus for data information sent to the second terminal apparatus.

Case 1: A source ID (source ID) indicated in SCI of the first terminal apparatus is the same as X1 LSBs in a second layer-2 destination ID (Destination Layer-2 ID) of the second terminal apparatus. A value of X1 is an integer from 1 to 24, for example, X1=8 or X1=16. For example, assuming that X1=8, the source ID indicated in the SCI of the first terminal apparatus is the same as the 8 least significant bits in the second layer-2 destination ID of the second terminal apparatus.

Case 2: An SRC (source) indicated in a MAC subheader of the first terminal apparatus is the same as X2 MSBs in a second layer-2 destination ID of the second terminal apparatus. A value of X2 is an integer from 1 to 24, for example, X2=8 or X2=16. For example, assuming that X2=16, the SRC indicated in the MAC subheader of the first terminal apparatus is the same as the 16 most significant bits in the second layer-2 destination ID of the second terminal apparatus.

Case 3: A destination ID indicated in SCI of the first terminal apparatus is the same as X3 LSBs in a second layer-2 source ID of the second terminal apparatus. A value of X3 is an integer from 1 to 24, for example, X3=8 or X3=16. For example, assuming that X3=16, the destination ID indicated in the SCI of the first terminal apparatus is the same as the 16 least significant bits in the second layer-2 source ID of the second terminal apparatus.

Case 4: A DST (Destination) indicated in a MAC subheader of the first terminal apparatus is the same as X4 MSBs in a second layer-2 source ID of the second terminal apparatus. A value of X4 is an integer from 1 to 24, for example, X4=8 or X4=16. For example, assuming that X4=8, the DST indicated in the MAC subheader of the first terminal apparatus is the same as the 8 most significant bits in the second layer-2 source ID of the second terminal apparatus.

Optionally, a source ID indicated in SCI of the first terminal apparatus may be X5 LSBs in a first layer-2 source ID of the first terminal apparatus, where a value of X5 is an integer from 1 to 24, for example, X5=8 or X5=16. For example, assuming that X5=8, the source ID indicated in the SCI of the first terminal apparatus may be the 8 least significant bits in the first layer-2 source ID of the first terminal apparatus.

Optionally, an SRC indicated in a MAC subheader of the first terminal apparatus may be X6 MSBs in a first layer-2 source ID of the first terminal apparatus, where a value of X6 is an integer from 1 to 24, for example, X6=8 or X6=16. For example, assuming that X6=16, the SRC indicated in the MAC subheader of the first terminal apparatus may be the 16 most significant bits in the first layer-2 source ID of the first terminal apparatus.

Optionally, X5+X6=24.

Optionally, a destination ID indicated in SCI of the first terminal apparatus may be X7 LSBs in a first layer-2 destination ID of the first terminal apparatus, where a value of X7 is an integer from 1 to 24, for example, X7=8 or X7=16. For example, assuming that X7=16, the destination ID indicated in the SCI of the first terminal apparatus is the 16 least significant bits in the first layer-2 destination ID of the first terminal apparatus.

Optionally, a DST indicated in a MAC subheader of the first terminal apparatus is X8 MSBs in a first layer-2 destination ID of the first terminal apparatus. A value of X8 is an integer from 1 to 24, for example, X8=8 or X8=16. For example, assuming that X8=8, the DST indicated in the MAC subheader of the first terminal apparatus is the 8 most significant bits in the first layer-2 destination ID of the first terminal apparatus. Optionally, X7+X8=24.

Further, when at least one of the foregoing cases 1 to 4 is met, a data transmission type indicated in the SCI of the first terminal apparatus may be unicast.

Optionally, the SCI of the first terminal apparatus may be, for example, any one of COT indication information, COT sharing information, and COT structure information.

Optionally, SCI of the first terminal apparatus and/or a MAC subheader of the first terminal apparatus may be carried in a resource used to transmit sidelink information of the first terminal apparatus. Alternatively, a first resource in the resources in the M consecutive slots carries SCI of the first terminal apparatus and/or a MAC subheader of the first terminal apparatus.

In a possible implementation, when at least one of the following cases is met, the first terminal apparatus may determine that the second terminal apparatus is a receiving apparatus of the first terminal apparatus. Alternatively, it may be further understood that, when at least one of the following cases is met, the second terminal apparatus is a receiving apparatus for data information sent by the first terminal apparatus. Alternatively, when at least one of the following cases is met, the first terminal apparatus is a sending apparatus of the second terminal apparatus. Alternatively, when at least one of the following cases is met, the first terminal apparatus is a sending apparatus for data information sent to the second terminal apparatus.

Case 5: A destination ID indicated in SCI of the first terminal apparatus is the same as X3 LSBs in a second layer-2 destination ID of the second terminal apparatus. A value of X3 is an integer from 1 to 24, for example, X3=8 or X3=16. For example, assuming that X3=16, the destination ID indicated in the SCI of the first terminal apparatus is the same as the 16 least significant bits in the second layer-2 destination ID of the second terminal apparatus.

Case 6: A DST indicated in a MAC subheader of the first terminal apparatus is the same as X4 MSBs in a second layer-2 destination ID of the second terminal apparatus. A value of X4 is an integer from 1 to 24, for example, X4=8 or X4=16. For example, assuming that X4=8, the DST indicated in the MAC subheader of the first terminal apparatus is the same as the 8 most significant bits in the second layer-2 destination ID of the second terminal apparatus.

Optionally, a destination ID indicated in SCI of the first terminal apparatus may be X7 LSBs in a first layer-2 destination ID of the first terminal apparatus. A value of X7 is an integer from 1 to 24, for example, X7=8 or X7=16. For example, assuming that X7=16, the destination ID indicated in the SCI of the first terminal apparatus is the 16 least significant bits in the first layer-2 destination ID of the first terminal apparatus.

Optionally, a DST indicated in a MAC subheader of the first terminal apparatus may be X8 MSBs in a first layer-2 destination ID of the first terminal apparatus. A value of X8 is an integer from 1 to 24, for example, X8=8 or X8=16. For example, assuming that X8=8, the DST indicated in the MAC subheader of the first terminal apparatus is the 8 most significant bits in the first layer-2 destination ID of the first terminal apparatus. Optionally, X7+X8=24.

Further, when at least one of the foregoing cases 5 and 6 is met, a data transmission type indicated in the SCI of the first terminal apparatus may be groupcast or broadcast.

Optionally, the SCI of the first terminal apparatus may be, for example, any one of COT indication information, COT sharing information, and COT structure information.

Optionally, SCI of the first terminal apparatus and/or a MAC subheader of the first terminal apparatus may be carried in a resource used to transmit sidelink information of the first terminal apparatus. Alternatively, a first resource in the resources in the M consecutive slots carries SCI of the first terminal apparatus and/or a MAC subheader of the first terminal apparatus.

In a possible implementation, when at least one of the following cases is met, the first terminal apparatus may determine that the second terminal apparatus is a receiving apparatus of the first terminal apparatus. Alternatively, it may be further understood that, when at least one of the following cases is met, the second terminal apparatus is a receiving apparatus for sidelink control information sent by the first terminal apparatus. Alternatively, it may be further understood that, when at least one of the following cases is met, the first terminal apparatus is a sending apparatus of the second terminal apparatus. Alternatively, it may be further understood that, when at least one of the following cases is met, the first terminal apparatus is a sending apparatus for sidelink control information sent to the second terminal apparatus.

Case 7: The second terminal apparatus decodes SCI of the first terminal apparatus, where the SCI includes first-stage SCI and/or second-stage SCI.

Case 8: The second terminal apparatus decodes first indication information of the first terminal apparatus. Optionally, the first indication information may be indicated by SCI of the first terminal apparatus. Optionally, the first indication information may be at least one of COT sharing information, COT indication information, and COT structure information.

Decoding may also be understood as receiving or monitoring.

(2) The first terminal apparatus is a receiving apparatus of the second terminal apparatus.

In a possible implementation, when at least one of the following cases is met, the first terminal apparatus may determine that the first terminal apparatus is a receiving apparatus of the second terminal apparatus. Alternatively, it may be further understood that, when at least one of the following cases is met, the first terminal apparatus is a receiving apparatus for data information sent by the second terminal apparatus. Alternatively, it may be further understood that, when at least one of the following cases is met, the second terminal apparatus is a sending apparatus of the first terminal apparatus. Alternatively, it may be further understood that, when at least one of the following cases is met, the second terminal apparatus is a sending apparatus for data information sent to the first terminal apparatus.

Case 9: A source ID indicated in SCI of the second terminal apparatus is the same as X1 LSBs in a first layer-2 destination ID of the first terminal apparatus. A value of X1 is an integer from 1 to 24, for example, X1=8 or X1=16. For details, refer to case 1.

Case 10: An SRC indicated in a MAC subheader of the second terminal apparatus is the same as X2 MSBs in a first layer-2 destination ID of the first terminal apparatus. A value of X2 is an integer from 1 to 24, for example, X2=8 or X2=16. For details, refer to case 2.

Case 11: A destination ID indicated in SCI of the second terminal apparatus is the same as X3 LSBs in a first layer-2 source ID of the first terminal apparatus. A value of X3 is an integer from 1 to 24, for example, X3=8 or X3=16. For details, refer to case 3.

Case 12: A DST indicated in a MAC subheader of the second terminal apparatus is the same as X4 MSBs in a first layer-2 source ID of the first terminal apparatus. A value of X4 is an integer from 1 to 24, for example, X4=8 or X4=16. For details, refer to case 4.

Optionally, a source ID indicated in SCI of the second terminal apparatus is X5 LSBs in a second layer-2 source ID of the second terminal apparatus. A value of X5 is an integer from 1 to 24, for example, X5=8 or X5=16. For example, assuming that X5=8, the source ID indicated in the SCI of the second terminal apparatus may be the 8 least significant bits in the second layer-2 source ID of the second terminal apparatus.

Optionally, an SRC indicated in a MAC subheader of the second terminal apparatus is X6 MSBs in a second layer-2 source ID of the second terminal apparatus. A value of X6 is an integer from 1 to 24, for example, X6=8 or X6=16. For example, assuming that X6=8, the SRC indicated in the MAC subheader of the second terminal apparatus may be the 8 most significant bits in the second layer-2 source ID of the second terminal apparatus.

Optionally, X5+X6=24.

Optionally, a destination ID indicated in SCI of the second terminal apparatus is X7 LSBs in a second layer-2 destination ID of the second terminal apparatus. A value of X7 is an integer from 1 to 24, for example, X7=8 or X7=16. For example, assuming that X7=16, the destination ID indicated in the SCI of the second terminal apparatus is the 16 least significant bits in the second layer-2 destination ID of the second terminal apparatus.

Optionally, a DST indicated in a MAC subheader of the second terminal apparatus is X8 MSBs in a second layer-2 destination ID of the second terminal apparatus. A value of X8 is an integer from 1 to 24, for example, X8=8 or X8=16. For example, assuming that X8=8, the DST indicated in the MAC subheader of the second terminal apparatus is the 8 most significant bits in the second layer-2 destination ID of the second terminal apparatus.

Optionally, X7+X8=24.

Further, when at least one of the foregoing cases 9 to 12 is met, a data transmission type indicated in the SCI of the second terminal apparatus may be unicast.

In a possible implementation, when at least one of the following cases is met, the first terminal apparatus may determine that the first terminal apparatus is a receiving apparatus of the second terminal apparatus. Alternatively, it may be further understood that, when at least one of the following cases is met, the first terminal apparatus is a receiving apparatus for data information sent by the second terminal apparatus. Alternatively, it may be further understood that, when at least one of the following cases is met, the second terminal apparatus is a sending apparatus of the first terminal apparatus. Alternatively, it may be further understood that, when at least one of the following cases is met, the second terminal apparatus is a sending apparatus for data information sent to the first terminal apparatus.

Case 13: A destination ID indicated in SCI of the second terminal apparatus is the same as X3 LSBs in a first layer-2 destination ID of the first terminal apparatus. A value of X3 is an integer from 1 to 24, for example, X3=8 or X3=16. For details, refer to case 3.

Case 14: A DST indicated in a MAC subheader of the second terminal apparatus is X4 MSBs in a first layer-2 destination ID of the first terminal apparatus. A value of X4 is an integer from 1 to 24, for example, X4=8 or X4=16. For details, refer to case 4.

Optionally, a destination ID indicated in SCI of the second terminal apparatus is X7 LSBs in a second layer-2 destination ID of the second terminal apparatus. A value of X7 is an integer from 1 to 24, for example, X7=8 or X7=16. For details, refer to case 9.

Optionally, a DST indicated in a MAC subheader of the second terminal apparatus is X8 MSBs in a second layer-2 destination ID of the second terminal apparatus. A value of X8 is an integer from 1 to 24, for example, X8=8 or X8=16.

Optionally, X7+X8=24.

Further, when at least one of the foregoing cases 13 and 14 is met, a cast type indicated in the SCI of the second terminal apparatus is groupcast or broadcast.

Optionally, a MAC subheader of the second terminal apparatus is carried by a second PSSCH, and SCI of the second terminal apparatus is carried by a second PSCCH. The second PSCCH schedules the second PSSCH.

In a possible implementation, when the following cases are met, the first terminal apparatus may determine that the first terminal apparatus is a receiving apparatus of the second terminal apparatus. Alternatively, it may be further understood that, when at least one of the following cases is met, the first terminal apparatus is a receiving apparatus for control information sent by the second terminal apparatus. Alternatively, it may be further understood that, when at least one of the following cases is met, the second terminal apparatus is a sending apparatus of the first terminal apparatus. Alternatively, it may be further understood that, when at least one of the following cases is met, the second terminal apparatus is a sending apparatus for control information sent to the first terminal apparatus.

Case 19: The first terminal apparatus decodes SCI of the second terminal apparatus, where the SCI includes first-stage SCI and/or second-stage SCI.

Decoding may also be understood as receiving or monitoring.

In the foregoing cases, the SCI of the second terminal apparatus may be the first sidelink control information of the second terminal apparatus.

(3) A CAPC value of the second terminal apparatus is less than or equal to a CAPC value of the first terminal apparatus, and/or the CAPC value of the second terminal apparatus is less than a CAPC value of a third terminal apparatus, and/or the CAPC value of the third terminal apparatus is greater than or equal to the CAPC value of the first terminal apparatus.

For details about the condition, refer to the foregoing description of the condition (4) in S1002.

The CAPC value of the first terminal apparatus may also be understood as a CAPC value of the initial COT of the first terminal apparatus.

Optionally, the first terminal apparatus may indicate the CAPC value of the first terminal apparatus in COT sharing information (or referred to as COT indication information, COT structure information, or the like). It may be understood that the CAPC value of the second terminal apparatus is less than a CAPC threshold indicated by the first terminal apparatus in the COT sharing information.

(4) A CAPC value of the second terminal apparatus is less than a first CAPC threshold, and/or a CAPC value of a third terminal apparatus is greater than the first CAPC threshold.

The CAPC value of the second terminal apparatus is used by the second terminal apparatus to perform channel access, for example, Type1 channel access.

For details about the condition, refer to the foregoing description of the condition (5) in S1002.

(5) A quantity of RB sets corresponding to the second resource is less than or equal to a quantity of first RB sets; and the quantity of first RB sets is a quantity of RB sets of a resource reserved by the first terminal apparatus, and/or a quantity of RB sets corresponding to a third resource is greater than or equal to the quantity of first RB sets, and/or the quantity of RB sets corresponding to the second resource is less than or equal to the quantity of RB sets of the third resource.

For details about the condition, refer to the foregoing description of the condition (6) in S1002.

(6) If the first terminal apparatus and the second terminal apparatus form a COT, transmission of a third terminal apparatus is not affected.

That if the first terminal apparatus and the second terminal apparatus form a COT, transmission of a third terminal apparatus is not affected may include any one of the following cases:
The third resource reserved by the third terminal apparatus is not in the COT formed by the first terminal apparatus and the second terminal apparatus.

Alternatively, an RB set in which the third resource reserved by the third terminal apparatus is located is not in the COT formed by the first terminal apparatus and the second terminal apparatus.

Alternatively, the COT formed by the first terminal apparatus and the second terminal apparatus is not in third time before the third resource reserved by the third terminal apparatus.

When the first condition is met, the first terminal apparatus may determine that the first terminal apparatus and the second terminal apparatus may form the COT.

Optionally, the first condition includes at least one of the following:

1a: A channel access type of the third terminal apparatus is a first type, and the first type is type 1 (Type1) or type 2 (Type2).

2a: A CAPC value of the first terminal apparatus is less than a CAPC value of the third terminal apparatus, and/or a CAPC value of the second terminal apparatus is less than the CAPC value of the third terminal apparatus.

3a: A CAPC value of the third terminal apparatus is greater than a first CAPC threshold, and/or a CAPC value of the second terminal apparatus is less than the first CAPC threshold.

4a: An RSRP measurement value of the third resource is less than or equal to an RSRP measurement value of the second resource.

5a: An RSRP measurement value of the third resource is less than or equal to a first RSRP threshold, and/ or an RSRP measurement value of the second resource is greater than or equal to the first RSRP threshold.

6a: A priority value of the third terminal apparatus is greater than a priority value of the first terminal apparatus, and/or the priority value of the third terminal apparatus is greater than a priority value of the second terminal apparatus.

7a: A service priority value of the third terminal apparatus is greater than a first service priority threshold, and/or a service priority value of the second terminal apparatus is less than the first service priority threshold.

8a: A CPE length of the third terminal apparatus is less than or equal to a CPE length of the first terminal apparatus, and/or the CPE length of the third terminal apparatus is less than or equal to a CPE length of the second terminal apparatus.

9a: A CPE length of the third terminal apparatus is less than or equal to a first CPE threshold, and/or a CPE length of the second terminal apparatus is greater than or equal to the first CPE threshold.

10a: A backoff value of the third terminal apparatus is greater than or equal to a backoff value of the first terminal apparatus, and/or the backoff value of the third terminal apparatus is greater than or equal to a backoff value of the second terminal apparatus, where the backoff value is used for channel access.

11a: A backoff value of the third terminal apparatus is greater than or equal to a first backoff threshold, and/or a backoff value of the second terminal apparatus is less than or equal to the first backoff threshold, where the backoff value is used for channel access.

Optionally, the first backoff threshold may be indicated by a network apparatus to the first terminal apparatus, or the first backoff threshold may be preconfigured in the first terminal apparatus.

Optionally, the first backoff threshold may be indicated by a network apparatus to the third terminal apparatus, or the first backoff threshold may be preconfigured in the third terminal apparatus.

12a: A value of a contention window of the third terminal apparatus is greater than or equal to a value of a contention window of the first terminal apparatus, and/or the value of the contention window of the third terminal apparatus is greater than or equal to a value of a contention window of the second terminal apparatus, where the backoff value is used for channel access.

13a: A value of a contention window of the third terminal apparatus is greater than or equal to a first contention window threshold, and/or a value of a contention window of the second terminal apparatus is less than or equal to the first contention window threshold, where the contention window is used for channel access.

14a: The third terminal apparatus is not a receiving apparatus of the first terminal apparatus.

15a: The first terminal apparatus is not a receiving apparatus of the third terminal apparatus.

For details of the conditions 1a to 15a, refer to the foregoing description of selecting the fourth resource by the first terminal apparatus based on the first condition in S1502. Details are not described herein again.

(7) A frequency domain resource of the second resource belongs to frequency domain resources of resources in M consecutive slots, which may also be understood as that the second resource belongs to a COT of the first terminal apparatus.

The COT of the first terminal apparatus is a COT reserved by the first terminal apparatus.

Optionally, that the second resource belongs to the COT of the first terminal apparatus includes: a slot in which the second resource is located belongs to the COT of the first terminal apparatus; and/or an RB set in which the second resource is located belongs to the COT of the first terminal apparatus; and/or a subchannel in which the second resource is located belongs to the COT of the first terminal apparatus.

The resources in the M consecutive slots include at least one of a COT candidate resource selected by the first terminal apparatus, a resource for transmitting the sidelink information of the first terminal apparatus, a reserved resource of the first terminal apparatus, a first resource, an available resource for transmitting the sidelink information of the first terminal apparatus, and an available resource for transmitting the sidelink information of the second terminal apparatus.

Optionally, that the second resource belongs to resources in M consecutive slots includes: a slot in which the second resource is located belongs to the resources in the M consecutive slots; and/or an RB set in which the second resource is located belongs to the resources in the M consecutive slots; and/or a subchannel in which the second resource is located belongs to the resources in the M consecutive slots.

(8) A resource for transmitting the sidelink information of the first terminal apparatus and the second resource do not overlap in time domain.

Optionally, when the following case is met, the first terminal apparatus may determine, based on the condition, whether to share the initial COT with the second terminal apparatus:

The second terminal apparatus is a receiving apparatus of the first terminal apparatus, and/or the first terminal apparatus is a receiving apparatus of the second terminal apparatus. For how to determine whether the second terminal apparatus is a receiving apparatus of the first terminal apparatus and how to determine whether the first terminal apparatus is a receiving apparatus of the second terminal apparatus, refer to the foregoing descriptions of the condition (1) and the condition (2) in the first condition.

Optionally, when the following case is met, the second terminal apparatus may determine, based on the condition, whether to share the COT of the first terminal apparatus:

The second terminal apparatus is a receiving apparatus of the first terminal apparatus, and/or the first terminal apparatus is a receiving apparatus of the second terminal apparatus. For how to determine whether the second terminal apparatus is a receiving apparatus of the first terminal apparatus and how to determine whether the first terminal apparatus is a receiving apparatus of the second terminal apparatus, refer to the foregoing descriptions of the condition (1) and the condition (2) in the first condition.

The resource used to transmit the sidelink information of the first terminal apparatus may be, for example, the first resource or a resource reserved by the first terminal apparatus. Optionally, a resource for transmitting the sidelink information of the first terminal apparatus and the second resource not overlapping in time domain may be understood as that the resource for transmitting the sidelink information of the first terminal apparatus and the second resource belong to different slots.

The condition may also be understood as follows: If the resource for transmitting the sidelink information of the first terminal apparatus and the second resource overlap in time domain, the first terminal apparatus does not share the COT with the second terminal apparatus.

Optionally, the resource for transmitting the sidelink information of the first terminal apparatus and the second resource overlapping in time domain may be understood as that the first resource and the second resource belong to a same slot.

(9) An RSRP measurement value of the second resource is less than or equal to a first RSRP threshold, and/ or an RSRP measurement value of a third resource is greater than or equal to the first RSRP threshold.

(10) A priority value of the second terminal apparatus is less than a priority value of the first terminal apparatus, and/or a priority value of a third terminal apparatus is greater than the priority value of the second terminal apparatus, and/or the priority value of the second terminal apparatus is less than the priority value of the third terminal apparatus.

(11) A priority value of the second terminal apparatus is less than a first priority threshold, and/or a service priority value of a third terminal apparatus is greater than the first service priority threshold.

(12) A CPE length of the second terminal apparatus is greater than or equal to a CPE length of the first terminal apparatus, and/or a CPE length of a third terminal apparatus is less than or equal to the CPE length of the second terminal apparatus, and/or the CPE length of the third terminal apparatus is less than or equal to the CPE length of the first terminal apparatus.

(13) A CPE length of the second terminal apparatus is greater than or equal to a first CPE threshold, and/or a CPE length of a third terminal apparatus is less than or equal to the first CPE threshold.

(14) A backoff value of the second terminal apparatus is less than or equal to a backoff value of the first terminal apparatus, and/or a backoff value of a third terminal apparatus is greater than or equal to the backoff value of the second terminal apparatus, and/or the backoff value of the first terminal apparatus is less than or equal to the backoff value of the third terminal apparatus.

(15) A backoff value of the second terminal apparatus is less than or equal to a first backoff threshold, and/or a backoff value of a third terminal apparatus is greater than or equal to the first backoff threshold, where the backoff value is used for channel access.

(16) A value of a contention window of the second terminal apparatus is less than or equal to a value of a contention window of the first terminal apparatus, and/or a value of a contention window of a third terminal apparatus is greater than or equal to the value of the contention window of the second terminal apparatus, and/or the value of the contention window of the first terminal apparatus is less than or equal to the value of the contention window of the third terminal apparatus, where the backoff value is used for channel access.

(17) A value of a contention window of the second terminal apparatus is less than or equal to a first contention window threshold, and/or a value of a contention window of a third terminal apparatus is greater than or equal to the first contention window threshold, where the contention window is used for channel access.

(18) No reserved resource of another terminal apparatus exists in an RB set in which the second resource is located.

For details of the foregoing conditions (9) to (18), refer to the foregoing descriptions of the corresponding conditions included in the first condition in S1001. Details are not described herein again.

Optionally, the first terminal apparatus may determine, based on the first condition in different scenarios, whether to share the initial COT with the second terminal apparatus.

In a possible scenario, before the first terminal apparatus determines, based on the first condition, whether the initial COT can be shared with the second terminal apparatus, the first terminal apparatus has not determined a candidate resource. The candidate resource is a resource reported by a physical layer of the first terminal apparatus to a MAC layer. The MAC layer selects, from a candidate resource set including the candidate resource, a resource for transmitting the sidelink information of the first terminal apparatus, or selects a reserved resource. It may be understood that the candidate resource set includes an available resource for transmitting the sidelink information of the first terminal apparatus, that is, includes the first resource.

Optionally, when the first condition is met, the first terminal apparatus may select the candidate resource based on the second resource.

Optionally, the candidate resource selected by the first terminal apparatus based on the second resource may include at least one of the following resources, in other words, the first resource selected by the first terminal device based on the second resource may include a resource that overlaps at least one of the following resources:

the second resource; a resource in the RB set in which the second resource is located; a resource whose frequency domain location is the same as that of the second resource and whose time domain location is in first duration before the second resource; a resource whose frequency domain location is the same as that of the second resource and whose time domain location is in second time after the second resource; a resource whose time domain location is in first duration before the second resource in the RB set in which the second resource is located; or a resource whose time domain location is in second duration after the second resource in the RB set in which the second resource is located.

For details of the foregoing resource, refer to the foregoing description of selecting the first resource by the first terminal apparatus based on the second resource in S1002. Details are not described herein again.

When the first condition is met, the candidate resource selected by the first terminal apparatus based on the second resource may be understood as a resource that can be shared with the second terminal apparatus in the candidate resource set.

The first terminal apparatus may select the first resource in the following manner:

Optionally, the first terminal apparatus may select the first resource in an existing manner of excluding a candidate resource.

Optionally, the first terminal apparatus may select the first resource in a manner in which the first terminal apparatus selects the first resource based on the second resource in S1002. Details are not described herein again.

Optionally, the first terminal apparatus may select the first resource in a manner in which the first terminal apparatus excludes the fourth resource based on the third resource and selects the first resource in S1502. Details are not described herein again.

In another possible scenario, before the first terminal apparatus determines, based on the first condition, whether the initial COT can be shared with the second terminal apparatus, the first terminal apparatus selects the first resource.

Optionally, the first terminal apparatus may select the first resource in an existing manner of excluding a candidate resource.

Optionally, the first terminal apparatus may select the first resource based on the manner in which the first terminal apparatus selects the first resource based on the second resource in S1002. Details are not described herein again.

Optionally, the first terminal apparatus may select the first resource in a manner in which the first terminal apparatus excludes the fourth resource based on the third resource and selects the first resource in S1502. Details are not described herein again.

Optionally, a time granularity of the first resource selected by the first terminal apparatus may be a slot. In other words, the first resource may include one or more slots in time domain.

Optionally, a frequency domain granularity of the first resource selected by the first terminal apparatus may be $L_{RS}$ RB sets or $L_{SubCH}$ subchannels. For details, refer to the foregoing descriptions of the frequency domain granularity of the first resource in S1001 and S1002.

Optionally, the first terminal apparatus shares the second resource with the second terminal apparatus, and the first terminal apparatus may select any one of the following resources to transmit the sidelink information of the first terminal apparatus:

a resource that does not overlap the second resource in time domain; a resource that overlaps the second resource in time domain; a resource in the RB set in which the second resource is located; a resource whose frequency domain location is the same as that of the second resource and whose time domain location is in first duration before the second resource; a resource whose frequency domain location is the same as that of the second resource and whose time domain location is in second time after the second resource; a resource whose time domain location is in first duration before the second resource in the RB set in which the second resource is located; or a resource whose time domain location is in second duration after the second resource in the RB set in which the second resource is located.

Optionally, the resource that overlaps the second resource in time domain includes: a resource whose time domain is in a slot in which the second resource is located and whose frequency domain does not overlap the RB set in which the second resource is located; and/or a resource whose time domain is in a slot in which the second resource is located and whose frequency domain does not overlap the second resource in the RB set in which the second resource is located.

Optionally, that the first terminal apparatus shares the initial COT with the second terminal apparatus may include:

The first terminal apparatus sends COT indication information (or referred to as COT sharing information, COT structure information, or the like) to the second terminal apparatus, to indicate that the second terminal apparatus can share the initial COT of the first terminal apparatus. A specific name of the information is not limited in this embodiment of this application. Optionally, the COT indication information may indicate a resource shared by the first terminal apparatus with the second terminal apparatus in the initial COT of the first terminal apparatus. For example, the COT indication information indicates that the second terminal apparatus may transmit the sidelink information of the second terminal apparatus on the second resource.

Optionally, the COT indication information may indicate the second terminal apparatus to access, by using Type2 LBT, a channel on which the second resource is located.

Optionally, if the second terminal apparatus determines, based on the first condition, that the COT of the first terminal apparatus can be shared, the second terminal apparatus may send third indication information to the first terminal apparatus, where the third indication information indicates that the second terminal apparatus requests the first terminal apparatus to share the second resource in the COT with the second terminal apparatus.

Optionally, that the first terminal apparatus sends the first indication information to the second terminal apparatus may be triggered by the second terminal apparatus. Specifically, the second terminal apparatus sends third indication information to the first terminal apparatus. The first terminal apparatus receives the third indication information, shares the second resource in the initial COT with the second terminal apparatus, and sends the first indication information to the second terminal apparatus.

In a possible implementation, the first terminal apparatus shares the second resource in the initial COT of the first terminal apparatus with the second terminal apparatus. For example, the first terminal apparatus sends the first indication information, to indicate to share the second resource with the second terminal apparatus. Correspondingly, the second terminal apparatus receives the first indication information, and transmits the sidelink information of the second terminal apparatus on the second resource. A frequency domain resource in the initial COT of the first terminal apparatus belongs to L1 RB sets, where L1 is a positive integer. The second resource belongs to L2 RB sets, where L2 is a positive integer. The first indication information may be COT indication information (or referred to as COT sharing information, COT structure information, or the like).

That the first terminal apparatus shares the second resource in the first COT with the second terminal apparatus may also be understood as that the first terminal apparatus shares the second resource in the resources in the M consecutive slots with the second terminal apparatus.

Optionally, the first terminal apparatus may share a sixth resource with the second terminal apparatus, where a time domain resource of the sixth resource is the same as that of the second resource, and a frequency domain resource of the sixth resource may be at least one of the following resources:

a resource that does not overlap the second resource in frequency domain in an RB set in which the resources in the M consecutive slots are located;
a resource that does not overlap the RB set in which the second resource is located in frequency domain in an RB set in which the resources in the M consecutive slots are located;
a resource of a second subchannel in an RB set in which the resources in the M consecutive slots are located, where the second subchannel is a subchannel on which the second resource is located;
resources of all subchannels in an RB set in which the resources in the M consecutive slots are located; or
a resource of at least one subchannel in an RB set in which the resources in the M consecutive slots are located.

Optionally, the second terminal apparatus transmits the sidelink information of the second terminal apparatus in L1 RB sets, which includes: the second terminal apparatus transmits the sidelink information of the second terminal apparatus on a resource that overlaps the second resource in time domain and that is the L1 RB sets in frequency domain.

Optionally, the sidelink information of the second terminal apparatus includes $A^{th}$ sidelink information and $B^{th}$ sidelink information. In other words, the second terminal apparatus transmits the $A^{th}$ sidelink information and the $B^{th}$ sidelink information in the slot in which the second resource is located. The second resource carries the $A^{th}$ sidelink information, and the sixth resource carries the $B^{th}$ sidelink information.

Optionally, the $B^{th}$ sidelink information is a repetition of the $A^{th}$ sidelink information; or the $B^{th}$ sidelink information is retransmission of the $A^{th}$ sidelink information; or the $B^{th}$ sidelink information is synchronization information (for example, S-SSB); or the $B^{th}$ sidelink information is feedback information (PSFCH).

Optionally, the second terminal apparatus transmits the sidelink information of the second terminal apparatus on the second resource and the sixth resource. A time domain resource of the sixth resource is the same as that of the second resource. The frequency domain resource of the sixth resource may be at least one of the following resources: a resource that is in the L1 RB sets and that does not overlap the second resource in frequency domain; a resource that is in the L1 RB sets and that does not overlap the RB set in which the second resource is located in frequency domain; a resource of a second subchannel in the L1 RB sets, where the second subchannel is a subchannel on which the second resource is located; and resources of all subchannels in the L1 RB sets; or a resource of at least one subchannel in the L1 RB sets. The foregoing items may be combined randomly. For example, the frequency domain resource of the sixth resource is a second subchannel on a resource that is in the L1 RB sets and that does not overlap the second resource in frequency domain. For another example, the frequency domain resource of the sixth resource is all subchannels on a resource that is in the L1 RB sets and that does not overlap the second resource in frequency domain. For example, the frequency domain resource of the sixth resource is a second subchannel on a resource that is in the L1 RB sets and that does not overlap the RB set in which the second resource is located in frequency domain. For another example, the frequency domain resource of the sixth resource is all subchannels on a resource that is in the L1 RB sets and that does not overlap the RB set in which the second resource is located in frequency domain. Optionally, a second field in the first indication information indicates the second terminal apparatus to perform transmission on the L1 RB sets of the slot in which the second resource is located. Correspondingly, the second terminal apparatus receives the first indication information, and performs, based on the second field, transmission in the L1 RB sets of the slot in which the second resource is located. Optionally, the second field is a bitmap. For example, the second field is a bitmap whose length is L1.

In S1902, optionally, the first terminal apparatus may not share the second resource with the second terminal apparatus when the first condition is met.

Optionally, when the first condition is met, the second terminal apparatus determines that the COT of the first terminal apparatus is not shared.

Optionally, the first condition may include at least one of the following:

(1) A channel access type of the second terminal apparatus is a first type, and the first type is type 1 (Type1) or type 2 (Type2).

(2) A CAPC value of the first terminal apparatus is less than a CAPC value of the second terminal apparatus, and/or a CAPC value of a third terminal apparatus is less than the CAPC value of the second terminal apparatus, and/or the CAPC value of the first terminal apparatus is greater than the CAPC value of the third terminal apparatus.

(3) A CAPC value of the second terminal apparatus is greater than a first CAPC threshold, and/or a CAPC value of a third terminal apparatus is less than the first CAPC threshold.

(4) An RSRP measurement value of the second resource is less than or equal to an RSRP measurement value of the third resource.

(5) An RSRP measurement value of the second resource is less than or equal to a first RSRP threshold, and/ or an RSRP measurement value of a third resource is greater than or equal to the first RSRP threshold.

(6) A priority value of the second terminal apparatus is greater than a priority value of the first terminal apparatus, and/or the priority value of the second terminal apparatus is greater than a priority value of a third terminal apparatus, and/or the priority value of the third terminal apparatus is less than the priority value of the first terminal apparatus.

(7) A service priority value of the second terminal apparatus is greater than a first service priority threshold, and/or a service priority value of a third terminal apparatus is less than the first service priority threshold.

(8) A CPE length of the second terminal apparatus is less than or equal to a CPE length of the first terminal apparatus, and/or the CPE length of the second terminal apparatus is less than or equal to a CPE length of a third terminal apparatus, and/or the CPE length of the third terminal apparatus is greater than or equal to the CPE length of the first terminal apparatus.

(9) A CPE length of the second terminal apparatus is less than or equal to a first CPE threshold, and/or a CPE length of a third terminal apparatus is greater than or equal to the first CPE threshold.

(10) A backoff value of the second terminal apparatus is greater than or equal to a backoff value of the first terminal apparatus, and/or the backoff value of the second terminal apparatus is greater than or equal to a backoff value of a third terminal apparatus, and/or the backoff value of the third terminal apparatus is less than or equal to the backoff value of the first terminal apparatus, where the backoff value is used for channel access.

(11) A backoff value of the second terminal apparatus is greater than or equal to a first backoff threshold, and/or a backoff value of a third terminal apparatus is less than or equal to the first backoff threshold, where the backoff value is used for channel access.

(12) A value of a contention window of the second terminal apparatus is greater than or equal to a value of a contention window of the first terminal apparatus, and/or the value of the contention window of the second terminal apparatus is greater than or equal to a value of a contention window of a third terminal apparatus, and/or the value of the contention window of the third terminal apparatus is less than or equal to the value of the contention window of the first terminal apparatus, where the backoff value is used for channel access.

(13) A value of a contention window of the second terminal apparatus is greater than or equal to a first contention window threshold, and/or a value of a contention window of a third terminal apparatus is less than or equal to the first contention window threshold, where the contention window is used for channel access.

(14) The second terminal apparatus is not a receiving apparatus of the first terminal apparatus.

(15) The first terminal apparatus is not a receiving apparatus of the second terminal apparatus.

For details of the conditions (1) to (15), refer to the foregoing description of excluding the fourth resource by the first terminal apparatus based on the first condition in S1502. Details are not described herein again.

Optionally, the first terminal apparatus transmits the sidelink control information of the first terminal apparatus in the slot in which the second resource is located, which includes: the first terminal apparatus selects a resource that overlaps the second resource to transmit the sidelink control information of the first terminal apparatus, and/or the first terminal apparatus selects a resource that overlaps the sixth resource to transmit the sidelink control information of the first terminal apparatus. For a definition of the sixth resource, refer to the foregoing description.

It should be noted that the method embodiment shown in FIG. 15, the method embodiment shown in FIG. 22, and the method embodiment shown in FIG. 28 may be applied independently or in combination.

It should be noted that a time sequence of the steps in the method embodiment shown in FIG. 15, the method embodiment shown in FIG. 22, and the method embodiment shown in FIG. 28 is not limited in this application. The steps in the method embodiment shown in FIG. 15, the method embodiment shown in FIG. 22, and the method embodiment shown in FIG. 28 may be performed according to a specific time sequence, or may be performed simultaneously. For example, S1001, S1002, S1501, S1502, S1901, and S1902 may be performed simultaneously, or S1001, S1501, and S1901 may be performed before S1002, S1502, and S1902 according to a specific time sequence.

It should be noted that the method embodiment shown in FIG. 15, the method embodiment shown in FIG. 22, the method embodiment shown in FIG. 28, and the method embodiment shown in FIG. 29 may be applied independently or in combination.

It should be noted that a time sequence of the steps in the method embodiment shown in FIG. 15, the method embodiment shown in FIG. 22, the method embodiment shown in FIG. 28, and the method embodiment shown in FIG. 29 is not limited in this application. The steps in the method embodiment shown in FIG. 15, the method embodiment shown in FIG. 22, the method embodiment shown in FIG. 28, and the method embodiment shown in FIG. 29 may be performed according to a specific time sequence, or may be performed simultaneously. For example, S1001, S1002, S1501, S1502, S1901, S1902, S2001, and S2002 may be performed simultaneously, or S1001, S1501, S1901, and S2001 may be performed before S1002, S1502, S1902, and S2002 according to a specific time sequence.

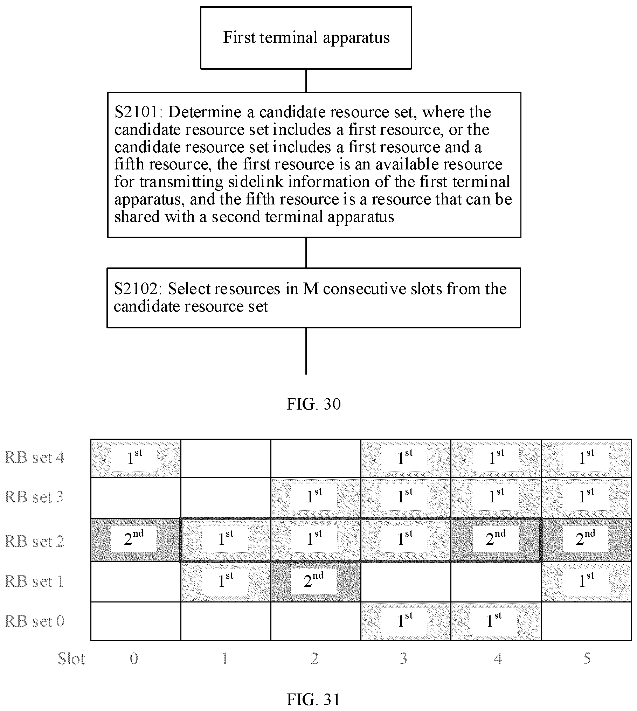

As shown in FIG. 30, an embodiment of this application further provides another communication method. The communication method includes S2101 and S2102.

S2101: Determine a candidate resource set, where the candidate resource set includes a first resource, or the candidate resource set includes a first resource and a fifth resource, the first resource is an available resource for transmitting sidelink information of a first terminal apparatus, and the fifth resource is a resource that can be shared with a second terminal apparatus.

S2102: Select resources in M consecutive slots from the candidate resource set.

Step S2102 may be performed by the first terminal apparatus.

The following describes the method by using an example in which the first terminal apparatus performs the method. However, an entity for performing interaction is not limited in this application. Alternatively, the method may be performed by a chip, a chip system, or a processor that supports the first terminal apparatus in implementing the method, or may be a logical module or software that can implement all or some functions of the first terminal apparatus.

In S2101, the first terminal apparatus may select the first resource in any one of the following manners:
Step S2102 may be performed by the first terminal apparatus.

The first terminal apparatus may select the first resource in an existing manner of excluding a candidate resource.

Optionally, the first terminal apparatus may select the first resource in a manner in which the first terminal apparatus selects the first resource based on the second resource in S1002. Details are not described herein again.

Alternatively, the first terminal apparatus may select the first resource in a manner in which the first terminal apparatus excludes the fourth resource based on the third resource and selects the first resource in S1502. Details are not described herein again.

The fifth resource selected by the first terminal apparatus may be a candidate resource selected by the first terminal apparatus based on the second resource in the foregoing description of S1002. For a manner in which the first terminal apparatus selects the fifth resource, refer to the foregoing description of S1002 in which the first terminal apparatus selects the candidate resource based on the second resource.

Optionally, after determining the first resource and the fifth resource, the first terminal apparatus may determine a union set of the first resource and the fifth resource as the candidate resource set. Alternatively, it may be understood that the first terminal apparatus determines a first resource set (which may also be referred to as a first set) and a second resource set (which may also be referred to as a second set), where the first resource set includes the first resource, and the second resource set includes the fifth resource. The first terminal apparatus determines a union set of the first resource set and the second resource set as the candidate resource set.

For example, in FIG. 31, a 1st resource is the first resource, namely, a resource in the first resource set, and a 2nd resource is the second resource (or the "fifth resource"), namely, a resource in the second resource set (or a set including the fifth resource). In FIG. 31, all 1st resources and 2nd resources form the candidate resource set.

Optionally, after determining the first resource and the fifth resource, the first terminal apparatus may determine an intersection set of the first resource and the fifth resource as the candidate resource set. Alternatively, it may be understood that the first terminal apparatus determines a first resource set and a second resource set, where the first resource set includes the first resource, and the second resource set includes the fifth resource. The first terminal apparatus determines an intersection set of the first resource set and the second resource set as the candidate resource set.

The intersection set may be obtained by a physical layer or a MAC layer of the first terminal apparatus.

Optionally, after determining the first resource and the fifth resource, the first terminal apparatus may determine a union set of the first resource and the fifth resource as the candidate resource set. Alternatively, it may be understood that the first terminal apparatus determines a first resource set and a second resource set, where the first resource set includes the first resource, and the second resource set includes the fifth resource. The first terminal apparatus determines a union set of the first resource set and the second resource set as the candidate resource set.

The union set may be obtained by a physical layer or a MAC layer of the first terminal apparatus. The intersection set may be obtained by a physical layer or a MAC layer of the first terminal apparatus.

The physical layer of the first terminal apparatus reports the determined candidate resource set to the MAC layer of the first terminal apparatus. A manner in which the physical layer of the first terminal apparatus reports the candidate resource set to the MAC layer of the first terminal apparatus may be any one of the following:

the physical layer of the first terminal apparatus reports the union set of the first resource set and the second resource set, that is, one set: the candidate resource set, to the MAC layer;
the physical layer of the first terminal apparatus reports the intersection set of the first resource set and the second resource set, that is, one set: the candidate resource set, to the MAC layer;
the physical layer of the first terminal apparatus reports two sets: the first resource set and the second resource set, to the MAC layer; or
the physical layer of the first terminal apparatus reports the first set and the union set of the first set and the second set to the MAC layer; or
the physical layer of the first terminal apparatus reports the first set and the intersection set of the first set and the second set to the MAC layer.

In S2102, the first terminal apparatus may select the resources in the M consecutive slots from the candidate resource set. Specifically, the physical layer or the MAC layer of the first terminal apparatus may select the resources in the M consecutive slots from the candidate resource set. M is a positive integer greater than or equal to 1.

Optionally, the resources in the M consecutive slots may include a resource for transmitting the sidelink information of the first terminal apparatus, or the resources in the M consecutive slots may include a resource for transmitting the sidelink information of the first terminal apparatus and a resource for transmitting sidelink information of the second terminal apparatus.

Optionally, in each of the M consecutive slots, there may be at least one candidate resource (the candidate resource is the first resource or the fifth resource). Therefore, a quantity of resources included in the resources in the M consecutive slots may be greater than or equal to M.

Optionally, duration of an initial COT of the first terminal apparatus is greater than or equal to duration of the M slots.

Optionally, a quantity of resources in the initial COT of the first terminal apparatus is greater than or equal to M, or the first terminal apparatus transmits M or more than M PSCCHs/PSSCHs in the initial COT.

Optionally, the resources in the M consecutive slots belong to K consecutive RB sets, and K is a positive integer. For example, K may be 1.

Optionally, the resources in the M consecutive slots may have a same quantity of subchannels or different quantities of subchannels.

The following describes various cases of the resources in the M consecutive slots.

1. Optionally, in the M consecutive slots, resources in the first F slots are first resources, or resources in the first F slots are resources that are obtained after exclusion performed based on the second resource and/or the third resource, or resources in the first F slots are resources in the first resource set. F is a positive integer, for example, F=1.
2. Optionally, the resources in the M consecutive slots include resources in Q slots for transmitting the sidelink information of the first terminal apparatus, where Q is less than or equal to M. In a possible implementation, a network apparatus indicates the first terminal apparatus to select resources in M (M=Q) consecutive slots. Alternatively, a network apparatus indicates the first terminal apparatus to select resources in M (M is greater than Q) consecutive slots. Alternatively, resources in M (M=Q) consecutive slots are preconfigured for the first terminal apparatus to select. Alternatively, a network apparatus indicates the first terminal apparatus to select resources in M (M is greater than Q) consecutive slots.

Optionally, a frequency domain granularity of a resource for transmitting the sidelink information of the first terminal apparatus may be $L_{SubCH}$ subchannels or $L_{RS}$ RB sets. For details, refer to the foregoing descriptions of the frequency domain granularity of the first resource in S1002.

Optionally, the first terminal apparatus may select, in each of the Q slots, one resource for transmitting the sidelink information of the first terminal apparatus. In this case, the resources in the Q slots for transmitting the sidelink information of the first terminal apparatus may also be understood as the Q resources for transmitting the sidelink information of the first terminal apparatus. The resources in the Q consecutive slots for transmitting the sidelink information of the first terminal apparatus may also be understood as the Q contiguous resources for transmitting the sidelink information of the first terminal apparatus.

The Q slots in the M slots may be dispersed, or may be consecutive.

3. Optionally, the resources in the M consecutive slots include resources in P slots for transmitting the sidelink information of the second terminal apparatus, where P is a positive integer less than or equal to M. It may be understood that, for at least one of the M slots, if the slot includes a resource for transmitting the sidelink information of the first terminal apparatus and a resource for transmitting the sidelink information of the second terminal apparatus, $P+Q\geq M$, or for any one of the M slots, if the slot includes a resource for transmitting the sidelink information of the first terminal apparatus or a resource for transmitting the sidelink information of the second terminal apparatus, $P+Q=M$.

Optionally, a frequency domain granularity of a resource for transmitting the sidelink information of the second terminal apparatus is $L_{SubCH}$ subchannels or $L_{RS}$ RB sets. For details, refer to the foregoing descriptions of the frequency domain granularity of the first resource in S1002.

Optionally, the first terminal apparatus may select, in each of the P slots, at least one resource for transmitting the sidelink information of the second terminal apparatus. The resource may be used to transmit sidelink information of at least one second terminal apparatus, or may be used to transmit at least one piece of sidelink information of the second terminal apparatus.

A $1^{st}$ slot in the P slots cannot be a $1^{st}$ slot in the M consecutive slots. The first terminal apparatus needs to first access, based on Type1 LBT, a channel on which the resources in the M consecutive slots are located, to obtain the initial COT, so that the second terminal apparatus can share the initial COT.

4. In a possible implementation, a value of M or a value range of M may be indicated by a network apparatus to the first terminal apparatus. A value of M belongs to {1, 2, 3, ..., 160}. For example, the network apparatus indicates that the value of M is 5. For another example, the network apparatus indicates that the value range of M is {1, 2, 3, ..., 160}.

In another possible implementation, a value of M or a value range of M may be preconfigured in the first terminal apparatus.

Optionally, the value of M is determined from a value list of M. For example, the value list of M includes at least one value in {1, 2, 3, ..., 160}.

Optionally, when the first terminal apparatus obtains the value range of M, the first terminal apparatus may select a value from the value range of M.

Optionally, the value of M may be related to an SCS, or a maximum value of M is related to the SCS. For example, for $\mu=0$, $\mu=1$, $\mu=2$, and $\mu=3$, values of M are different; or for $\mu=0$, $\mu=1$, $\mu=2$, and $\mu=3$, maximum values of M are different.

5. Optionally, a network apparatus may indicate the first terminal apparatus to select the resources in the M consecutive slots according to a first rule or a second rule.

Alternatively, the resources in the M consecutive slots may be preconfigured for the first terminal apparatus to select the resources in the M consecutive slots according to a first rule or a second rule.

The first rule includes preferentially selecting resources in Q slots for transmitting the sidelink information of the first terminal apparatus. Optionally, the first rule further includes second preferentially selecting resources in P slots for transmitting the sidelink information of the second terminal apparatus. The Q slots and the P slots form the M consecutive slots. For example, the first terminal apparatus selects, from the first resource set, resources in the Q consecutive slots for transmitting the sidelink information of the first terminal apparatus. For another example, the first terminal apparatus selects, from the first resource set, resources in the Q slots for transmitting the sidelink information of the first terminal apparatus, and then selects resources in the P slots from the second resource set, where the P slots and the Q slots may form the M consecutive slots. For another example, the first terminal apparatus first selects resources in the Q consecutive slots from the first resource set. After the resources in the Q consecutive slots are selected, if there are resources in the P consecutive slots in the second resource set, the first terminal apparatus forms the resources in the M consecutive slots by using the resources in the Q slots and the resources in the P slots.

The second rule includes preferentially selecting resources in P slots for transmitting the sidelink information of the second terminal apparatus. Optionally, the second rule further includes second preferentially selecting resources in Q slots for transmitting the sidelink information of the first terminal apparatus. The Q slots and the P slots form the M consecutive slots. For example, the first terminal apparatus selects the resources in the P consecutive slots from the second resource set. For another example, the first terminal apparatus selects resources in the P slots from the second resource set, and then selects resources in the Q slots from the first resource set, where the P slots and the Q slots may form the M consecutive slots. For another example, the first terminal apparatus first selects resources in the P consecutive slots from the second resource set. Before the resources in the P consecutive slots are selected, if there are resources in the Q consecutive slots in the first resource set, the first terminal apparatus forms the resources in the M consecutive slots by using the resources in the Q slots and the resources in the P slots.

Optionally, the P slots are located after the Q slots in time domain. For example, a last slot of the Q slots is located before a 1st slot of the P slots. For another example, a 1st slot after a last slot of the Q slots is a 1st slot of the P slots.

Optionally, the P slots are located after a 1st slot of the Q slots in time domain. For example, a 1st slot of the Q slots is located before a 1st slot of the P slots.

Optionally, the P slots are located between the Q slots in time domain. For example, a 1st slot of the Q slots is located before a 1st slot of the P slots. For another example, a last slot of the P slots is located before a last slot of the Q slots.

The foregoing describes the cases of determining the resources in the M consecutive slots. Optionally, the foregoing solution of selecting the resources in the M consecutive slots is applicable to a scenario in which the first terminal apparatus has one service, or the first terminal apparatus selects resources for a plurality of services based on a unified parameter. The unified parameter includes at least one of a unified service priority value, a unified CAPC value, a unified quantity of subchannels (a quantity of subchannels of a resource for transmitting service data), and a unified quantity of transmissions. Optionally, one service may be understood as one TB, and a plurality of services may be understood as a plurality of TBs.

In a possible implementation, the first terminal apparatus determines the candidate resource set based on a CAPC, and the first terminal apparatus separately determines resources including Mp consecutive slots for different CAPCs. Optionally, the candidate resource set includes COT candidate resources, and the COT candidate resources are the resources in the Mp consecutive slots.

For CAPC=p, the resources in the M=Mp consecutive slots include resources in Q=Qp slots for transmitting the sidelink information of the first terminal apparatus and/or resources in P=Pp slots for transmitting the sidelink information of the second terminal apparatus.

Optionally, when the first terminal apparatus has a plurality of services, the first terminal apparatus may further determine resources in corresponding Mp consecutive slots for the different services based on CAPC values of different services. For example, resources in M1 consecutive slots may be selected for a service with CAPC=1; resources in M2 consecutive slots may be selected for a service with CAPC=2; resources in M3 consecutive slots may be selected for a service with CAPC=3; and resources in M4 consecutive slots may be selected for a service with CAPC=4. Optionally, M1 is less than or equal to M2, M2 is less than or equal to M3, and M3 is less than or equal to M4.

A service with a smaller CAPC value may share an initial COT of a service with a larger CAPC value. It may also be understood that a service with a smaller CAPC value may be transmitted in an initial COT of a service with a larger CAPC value. For example, the service with CAPC=1 may share the initial COT of the service with CAPC=2.

Mp is an example parameter used to represent consecutive slots corresponding to a service. A specific name of the parameter is not limited in this embodiment of this application. For example, different services may correspond to resources in Mk consecutive slots.

The following describes in detail specific implementation of determining, based on the CAPC value of the service, Mp consecutive slots corresponding to the services.

Optionally, the first terminal apparatus separately determines resources in $Q_p$ slots for different CAPC=p. Optionally, $Q_p = \sum_{i=1}^{p} D_i$. For example, for a service with CAPC=1, the first terminal apparatus determines resources in Q1=D1 slots. For a service with CAPC=2, the first terminal apparatus determines resources in Q2=D1+D2 slots. For a service with CAPC=3, the first terminal apparatus determines resources in Q3=D1+D2+D3 slots. For a service with CAPC=4, the first terminal apparatus determines resources in Q4=D1+D2+D3+D4 slots.

$D_i$ is a quantity of resources for transmitting sidelink information of CAPC=i of the first terminal apparatus, or $D_i$ is a quantity of times of transmitting sidelink information of CAPC=i of the first terminal apparatus, or $D_i$ is a quantity of slots for transmitting sidelink information of CAPC=i of the first terminal apparatus. Di is a quantity of transmissions or a quantity of resources of a TB with CAPC=i of the first terminal apparatus. For example, a quantity of resources of sidelink information with CAPC=1 is D1. For another example, a quantity of resources of sidelink information with CAPC=2 is D2. For another example, a quantity of resources of sidelink information with CAPC=3 is D3. For another example, a quantity of resources of sidelink information with CAPC=4 is D4.

Optionally, the first terminal apparatus separately determines resources in Pp slots for different CAPC=p. Optionally, $P_p = \sum_{i=1}^{p} E_i$. For example, for a service with CAPC=1, the first terminal apparatus determines resources in P1=E1 slots. For a service with CAPC=2, the first terminal apparatus determines resources in P2=E1+E2 slots. For a service with CAPC=3, the first terminal apparatus determines resources in P3=E1+E2+E3 slots. For a service with CAPC=4, the first terminal apparatus determines resources in P4=E1+E2+E3+E4 slots.

$E_i$ is a quantity of resources for transmitting sidelink information of CAPC=i of the second terminal apparatus, or $E_i$

is a quantity of times of transmitting sidelink information of CAPC=i of the second terminal apparatus, or $E_i$ is a quantity of slots for transmitting sidelink information of CAPC=i of the second terminal apparatus. For example, a quantity of resources of sidelink information with CAPC=1 is $E_1$. For another example, a quantity of resources of sidelink information with CAPC=2 is $E_2$. For another example, a quantity of resources of sidelink information with CAPC=3 is $E_3$. For another example, a quantity of resources of sidelink information with CAPC=4 is $E_4$.

Further, the first terminal apparatus separately determines resources in Mp slots for different CAPC=p. Optionally, $Mp = \sum_{i=1}^{p}(D_i + E_i)$ . For example, for a service with CAPC=1, the first terminal apparatus determines resources in M1=D1+E1 slots. For a service with CAPC=2, the first terminal apparatus determines resources in M2=D1+D2+E1+E2 slots. For a service with CAPC=3, the first terminal apparatus determines resources in M3=D1+D2+D3+E1+E2+E3 slots. For a service with CAPC=4, the first terminal apparatus determines resources in M4=D1+D2+D3+D4+ E1+E2+E3+E4 slots.

Optionally, the first terminal apparatus may send sidelink control information, to indicate the resources in the M consecutive slots or the resources in the Mp consecutive slots selected by the first terminal apparatus. The sidelink control information may be SCI (first-stage SCI or second-stage SCI). The following uses resources indicating M consecutive slots as an example for description. It may be understood that resources indicating Mp consecutive slots are obtained by analogy.

In a possible implementation, the first terminal apparatus may indicate, in the sidelink control information, time-frequency domain locations of the resources in the M consecutive slots, and time-frequency domain locations of the resources for transmitting the sidelink information of the first terminal apparatus in the resources in the M consecutive slots.

In another possible implementation, the first terminal apparatus may indicate, in the sidelink control information, a time-frequency domain location of the resource for transmitting the sidelink information of the first terminal apparatus and a time-frequency domain location of the resource for transmitting the sidelink information of the second terminal apparatus in the resources in the M consecutive slots.

In another possible implementation, the first terminal apparatus may indicate time-frequency domain locations of the resources in the M consecutive slots, a time-frequency domain location of the resource for transmitting the sidelink information of the first terminal apparatus in the resources in the M consecutive slots, and a time-frequency domain location of the resource for transmitting the sidelink information of the second terminal apparatus in the resources in the M consecutive slots.

It should be noted that the method embodiment shown in FIG. 15, the method embodiment shown in FIG. 22, the method embodiment shown in FIG. 28, the method embodiment shown in FIG. 29, and the method embodiment shown in FIG. 30 may be applied independently or in combination.

It should be noted that a time sequence of the steps in the method embodiment shown in FIG. 15, the method embodiment shown in FIG. 22, the method embodiment shown in FIG. 28, the method embodiment shown in FIG. 29, and the method embodiment shown in FIG. 30 is not limited in this application. The steps in the method embodiment shown in FIG. 15, the method embodiment shown in FIG. 22, the method embodiment shown in FIG. 28, the method embodiment shown in FIG. 29, and the method embodiment shown in FIG. 30 may be performed according to a specific time sequence, or may be performed simultaneously. For example, S1001, S1002, S1501, S1502, S1901, S1902, S2001, S2002, S2101, and S2102, may be performed simultaneously, or S1001, S1501, S1901, and S2001 may be performed before S1002, S1502, S1902, and S2002 that are performed before S2101 that is performed before S2102 according to a specific time sequence.

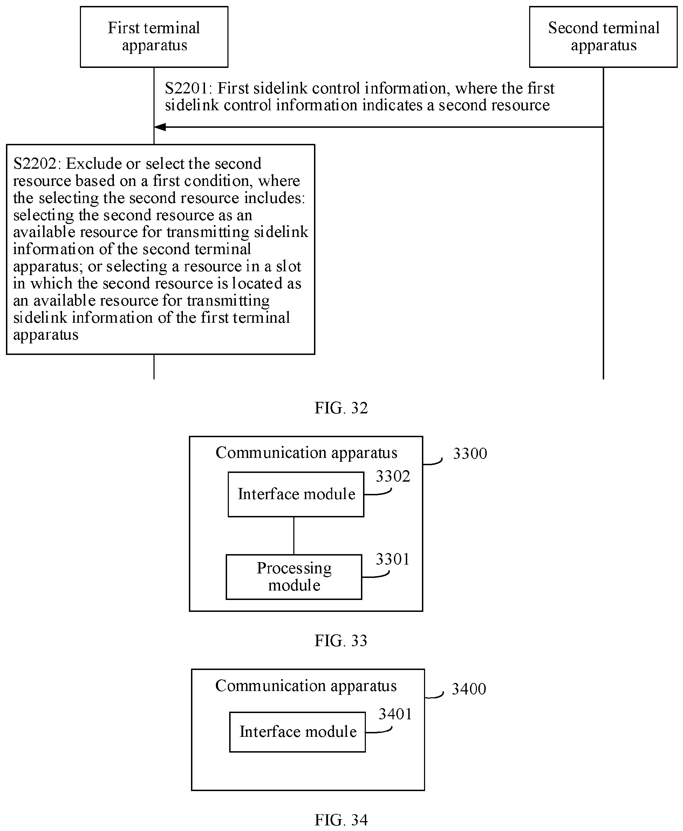

In concusion, as shown in FIG. 32, an embodiment of this application further provides another communication method. The communication method includes S2201 and S2202.

S2201: Receive first sidelink control information from a second terminal apparatus, where the first sidelink control information indicates a second resource.

Step S2101 may be performed by a first terminal apparatus.

S2202: Exclude or select the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus.

Step S2202 may be performed by a first terminal apparatus.

The following describes the method by using an example in which the first terminal apparatus performs the method. However, an entity for performing interaction is not limited in this application. Alternatively, the method may be performed by a chip, a chip system, or a processor that supports the first terminal apparatus in implementing the method, or may be a logical module or software that can implement all or some functions of the first terminal apparatus.

In S2201, the second terminal apparatus may be the second terminal apparatus in the foregoing method embodiment, or the second terminal apparatus may be the third terminal apparatus in the foregoing method embodiment.

For details of S2201, refer to the foregoing description of S1001 or S1501. Details are not described herein again.

In S2202, the first terminal apparatus may select the second resource based on the first condition in the following two manners:

a. That the first terminal apparatus selects the second resource as the available resource for transmitting the sidelink information of the second terminal apparatus may also understood as that the first terminal apparatus determines that the second resource can be used to transmit the sidelink information of the second terminal apparatus.

b. That the first terminal apparatus selects the resource in the slot in which the second resource is located as the available resource for transmitting sidelink information of the first terminal apparatus may also understood as that the first terminal apparatus determines that the resource in the slot in which the second resource is located can be used to transmit the sidelink information of the first terminal apparatus.

It should be noted that the method embodiment shown in FIG. 15, the method embodiment shown in FIG. 22, the method embodiment shown in FIG. 28, the method embodiment shown in FIG. 29, the method embodiment shown in FIG. 30, and the method embodiment shown in FIG. 32 may be independently applied, or may be applied in combination.

It should be noted that a time sequence of steps in the method embodiment shown in FIG. 15, the method embodiment shown in FIG. 22, the method embodiment shown in FIG. 28, the method embodiment shown in FIG. 29, the embodiment shown in FIG. 30, and the method embodiment shown in FIG. 32 is not limited in this application. The method embodiment shown in FIG. 15, the method embodiment shown in FIG. 22, the method embodiment shown in FIG. 28, the method embodiment shown in FIG. 29, the method embodiment shown in FIG. 30, and the steps in the method embodiment shown in FIG. 32 may be performed according to a specific time sequence, or may be performed simultaneously. For example, S1001, S1002, S1501, S1502, S1901, S1902, S2001, S2002, S2101, S2102, S2201, and S2202 may be simultaneously performed, or according to a specific time sequence, S1001, S1501, S1901, S2001, and S2201 are performed before S1002, S1502, S1902, S2002, and S2202 that are performed before S2101 that is performed before S2102.

It may be understood that, in the foregoing embodiments, the methods and/or steps implemented by the terminal apparatus may alternatively be implemented by a component (for example, a chip or a circuit) that can be used in the apparatus. In the foregoing embodiments, the methods and/or steps implemented by the network apparatus may alternatively be implemented by a component (for example, a chip or a circuit) that can be used in the network apparatus.

The foregoing mainly describes the solutions provided in embodiments of this application from the perspective of interaction between devices. Correspondingly, an embodiment of this application further provides a communication apparatus, and the communication apparatus is configured to implement the foregoing various methods. The communication apparatus may be the terminal apparatus in the foregoing method embodiments, an apparatus including the foregoing terminal apparatus, or a component that can be used in the terminal apparatus. Alternatively, the communication apparatus may be the network apparatus in the foregoing method embodiments, an apparatus including the foregoing network apparatus, or a component that can be used in the network apparatus. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the first terminal apparatus in the foregoing method embodiments. FIG. 33 is a diagram of a structure of a communication apparatus 3300. The communication apparatus 3300 includes an interface module 3302 and a processing module 3301. The interface module 3302 may also be referred to as a transceiver module or a transceiver unit. The interface module 3302 is configured to implement a transceiver function. For example, the interface module 3302 may be a transceiver circuit, a transceiver machine, a transceiver, or a communication interface.

In a possible design, the interface module 3302 is configured to receive first sidelink control information from a second terminal apparatus, where the first sidelink control information indicates a second resource. The processing module 3301 is configured to exclude or select the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus.

In this embodiment, the communication apparatus 3300 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions.

In a simple embodiment, a person skilled in the art may figure out that the communication apparatus 3300 may be in a form of the communication apparatus 1000 shown in FIG. 14.

For example, the processor 1001 in the communication apparatus shown in FIG. 14 may invoke the computer-executable instructions stored in the memory 1003, to enable the communication apparatus 3300 to perform the communication method in the foregoing method embodiments. Specifically, functions/implementation processes of the interface module 3302 and the processing module 3301 in FIG. 33 may be implemented by the processor 1001 in the communication apparatus 1000 shown in FIG. 14 by invoking the computer-executable instructions stored in the memory 1003. Alternatively, functions/implementation processes of the processing module 3301 in FIG. 33 may be implemented by the processor 1001 in the communication apparatus shown in FIG. 14 by invoking the computer-executable instructions stored in the memory 1003, and functions/implementation processes of the interface module 3302 in FIG. 33 may be implemented through the communication interface 1004 in the communication apparatus 1000 shown in FIG. 14.

The communication apparatus 3300 provided in this embodiment may perform the foregoing communication method. Therefore, for technical effects that can be achieved by the communication apparatus, refer to the foregoing method embodiment. Details are not described herein again.

FIG. 34 is a diagram of a structure of another communication apparatus 3400. The communication apparatus 3400 includes an interface module 3401.

For example, the communication apparatus is the second terminal apparatus in the foregoing embodiments. The interface module 3401 is configured to send first sidelink control information, where the first sidelink control information indicates a second resource of the second terminal apparatus. The interface module 3401 is further configured to receive first indication information from a first terminal apparatus, where the first indication information indicates that the second terminal apparatus transmits sidelink information on a second resource.

For example, the communication apparatus is the network apparatus in the foregoing embodiments. In a possible design, the interface module 3401 is configured to send second indication information to a first terminal apparatus, where the second indication information includes information used to determine whether a second resource can share a first COT of the first terminal apparatus, and the second resource is a resource indicated by sidelink control information of a second terminal apparatus; or the interface module 3401 is configured to send the second indication information to the second terminal apparatus.

In this embodiment, the communication apparatus 3400 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions.

In a simple embodiment, a person skilled in the art may figure out that the communication apparatus 3400 may be in a form of the communication apparatus 1000 shown in FIG. 14.

For example, the processor 1001 in the communication apparatus shown in FIG. 14 may invoke the computer-executable instructions stored in the memory 403, to enable the communication apparatus 3400 to perform the communication method in the foregoing method embodiments. Specifically, functions/implementation processes of the interface module 3401 in FIG. 34 may be implemented by the processor 1001 in the communication apparatus 1000 shown in FIG. 14 by invoking the computer-executable instructions stored in the memory 1003. Alternatively, functions/implementation processes of the interface module 3401 in FIG. 34 may be implemented by the communication interface 1004 in the communication apparatus 1000 shown in FIG. 14.

The communication apparatus 3400 provided in this embodiment may perform the foregoing communication method. Therefore, for technical effects that can be achieved by the communication apparatus, refer to the foregoing method embodiment. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product.

This application provides a computer program product, including one or more computer instructions. When the one or more computer instructions are run on a communication apparatus, any method in embodiments of this application is performed. When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

**Claims**

1. A communication method, wherein the method comprises:

   receiving, by a first terminal apparatus, first sidelink control information from a second terminal apparatus, wherein the first sidelink control information indicates a second resource; and
   excluding or selecting, by the first terminal apparatus, the second resource based on a first condition, wherein the selecting the second resource comprises: selecting the second resource as an available resource for transmitting sidelink information of the second terminal apparatus; or selecting a resource in a slot in which the second resource is located as an available resource for transmitting sidelink information of the first terminal apparatus.

2. The method according to claim 1, wherein the first terminal apparatus selects the second resource based on the first condition, and the first condition comprises at least one of the following:

a channel access type of the second terminal apparatus is a first type, and the first type is type 1 or type 2;
the second terminal apparatus is a receiving apparatus of the first terminal apparatus;
the first terminal apparatus is a receiving apparatus of the second terminal apparatus;
a channel access priority class CAPC value of the second terminal apparatus is less than a CAPC value of the first terminal apparatus;
a CAPC value of the second terminal apparatus is less than a first CAPC threshold;
a quantity of resource block RB sets corresponding to the second resource is less than or equal to a quantity of first RB sets, wherein the quantity of first RB sets is a quantity of RB sets of a resource selected by the first terminal apparatus;
a frequency domain resource of the second resource belongs to frequency domain resources of resources in M consecutive slots;
a reference signal received power RSRP measurement value of the second resource is less than or equal to a first RSRP threshold;
a reference signal received power RSRP measurement value of the second resource is greater than or equal to a first RSRP threshold;
a service priority value of the second terminal apparatus is less than a service priority value of the first terminal apparatus;
a service priority value of the second terminal apparatus is less than a first service priority threshold;
a cyclic prefix extension CPE length of the second terminal apparatus is greater than or equal to a CPE length of the first terminal apparatus;
a CPE length of the second terminal apparatus is greater than or equal to a first CPE threshold;
a backoff value of the second terminal apparatus is less than or equal to a backoff value of the first terminal apparatus, wherein the backoff value is used for channel access;
a backoff value of the second terminal apparatus is less than or equal to a first backoff threshold, wherein the backoff value is used for channel access;
a value of a contention window of the second terminal apparatus is less than or equal to a value of a contention window of the first terminal apparatus, wherein the contention window is used for channel access;
a value of a contention window of the second terminal apparatus is less than or equal to a first contention window threshold, wherein the contention window is used for channel access; or
no reserved resource of another terminal apparatus exists in an RB set in which the second resource is located.

3. The method according to claim 1, wherein the method further comprises:

receiving, by the first terminal apparatus, second sidelink control information from a third terminal apparatus, wherein the second sidelink control information indicates a third resource; and
selecting, by the first terminal apparatus, a second resource based on a first condition, wherein the first condition comprises at least one of the following:

an RSRP measurement value of the second resource is less than or equal to an RSRP measurement value of the third resource;
an RSRP measurement value of the second resource is greater than or equal to an RSRP measurement value of the third resource;
a service priority value of the second terminal apparatus is less than a service priority value of the third terminal apparatus;
a CAPC value of the second terminal apparatus is less than a CAPC value of the third terminal apparatus;
a CPE length of the second terminal apparatus is greater than or equal to a CPE length of the third terminal apparatus;
a backoff value of the second terminal apparatus is less than or equal to a backoff value of the third terminal apparatus, wherein the backoff value is used for channel access;
a value of a contention window of the second terminal apparatus is less than or equal to a value of a contention window of the third terminal apparatus, wherein the contention window is used for channel access; or
the second resource is a resource in resources in M consecutive slots, and the resources in the M consecutive slots comprise a resource for transmitting the sidelink information of the first terminal apparatus.

4. The method according to any one of claims 1 to 3, wherein the second resource is not a resource in the resources in the M consecutive slots, and the resources in the M consecutive slots comprise a resource for transmitting the sidelink information of the first terminal apparatus; or

the second resource is a resource in the resources in the M consecutive slots, and the resources in the M consecutive slots comprise a resource for transmitting the sidelink information of the first terminal apparatus; or the second resource is a resource in the resources in the M consecutive slots, and the resources in the M consecutive slots comprise a resource for transmitting the sidelink information of the first terminal apparatus and a resource for transmitting the sidelink information of the second terminal apparatus, wherein M is a positive integer.

5. The method according to any one of claims 1 to 4, wherein the selecting, by the first terminal apparatus, the second resource comprises:

sharing, by the first terminal apparatus, the second resource in the resources in the M consecutive slots with the second terminal apparatus;
or
skipping, by the first terminal apparatus, sharing the second resource in the resources in the M consecutive slots with the second terminal apparatus, and transmitting, by the first terminal apparatus, the sidelink information of the first terminal apparatus on a first resource, wherein the first resource overlaps the second resource.

6. The method according to any one of claims 1 to 5, wherein the excluding, by the first terminal apparatus, the second resource comprises:

skipping, by the first terminal apparatus, sharing the second resource with the second terminal apparatus; or
skipping, by the first terminal apparatus, transmitting the sidelink information of the first terminal apparatus on the first resource, wherein the first resource overlaps the second resource.

7. The method according to any one of claims 1 to 6, wherein the excluding the second resource comprises:

excluding the second resource; and/or
excluding a resource in the RB set in which the second resource is located; and/or
excluding a resource whose frequency domain location is the same as a frequency domain location of the second resource and whose time domain location is in first duration before the second resource; and/or
excluding a resource whose frequency domain location is the same as a frequency domain location of the second resource and whose time domain location is in second duration after the second resource; and/or
excluding a resource whose time domain location is in first duration before the second resource in the RB set in which the second resource is located; and/or
excluding a resource whose time domain location is in second duration after the second resource in the RB set in which the second resource is located.

8. The method according to any one of claims 1 to 7, wherein the selecting the second resource comprises:

selecting the second resource; and/or
selecting a resource in the RB set in which the second resource is located; and/or
selecting a resource whose frequency domain location is the same as a frequency domain location of the second resource and whose time domain location is in third duration before the second resource; and/or
selecting a resource whose frequency domain location is the same as a frequency domain location of the second resource and whose time domain location is in fourth duration after the second resource; and/or
selecting a resource whose time domain location is in third duration before the second resource in the RB set in which the second resource is located; and/or
selecting a resource whose time domain location is in fourth duration after the second resource in the RB set in which the second resource is located.

9. The method according to claim 8, wherein the selecting a resource in the RB set in which the second resource is located comprises:

when the first terminal apparatus is not a receiving terminal of the second terminal apparatus, selecting, by the first terminal apparatus, the resource in the RB set in which the second resource is located; and/or
when the first terminal apparatus is not a receiving terminal of the second terminal apparatus, selecting, by the first terminal apparatus, the resource in the slot in which the second resource is located; and

the excluding a resource in the RB set in which the second resource is located comprises:
when the first terminal apparatus is a receiving terminal of the second terminal apparatus, excluding, by the first terminal apparatus, the resource in the RB set in which the second resource is located.

10. The method according to any one of claims 1 to 9, wherein the method further comprises:
sending, by the first terminal apparatus, first indication information to the second terminal apparatus, wherein the first indication information indicates that the second terminal apparatus transmits the sidelink information of the second terminal apparatus on the second resource, and the second resource is a resource in the resources in the M consecutive slots.

11. The method according to any one of claims 1 to 10, wherein the method further comprises:
determining, by the first terminal apparatus, a value of the quantity M of consecutive slots based on a CAPC value of sidelink information, wherein the resources in the M consecutive slots comprise the resource for transmitting the sidelink information of the first terminal apparatus, and M is a positive integer.

12. The method according to any one of claims 1 to 11, wherein the selecting, by the first terminal apparatus, the second resource comprises:

selecting, by the first terminal apparatus, the resources in the M consecutive slots from a union set of a first set and a second set; or
selecting, by the first terminal apparatus, the resources in the M consecutive slots from an intersection set of a first set and a second set, wherein
the first set comprises the available resource for transmitting the sidelink information of the first terminal apparatus, and the second set comprises the available resource for transmitting the sidelink information of the second terminal apparatus.

13. A communication method, wherein the method comprises:

sending, by a second terminal apparatus, first sidelink control information, wherein the first sidelink control information indicates a second resource of the second terminal apparatus; and
receiving first indication information from a first terminal apparatus, wherein the first indication information indicates that the second terminal apparatus transmits sidelink information on a second resource.

14. The method according to claim 13, wherein the method further comprises:
transmitting, by the second terminal apparatus, the sidelink information on the second resource based on a first condition.

15. The method according to claim 13 or 14, wherein the first condition comprises at least one of the following:

a channel access type of the second terminal apparatus is a first type, and the first type is type 1 or type 2;
the second terminal apparatus is a receiving apparatus of the first terminal apparatus;
the first terminal apparatus is a receiving apparatus of the second terminal apparatus;
a channel access priority class CAPC value of the second terminal apparatus is less than a CAPC value of the first terminal apparatus;
a CAPC value of the second terminal apparatus is less than a first CAPC threshold;
a quantity of resource block RB sets corresponding to the second resource is less than or equal to a quantity of first RB sets, wherein the quantity of first RB sets is a quantity of RB sets of a resource selected by the first terminal apparatus;
a frequency domain resource of the second resource belongs to frequency domain resources of resources in M consecutive slots;
a reference signal received power RSRP measurement value of the second resource is less than or equal to a first RSRP threshold;
a reference signal received power RSRP measurement value of the second resource is greater than or equal to a first RSRP threshold;
a service priority value of the second terminal apparatus is less than a service priority value of the first terminal apparatus;
a service priority value of the second terminal apparatus is less than a first service priority threshold;
a cyclic prefix extension CPE length of the second terminal apparatus is greater than or equal to a CPE length of the first terminal apparatus;

a CPE length of the second terminal apparatus is greater than or equal to a first CPE threshold;

a backoff value of the second terminal apparatus is less than or equal to a backoff value of the first terminal apparatus, wherein the backoff value is used for channel access;

a backoff value of the second terminal apparatus is less than or equal to a first backoff threshold, wherein the backoff value is used for channel access;

a value of a contention window of the second terminal apparatus is less than or equal to a value of a contention window of the first terminal apparatus, wherein the contention window is used for channel access;

a value of a contention window of the second terminal apparatus is less than or equal to a first contention window threshold, wherein the contention window is used for channel access; or

no reserved resource of another terminal apparatus exists in an RB set in which the second resource is located.

16. A communication method, wherein the method comprises:

sending, by a network apparatus, second indication information to a first terminal apparatus, wherein the second indication information comprises information used to determine whether a second resource can share a first COT of the first terminal apparatus, and the second resource is a resource indicated by sidelink control information of a second terminal apparatus; or

sending, by the network apparatus, the second indication information to the second terminal apparatus.

17. The method according to claim 16, wherein the second indication information further comprises at least one of the following information: a first priority threshold, a first CAPC threshold, a first backoff threshold, a first contention window threshold, a first RSRP threshold, or a first CPE threshold.

18. A communication method, wherein the method comprises:

receiving, by a first terminal apparatus, first sidelink control information from a second terminal apparatus, wherein the first sidelink control information indicates a second resource; and

selecting, by the first terminal apparatus, a first resource based on a first condition and the second resource, wherein the first resource is an available resource for transmitting sidelink information of the first terminal apparatus; and

the selecting a first resource based on the second resource comprises:

selecting, by the first terminal apparatus as the first resource, a resource whose time domain location is in first duration before the second resource; or

excluding, by the first terminal apparatus, at least one of the following resources, and using a remaining resource as the first resource:

a resource whose time domain location is in first duration before the second resource; or

a resource whose time domain location is in second duration after the second resource.

19. The method according to claim 18, wherein the first condition comprises at least one of the following:

a priority value of the second terminal apparatus is less than a priority value of the first terminal apparatus;

a priority value of the second terminal apparatus is less than a first priority threshold;

the second terminal apparatus is a receiving apparatus of the first terminal apparatus;

the first terminal apparatus is a receiving apparatus of the second terminal apparatus;

a channel access type of the second terminal apparatus is type 1 Type1 or type 2 Type2;

a channel access priority class CAPC value of the second terminal apparatus is less than a CAPC value of the first terminal apparatus;

a CAPC value of the second terminal apparatus is less than a first CAPC threshold;

a quantity of resource block RB sets corresponding to the second resource is less than or equal to a quantity of first RB sets, wherein the quantity of first RB sets is a quantity of RB sets of a resource reserved by the first terminal apparatus;

the second resource belongs to resources in M consecutive slots; or

no reserved resource of another terminal apparatus exists in an RB set in which the second resource is located.

20. The method according to claim 19, wherein the first terminal apparatus is a receiving apparatus of the second terminal apparatus when at least one of the following is met:

X5 least significant bits LSBs in a second layer-2 source ID of the second terminal apparatus are the same as a destination ID indicated in sidelink control information of the first terminal apparatus, wherein X5=8 or X5=16; or X7 LSBs in a second layer-2 destination ID of the second terminal apparatus are the same as a source ID indicated in sidelink control information of the first terminal apparatus, wherein X7=8 or X7=16.

21. The method according to claim 20, wherein

a cast type indicated in the sidelink control information of the first terminal apparatus is unicast; or a cast type indicated in channel occupancy time COT sharing information of the first terminal apparatus is unicast.

22. The method according to claim 19, wherein the first terminal apparatus is a receiving apparatus of the second terminal apparatus when at least one of the following is met:

X7 LSBs in a second layer-2 destination ID of the second terminal apparatus are the same as a destination ID indicated in sidelink control information of the first terminal apparatus, wherein X7=8 or X7=16; or X7 LSBs in a second layer-2 destination ID of the second terminal apparatus are the same as a destination ID indicated in COT sharing information of the first terminal apparatus, wherein X7=8 or X7=16.

23. The method according to claim 22, wherein

a cast type indicated in the sidelink control information of the first terminal apparatus is groupcast or broadcast; or a cast type indicated in COT sharing information of the first terminal apparatus is groupcast or broadcast.

24. The method according to any one of claims 20 to 23, wherein

a cast type indicated in sidelink control information of the second terminal apparatus is unicast; or a cast type indicated in sidelink control information of the second terminal apparatus is groupcast or broadcast.

25. The method according to claim 24, wherein the cast type indicated in the sidelink control information of the second terminal apparatus comprises:
the cast type indicated in the sidelink control information transmitted by the second terminal apparatus on the second resource.

26. The method according to any one of claims 20 to 25, wherein that the first terminal apparatus is a receiving apparatus of the second terminal apparatus comprises:

the first terminal apparatus is a receiving apparatus of sidelink information of the second terminal apparatus; or the first terminal apparatus is a receiving apparatus of sidelink information transmitted by the second terminal apparatus on the second resource.

27. The method according to any one of claims 18 to 26, wherein the first duration comprises one or more slots, and/or the second duration comprises one or more slots.

28. The method according to any one of claims 18 to 27, wherein the method further comprises:
sending, by a physical layer of the first terminal apparatus, a first resource set and a second resource set to a medium access control MAC layer of the first terminal apparatus, wherein the first resource set is a set comprising the first resource, and the second resource set is a set comprising the second resource.

29. The method according to any one of claims 18 to 28, wherein the first resource comprises M slots in time domain, and M is a positive integer.

30. The method according to any one of claims 18 to 29, wherein the first resource comprises X RB sets or Y subchannels in frequency domain, X and Y are positive integers, and a value of X or a value of Y is indicated by the MAC layer of the first terminal apparatus.

31. The method according to any one of claims 18 to 30, wherein the selecting, by the first terminal apparatus as the first resource, a resource whose time domain location is in first duration before the second resource comprises:

selecting, by the first terminal apparatus as the first resource, a resource whose frequency domain location is the same as a frequency domain location of the second resource and whose time domain location is in first duration before the second resource; or

selecting, by the first terminal apparatus as the first resource, a resource whose time domain location is in first duration before the second resource in the RB set in which the second resource is located.

32. The method according to any one of claims 18 to 31, wherein when the first terminal apparatus selects, as the first resource, the resource whose time domain location is in the first duration before the second resource, the method further comprises:

further selecting, by the first terminal apparatus, the second resource as the first resource; or

further selecting, by the first terminal apparatus, a resource in the RB set in which the second resource is located as the first resource; or

further selecting, by the first terminal apparatus, a resource in a time unit in which the second resource is located as the first resource.

33. The method according to any one of claims 18 to 32, wherein when the first terminal apparatus selects, as the first resource, the resource whose time domain location is in the first duration before the second resource, the method further comprises:

sharing, by the first terminal apparatus, the second resource in a first COT with the second terminal apparatus, wherein the first COT is an initial COT of the first terminal apparatus.

34. The method according to claim 33, wherein the method further comprises:

sending, by the first terminal apparatus, sidelink control information, wherein the sidelink control information indicates at least one of the following:

a time-frequency domain location of a resource used to transmit the sidelink information of the first terminal apparatus and a time-frequency domain location of a resource used to transmit the sidelink information of the second terminal apparatus in the first COT;

a time-frequency domain location of the first COT and a time-frequency domain location of a resource used to transmit the sidelink information of the first terminal apparatus in the first COT; or

a time-frequency domain location of the first COT, a time-frequency domain location of a resource used to transmit the sidelink information of the first terminal apparatus in the first COT, and a time-frequency domain location of a resource used to transmit the sidelink information of the second terminal apparatus in resources of the first COT.

35. The method according to claim 33 or 34, wherein the second resource is not a resource in the resources in the M consecutive slots, and the resources in the M consecutive slots comprise the resource for transmitting the sidelink information of the first terminal apparatus, wherein M is a positive integer; or

the second resource is a resource in the first COT, and the first COT comprises the resource for transmitting the sidelink information of the first terminal apparatus; or

the second resource is a resource in the first COT, and the first COT comprises the resource for transmitting the sidelink information of the first terminal apparatus and the resource for transmitting the sidelink information of the second terminal apparatus.

36. The method according to any one of claims 18 to 31, wherein the resource whose time domain location is in the first duration before the second resource comprises:

a resource whose frequency domain location is the same as the frequency domain location of the second resource and whose time domain location is in the first duration before the second resource; or

a resource whose time domain location is in the first duration before the second resource in the RB set in which the second resource is located.

37. The method according to any one of claims 18 to 32, wherein the resource whose time domain location is in the second duration after the second resource comprises:

a resource whose frequency domain location is the same as the frequency domain location of the second resource and whose time domain location is in the second duration after the second resource; or
a resource whose time domain location is in the second duration after the second resource in the RB set in which the second resource is located.

38. A communication method, wherein the method comprises:
sending, by a second terminal apparatus, first sidelink control information, wherein the first sidelink control information indicates a second resource of the second terminal apparatus, the second resource is used by a first terminal apparatus to select a first resource, and the first resource is an available resource for transmitting sidelink information of the first terminal apparatus.

39. A communication apparatus, wherein the communication apparatus comprises an interface module and a processing module, wherein

the interface module is configured to receive first sidelink control information from a second terminal apparatus, wherein the first sidelink control information indicates a second resource; and
the processing module is configured to exclude or select the second resource based on a first condition, wherein the selecting the second resource comprises: selecting the second resource as an available resource for transmitting sidelink information of the second terminal apparatus; or selecting a resource in a slot in which the second resource is located as an available resource for transmitting sidelink information of the first terminal apparatus.

40. A communication apparatus, comprising a module or a unit configured to implement the method according to any one of claims 2 to 12.

41. A communication apparatus, wherein the communication apparatus comprises an interface module, wherein

the interface module is configured to send first sidelink control information, wherein the first sidelink control information indicates a second resource of the communication apparatus; and
the interface module is configured to receive first indication information from a first terminal apparatus, wherein the first indication information indicates that the second terminal apparatus transmits sidelink information on a second resource.

42. A communication apparatus, comprising a module or a unit configured to implement the method according to any one of claims 13 to 15.

43. A communication apparatus, wherein the communication apparatus comprises an interface module, wherein

the interface module is configured to send second indication information to a first terminal apparatus, wherein the second indication information comprises information used to determine whether a second resource can share a first COT of the first terminal apparatus, and the second resource is a resource indicated by sidelink control information of a second terminal apparatus; or
the interface module is configured to send the second indication information to the second terminal apparatus.

44. The communication apparatus according to claim 43, wherein the second indication information further comprises at least one of the following information: a first priority threshold, a first CAPC threshold, a first backoff threshold, a first contention window threshold, a first RSRP threshold, or a first CPE threshold.

45. A communication apparatus, wherein the communication apparatus comprises an interface module and a processing module, wherein

the interface module is configured to receive first sidelink control information from a second terminal apparatus, wherein the first sidelink control information indicates a second resource; and
the processing module is configured to select a first resource based on a first condition and the second resource, wherein the first resource is an available resource for transmitting sidelink information of the communication apparatus; and
that the processing module selects a first resource based on the second resource comprises:

selecting, as the first resource, a resource whose time domain location is in first duration before the second resource; or

excluding the second resource and a resource whose time domain location is in first duration before the second resource, and selecting the first resource from remaining resources; and/or

excluding the second resource and a resource whose time domain location is in second duration after the second resource, and selecting the first resource from remaining resources.

46. A communication apparatus, comprising a module or a unit configured to implement the method according to any one of claims 19 to 38.

47. A communication apparatus, wherein the communication apparatus comprises an interface module, wherein the interface module is configured to send first sidelink control information, wherein the first sidelink control information indicates a second resource of the communication apparatus.

48. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 1 to 12, the method according to any one of claims 13 to 15, or the method according to claim 16 or 17.

49. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 18 to 38.

50. A computer-readable storage medium, wherein the computer-readable storage medium stores a computer program, and when the computer program is executed by a computer, the method according to any one of claims 1 to 12, the method according to any one of claims 13 to 15, or the method according to claim 16 or 17 is performed.

51. A computer-readable storage medium, wherein the computer-readable storage medium stores a computer program, and when the computer program is executed by a computer, the method according to any one of claims 18 to 38 is performed.

52. A computer program product, comprising instructions, wherein when the instructions are run on a computer, the computer is enabled to perform the method according to any one of claims 1 to 12, the method according to any one of claims 13 to 15, or the method according to claim 16 or 17.

53. A computer program product, comprising instructions, wherein when the instructions are run on a computer, the computer is enabled to perform the method according to any one of claims 18 to 38.

54. A communication system, wherein the communication system comprises a first terminal apparatus and a second terminal apparatus, the first terminal apparatus is configured to perform the method according to any one of claims 1 to 12, and the second terminal apparatus is configured to perform the method according to any one of claims 13 to 15.

55. A communication system, wherein the communication system comprises a first terminal apparatus and a second terminal apparatus, the first terminal apparatus is configured to perform the method according to any one of claims 18 to 38, and the second terminal apparatus is configured to perform the method according to claim 38.

FIG. 1

Resource pool

FIG. 2

Resource pool

FIG. 3

FIG. 4

Interlace 0

Interlace 1

Interlace 2

Interlace 3

Interlace 4

FIG. 5

FIG. 6

RB set {
- Interlace RB subchannel 3
- Interlace RB subchannel 2
- Interlace RB subchannel 1
- Interlace RB subchannel 0

RB set {
- Contiguous RB subchannel 0
- Contiguous RB subchannel 0
- Contiguous RB subchannel 0
- Contiguous RB subchannel 0

FIG. 7

RB set {
- Subchannel 3 | UE-1 | UE-1 | UE-1
- Subchannel 2 | UE-1 | UE-1 | UE-1
- Subchannel 1 | UE-2 | UE-1 | UE-1
- Subchannel 0 | | | UE-1

FIG. 8

RB set 1 {
- Subchannel 3
- Subchannel 2
- Subchannel 1
- Subchannel 0

RB set 0 {
- Subchannel 3
- Subchannel 2
- Subchannel 1
- Subchannel 0

Slot m

RB set 1 {
- Subchannel 7
- Subchannel 6
- Subchannel 5
- Subchannel 4

RB set 0 {
- Subchannel 3
- Subchannel 2
- Subchannel 1
- Subchannel 0

Slot m

FIG. 9

FIG. 10

FIG. 11a

FIG. 11b

Initial COT of UE-1

| RB set | Subchannel 3 | UE-1 | UE-1 | UE-1 | UE-1 |
| | Subchannel 2 | UE-1 | UE-1 | UE-1 | UE-1 |
| | Subchannel 1 | UE-1 | UE-1 | | UE-1 |
| | Subchannel 0 | UE-1 | | | UE-1 |
| | | Slot 0 | Slot 1 | Slot 2 | Slot 3 |

One terminal apparatus (first terminal apparatus) performs transmission in
four consecutive slots in a COT

Initial COT of UE-1

| RB set | Subchannel 3 | UE-1 | UE-1 | UE-2 | UE-1 |
| | Subchannel 2 | UE-1 | UE-1 | UE-2 | UE-1 |
| | Subchannel 1 | UE-1 | UE-1 | | UE-1 |
| | Subchannel 0 | UE-1 | | | UE-1 |
| | | Slot 0 | Slot 1 | Slot 2 | Slot 3 |

At least one terminal apparatus (first terminal apparatus and second terminal
apparatus) performs transmission in four consecutive slots in a COT

FIG. 12

FIG. 13

EP 4 590 052 A1

FIG. 14

S1001: First sidelink control information, where the first sidelink control information indicates a second resource

S1002: Select a first resource based on a first condition and the second resource, where the first resource is an available resource for transmitting sidelink information of the first terminal apparatus

FIG. 15

93

Slot m

FIG. 16

Slot m

FIG. 17

|  | First time | | | Second time | |
|---|---|---|---|---|---|
| Subchannel 3 | | | | | |
| Subchannel 2 | | **Transmission of UE 1** | Reserved resource of UE 2 | | |
| Subchannel 1 | | | | | |
| Subchannel 0 | | | | | |

RB set 0

Slot m

FIG. 18

EP 4 590 052 A1

| | First time | | | Second time | |
|---|---|---|---|---|---|
| Subchannel 3 | | | | | |
| Subchannel 2 | | **Transmission of UE 1** | Reserved resource of UE 2 | | |
| Subchannel 1 | | | | | |
| Subchannel 0 | | | | | |
| Subchannel 3 | | | | | |
| Subchannel 2 | | **Transmission of UE 1** | Reserved resource of UE 2 | | |
| Subchannel 1 | | | | | |
| Subchannel 0 | | | | | |

RB set 1

RB set 0

Slot m

FIG. 19

EP 4 590 052 A1

FIG. 20

EP 4 590 052 A1

FIG. 21

First terminal apparatus

Third terminal apparatus

S1501: Second sidelink control information, where the second sidelink control information indicates a third resource

S1502: Select a first resource based on a first condition, where the first resource is an available resource for transmitting sidelink information of the first terminal apparatus

FIG. 22

Reserved resource of UE 3

FIG. 23

FIG. 24

FIG. 25

EP 4 590 052 A1

EP 4 590 052 A1

| | First time | | | Second time | |
|---|---|---|---|---|---|
| Subchannel 3 | | | | | |
| Subchannel 2 | ////// | ////// | Reserved resource of UE 3 | ////// | ////// |
| Subchannel 1 | | | | | |
| Subchannel 0 | | | | | |
| Subchannel 3 | | | | | |
| Subchannel 2 | ////// | ////// | Reserved resource of UE 3 | ////// | ////// |
| Subchannel 1 | | | | | |
| Subchannel 0 | | | | | |

RB set 1

RB set 0

Slot m

FIG. 26

EP 4 590 052 A1

First time

Second time

RB set 1

Subchannel 3

Subchannel 2 — Reserved resource of UE 3

Subchannel 1

Subchannel 0

RB set 0

Subchannel 3

Subchannel 2 — Reserved resource of UE 3

Subchannel 1

Subchannel 0

Slot m

FIG. 27

| First terminal apparatus | | Second terminal apparatus |
|---|---|---|

S1901: First sidelink control information, where the first sidelink control information indicates a second resource

S1902: Share the second resource in an initial COT of the first terminal apparatus with the second terminal apparatus based on a first condition; or skip sharing the second resource with the second terminal apparatus based on a first condition

FIG. 28

| First terminal apparatus | | Second terminal apparatus |
|---|---|---|

S2001: First sidelink control information, where the first sidelink control information indicates a second resource

S2002: First indication information, where the first indication information indicates that the second terminal apparatus transmits sidelink information on the second resource

FIG. 29

First terminal apparatus

S2101: Determine a candidate resource set, where the candidate resource set includes a first resource, or the candidate resource set includes a first resource and a fifth resource, the first resource is an available resource for transmitting sidelink information of the first terminal apparatus, and the fifth resource is a resource that can be shared with a second terminal apparatus

S2102: Select resources in M consecutive slots from the candidate resource set

FIG. 30

| | Slot 0 | 1 | 2 | 3 | 4 | 5 |
|---|---|---|---|---|---|---|
| RB set 4 | $1^{st}$ | | | $1^{st}$ | $1^{st}$ | $1^{st}$ |
| RB set 3 | | | $1^{st}$ | $1^{st}$ | $1^{st}$ | $1^{st}$ |
| RB set 2 | $2^{nd}$ | $1^{st}$ | $1^{st}$ | $1^{st}$ | $2^{nd}$ | $2^{nd}$ |
| RB set 1 | | $1^{st}$ | $2^{nd}$ | | | $1^{st}$ |
| RB set 0 | | | | $1^{st}$ | $1^{st}$ | |

FIG. 31

| First terminal apparatus | | Second terminal apparatus |
| --- | --- | --- |

S2201: First sidelink control information, where the first sidelink control information indicates a second resource

S2202: Exclude or select the second resource based on a first condition, where the selecting the second resource includes: selecting the second resource as an available resource for transmitting sidelink information of the second terminal apparatus; or selecting a resource in a slot in which the second resource is located as an available resource for transmitting sidelink information of the first terminal apparatus

FIG. 32

Communication apparatus _ 3300

Interface module 3302

Processing module 3301

FIG. 33

Communication apparatus _ 3400

Interface module 3401

FIG. 34

## INTERNATIONAL SEARCH REPORT

| International application No. |
| --- |
| **PCT/CN2023/121803** |

**A.    CLASSIFICATION OF SUBJECT MATTER**

H04W 72/20(2023.01)i

According to International Patent Classification (IPC) or to both national classification and IPC

**B.    FIELDS SEARCHED**

Minimum documentation searched (classification system followed by classification symbols)

IPC: H04W,H04Q

Documentation searched other than minimum documentation to the extent that such documents are included in the fields searched

Electronic data base consulted during the international search (name of data base and, where practicable, search terms used)

3GPP, CNTXT, DWPI, ENTXTC: 侧链路, 侧行, 副链路, 共享, 能否, 是否, 网络, 信道占用时间, 指示, COT, sidelink, SL, shar+, select+, cho?se, resource?, network, indicat+

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020191769 A1 (GUANGDONG OPPO MOBILE TELECOMMUNICATIONS CORP., LTD.) 01 October 2020 (2020-10-01)<br>description, page 5, paragraph 3 to page 13, paragraph 1 | 1-15, 18-42, 45-55 |
| X | CN 114424640 A (QUALCOMM INC.) 29 April 2022 (2022-04-29)<br>description, paragraphs [0037]-[0038] and [0096]-[0185] | 1-55 |
| X | CN 111565475 A (SONY CORP.) 21 August 2020 (2020-08-21)<br>description, paragraphs [0073]-[0363] | 1-55 |
| X | WO 2021155517 A1 (GUANGDONG OPPO MOBILE TELECOMMUNICATIONS CORP., LTD.) 12 August 2021 (2021-08-12)<br>description, page 3, line 38 to page 12, line 5 | 1-15, 18-42, 45-55 |
| X | WO 2022061753 A1 (GUANGDONG OPPO MOBILE TELECOMMUNICATIONS CORP., LTD.) 31 March 2022 (2022-03-31)<br>description, page 2, last paragraph to page 10, paragraph 3 | 1-15, 18-42, 45-55 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 November 2023** | **22 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121803**

| Patent document cited in search report | | | Publication date (day/month/year) | Patent family member(s) | | | Publication date (day/month/year) |
|---|---|---|---|---|---|---|---|
| WO | 2020191769 | A1 | 01 October 2020 | CN | 112997551 | A | 18 June 2021 |
| CN | 114424640 | A | 29 April 2022 | EP | 4035468 | A1 | 03 August 2022 |
| | | | | US | 2021092783 | A1 | 25 March 2021 |
| | | | | WO | 2021061880 | A1 | 01 April 2021 |
| | | | | IN | 202227009579 | A | 08 July 2022 |
| CN | 111565475 | A | 21 August 2020 | WO | 2020164439 | A1 | 20 August 2020 |
| | | | | CN | 113396633 | A | 14 September 2021 |
| | | | | EP | 3927102 | A1 | 22 December 2021 |
| | | | | US | 2022078845 | A1 | 10 March 2022 |
| WO | 2021155517 | A1 | 12 August 2021 | EP | 4075891 | A1 | 19 October 2022 |
| | | | | US | 2022361232 | A1 | 10 November 2022 |
| | | | | CN | 114846867 | A | 02 August 2022 |
| WO | 2022061753 | A1 | 31 March 2022 | CN | 115804191 | A | 14 March 2023 |

Form PCT/ISA/210 (patent family annex) (July 2022)

**REFERENCES CITED IN THE DESCRIPTION**

**Patent documents cited in the description**

- CN 202211217173X